# EUROPEAN PATENT SPECIFICATION

(11) **EP 4 551 620 B1**
(45) Date of publication and mention of the grant of the patent: **02.09.2026**
(21) Application number: 23734696.0
(22) Date of filing: 05.07.2023
(51) Int. Cl.: C08F 110/06, C08F 4/656

(54) **CATALYST SYSTEM FOR POLYMERIZATION OF AN OLEFIN**
KATALYSATORSYSTEM ZUR POLYMERISIERUNG EINES OLEFINS
SYSTÈME DE CATALYSEUR POUR LA POLYMÉRISATION D'UNE OLÉFINE

(30) Priority: 05.07.2022 EP 22182943
(43) Date of publication of application: 14.05.2025
(73) Proprietor: SABIC Global Technologies B.V., 4612 PX Bergen op Zoom (NL)
(72) Inventor: MOMAN, Akhlaq, 6160 GA Geleen (NL); ZAKHAROV, Vladimir Aleksandrovich, 6160 GA Geleen (NL); SERGEEV, Sergei Andreevich, 6160 GA Geleen (NL); BARABANOV, Artem A., 6160 GA Geleen (NL)
(74) Representative: Sabic Intellectual Property Group
(86) International application number: PCT/EP2023/068489
(87) International publication number: WO 2024/008770

(56) References cited:
- WO-A1-2015/091983
- RU-C1- 2 674 440

## Description

### BACKGROUND

The invention relates to a process for the preparation of a procatalyst for preparing a catalyst composition for olefin polymerization. Furthermore, the invention is directed to a process of preparing a magnesium-based support. The invention also relates to the procatalyst obtained or obtainable by the process. The invention further relates to a process for the preparation of polyolefins. The invention also relates to a polyolefin and a polypropylene homopolymer.

Catalyst systems and their components that are suitable for preparing a polyolefin are generally known. One type of such catalysts are generally referred to as Ziegler-Natta catalysts. The term "Ziegler-Natta" is known in the art and it typically refers to catalyst systems comprising a transition metal-containing solid catalyst compound (also typically referred to as a procatalyst); an organometallic compound (also typically referred to as a co-catalyst) and optionally one or more electron donor compounds (e.g. external electron donors).

The transition metal-containing solid catalyst compound comprises a transition metal halide (e.g. titanium halide, chromium halide, hafnium halide, zirconium halide, vanadium halide) supported on a metal or metalloid compound (e.g. a magnesium compound or a silica compound). An overview of such catalyst types is for example given by T. Pullukat and R. Hoff in Catal. Rev. - Sci. Eng. 41, vol. 3 and 4, 389-438, 1999.

Other processes to prepare Ziegler-Natta catalyst components suitable for polymerization of olefins are also disclosed in the art. Document WO96/32426A discloses a 3-step process for producing a catalyst for the polymerization of an olefin, wherein in the first two steps a compound Mg(OAIk)ₓCl_{y} of certain morphology is prepared, and subsequently this solid Mg- compound is contacted with titanium tetrachloride, and an electron-donating compound.

EP398698A1 also discloses a process for polymerization of an olefin in the presence of a solid catalyst component, which is obtained by first reacting Mg(OR¹)ₙ(OR²)₂₋ₙ,Ti(OR³)₄, Ti(OAIk)₄ and Si(OR⁴)₄ in solution to form an intermediate product, which is further contacted with TiXₘ(OR₅)₄₋ₘ and an electron donating compound wherein the description of R¹, R², R³, R⁴ and R⁵ is provided in the same patent application. The preparation of such a procatalyst is for example disclosed in WO96/32427A1.

WO2015091983A1 discloses a process for the preparation of a procatalyst suitable for preparing a catalyst composition for olefin polymerization that comprises the steps of providing a magnesium-based support, contacting said magnesium-based support with a Ziegler-Natta type catalytic species, an internal donor, and an activator, to yield a procatalyst, wherein the activator is a benzamide.

RU2674440C1 discloses a method for producing a catalyst for the polymerization of olefins and a process for the polymerization of olefins. Method for producing a catalyst for the polymerization of olefins is carried out by contacting metallic magnesium with an organic halide RX, in which R is an organic group containing from 5 to 20 carbon atoms, X is a halogen atom, to form soluble product (I), followed by adding to product (I) a silicon compound containing an alkoxy group or an aryloxy group, to form solid product (II), and subsequent treatment of product (II) with tetrachloride titanium and an electron donor compound, metallic magnesium is contacted with organic halide RX in the presence of an aromatic hydrocarbon containing from 6 to 10 hydrocarbon atoms.

A disadvantage of the prior art cited above is that for certain applications the activity of the procatalyst is not high enough where a narrow molecular weight distribution is required.

It is thus an object of the present invention to provide a highly stable solution of R⁴_{z}MgX⁴_{2-z} with a better yield in order to obtain a procatalyst which shows better performance in the polymerization of olefins, especially with respect to the polypropylene yield.

One or more of the aforementioned objects of the present invention are achieved by the various aspects of the present invention.

### SUMMARY OF THE INVENTION

The present invention is related to a process for the preparation of a procatalyst for preparing a catalyst composition for olefin polymerization. Furthermore, the invention is related to a process of preparing the magnesium-based support.

It has surprisingly been found by the present inventors that the magnesium-based support as obtained by using the process of the present invention, shows a better yield of the magnesium-based support and correspondingly a better yield of the catalyst is obtained.

In a first aspect, the invention relates to a process for the preparation of a procatalyst for preparing a catalyst composition for an olefin polymerization comprising the following steps:
a. providing a magnesium-based support prepared from a solution of R⁴_{z}MgX⁴_{2-z},
   wherein R⁴ is independently selected from linear, branched or cyclic hydrocarbyl group independently selected from alkyl, alkenyl, aryl, aralkyl, or alkylaryl groups, and one or more combinations thereof; wherein said hydrocarbyl group may be substituted or unsubstituted, may contain one or more heteroatoms and preferably has from 1 to 20 carbon atoms, preferably R⁴ is butyl;
   X⁴ is independently selected from the group comprising of fluoride (F-), chloride (Cl-), bromide (Br-) or iodide (I-), preferably chloride; and z is in a range of larger than 0 and smaller than 2, being 0 < z < 2;
b. optionally activating the magnesium-based support using an activator;
c. contacting the magnesium-based support with a Ziegler-Natta type catalytic species, and one or more internal donors;
   wherein the solution of R⁴_{z}MgX⁴_{2-z} is prepared by a process comprising the steps of:
      (i) reacting a magnesium powder with an organic halide in the presence of an organic solvent at a temperature of T1;
      (ii) stirring the reaction mixture obtained in step (i) for at least 1 hour at T1;
      (iii) raising the temperature of the reaction mixture obtained in step (ii) to a temperature T2;
      (iv) stirring the reaction mixture obtained in step (iii) for at least 1 hour at T2;
      (v) decanting or filtering the reaction mixture obtained in step (iv) to obtain a transparent solution of R⁴_{z}MgX⁴_{2-z} in the organic solvent;
   Wherein T1 ranges from 70°C - 90°C, T2 ranges from T1+20°C to T1+60°C.

In an embodiment of said first aspect, T1 ranges from 70°C - 90°C, preferably from 75°C - 85°C; T2 ranges from T1+20°C to T1+60°C, preferably from T1+30°C to T1+40°C.

In an embodiment of said first aspect, the internal donor is selected from the group comprising of aminobenzoates, succinates, silyl esters, silyl diol esters, diethers, phthalates or any combinations thereof.

In a further embodiment of said first aspect, the organic solvent is selected from a group comprising of diethyl ether, diisopropyl ether, dibutyl ether, diisobutyl ether, diisoamyl ether, diallyl ether, tetrahydrofuran, anisole and dioctyl ether. Preferably, the organic solvent is dibutyl ether.

In a further embodiment of said first aspect, the organic halide is R⁴X⁴, wherein R⁴ is independently selected from linear, branched or cyclic hydrocarbyl group independently selected from alkyl, alkenyl, aryl, aralkyl, or alkylaryl groups, and one or more combinations thereof; wherein said hydrocarbyl group may be substituted or unsubstituted, may contain one or more heteroatoms and preferably has from 1 to 20 carbon atoms, preferably R⁴ is butyl;
X⁴ is independently selected from the group comprising of fluoride (F-), chloride (Cl-), bromide (Br-) or iodide (I-), preferably chloride.

In a further embodiment of said first aspect, preferable organic halide is selected from butyl chloride, butyl bromide and 1,2-dibromoethane or a combination thereof. .

In a further embodiment of said first aspect, the activator is selected from a group comprising of benzamide, alkylbenzoates, monoesters or any combinations thereof. Preferably, the activator is benzamide, alkylbenzoates or a combination thereof.

In an embodiment of said first aspect, the concentration of the transparent solution of R⁴_{z}MgX⁴_{2-z} in the organic solvent obtained is upto 3 mol/l, or from 1 to 2.5 mol/l, or from 1 to 2 mol/l.

In a further embodiment of said first aspect, the process is essentially phthalate free.

In another embodiment of said first aspect, for the preparation of a procatalyst for preparing a catalyst composition for an olefin polymerization comprising the following steps:
A) providing the procatalyst obtained via a process comprising the steps of:
   i) contacting R⁴_{z}MgX⁴_{2-z} with an alkoxy- or aryloxy-containing silane compound to give a first intermediate reaction product, being a solid Mg(OR⁵)ₓX¹₂₋ₓ, wherein: R⁵ is a linear, branched or cyclic hydrocarbyl group independently selected from alkyl, alkenyl, aryl, aralkyl, alkoxycarbonyl or alkylaryl groups, and one or more combinations thereof; wherein the hydrocarbyl group may be substituted or unsubstituted, may contain one or more heteroatoms and preferably has from 1 to 20 carbon atoms; wherein R⁴ is a linear, branched or cyclic hydrocarbyl group independently selected from alkyl, alkenyl, aryl, aralkyl, alkoxycarbonyl or alkylaryl groups, and one or more combinations thereof; wherein the hydrocarbyl group may be substituted or unsubstituted, may contain one or more heteroatoms and preferably has from 1 to 20 carbon atoms, preferably R⁴ is butyl; wherein X² and X¹ are each independently selected from the group comprising of fluoride (F-), chloride (Cl-), bromide (Br-) or iodide (I-), preferably chloride; z is in a range of larger than 0 and smaller than 2, being 0 < z < 2;
   ii) optionally contacting the solid Mg(OR⁵)ₓX¹₂₋ₓ obtained in step i) with at least one activating compound selected from the group formed by activating electron donors and metal alkoxide compounds of formula M¹(OR⁶)_{v-w}(OR⁷)_{w} or M²(OR⁶)_{v-w}(R⁷)_{w}, to obtain a second intermediate product; wherein: M¹ is a metal selected from the group comprising of Ti, Zr, Hf, Al or Si; v is the valency of M¹; M² is a metal being Si; v is the valency of M²; R⁶ and R⁷ are each a linear, branched or cyclic hydrocarbyl group independently selected from alkyl, alkenyl, aryl, aralkyl, alkoxycarbonyl or alkylaryl groups, and one or more combinations thereof; wherein the hydrocarbyl group may be substituted or unsubstituted, may contain one or more heteroatoms, and preferably has from 1 to 20 carbon atoms; wherein w is smaller than v, preferably v being 3 or 4;
   iii) contacting the first or the second intermediate reaction product, obtained respectively in step i) or ii), with a halogen-containing Ti-compound and the internal donor.

In a further embodiment of said aspect, contacting the first or second intermediate reaction product, obtained respectively in step i) or ii), with a halogen-containing Ti-compound comprises the steps of contacting the intermediate reaction product with a halogen-containing Ti-compound to produce a first intermediate as a first step and a second step of contacting the intermediate reaction product with a halogen-containing Ti-compound to produce a second intermediate reaction product and a third step of contacting the intermediate reaction product with a halogen-containing Ti-compound to produce the procatalyst and preferably wherein the activator according to formula (I) is added in the first and/or second step, more preferably wherein the activator according to formula (I) is added in the first step.

In another embodiment of said first aspect, the concentration of magnesium and R⁴X⁴ with respect to the organic solvent is from 1 to 4 mol/l, preferable from 1 to 3.5 mol/l, more preferable from 1 to 3 mol/l.

In a further embodiment of said first aspect, the concentration of magnesium and R⁴X⁴, with respect to the organic solvent is from 1 to 5 mol/l, preferable from 1 to 4 mol/l, preferable from 1 to 3.5 mol/l, more preferable from 1 to 3 mol/l.

In another embodiment of the first aspect, the internal donor is selected from the group, comprising of aminobenzoates represented by formula (I): 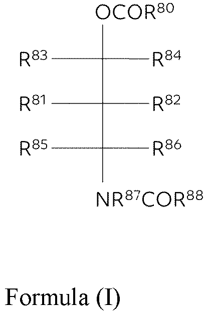 wherein:
R⁸⁰ is independently selected from a substituted or unsubstituted aryl, aralkyl, or alkylaryl groups, and one or more combinations thereof and
R⁸¹, R⁸², R⁸³, R⁸⁴, R⁸⁵, and R⁸⁶ are each independently selected from a hydrogen or a linear, branched or cyclic hydrocarbyl group, selected from alkyl, alkenyl, aryl, aralkyl, or alkylaryl groups, and one or more combinations thereof, preferably having from 1 to 20 carbon atoms;
wherein R⁸⁷ is selected from a group comprising of hydrogen, methyl, ethyl, propyl, isopropyl, butyl, tert-butyl, phenyl, benzyl, substituted benzyl and halophenyl group; and
wherein R⁸⁸ is selected from the group comprising of hydrogen or a linear, branched or cyclic hydrocarbyl group, selected from alkyl, alkenyl, aryl, aralkyl, alkoxycarbonyl or alkylaryl groups,
and one or more combinations thereof, preferably having from 1 to 20 carbon atoms, and more preferably R⁸⁸ is phenyl.
or wherein the internal donor is selected from the group comprising of diethers according to Formula (II), 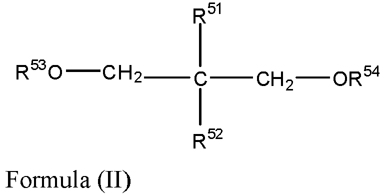
wherein R⁵¹ and R⁵² are each independently selected from a hydrogen or a hydrocarbyl group selected from alkyl, alkenyl, aryl, aralkyl, alkoxycarbonyl or alkylaryl groups, and one or more combinations thereof.
R⁵³ and R⁵⁴ are each independently selected from hydrogen, a halide or a hydrocarbyl group, selected from alkyl, alkenyl, aryl, aralkyl, alkoxycarbonyl or alkylaryl groups, and one or more combinations thereof.
or wherein, the internal donor is selected from the group comprising of succinates according to Formula (III) 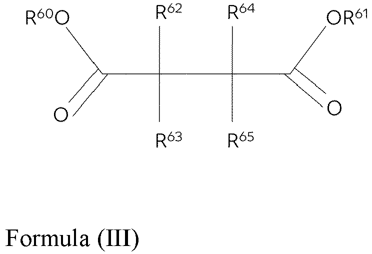
R⁶⁰ and R⁶¹ are each independently a hydrocarbyl group, selected from alkyl, alkenyl, aryl, aralkyl, alkoxycarbonyl or alkylaryl groups, and one or more combinations thereof. Said hydrocarbyl group may be linear, branched or cyclic. Said hydrocarbyl group may be substituted or unsubstituted. Said hydrocarbyl group may contain one or more heteroatoms. Preferably, said hydrocarbyl group has from 1 to 10 carbon atoms, more preferably from 1 to 8 carbon atoms, even more preferably from 1 to 6 carbon atoms.
R⁶², R⁶³, R⁶⁴, and R⁶⁵ are each independently selected from hydrogen or a hydrocarbyl group, selected from alkyl, alkenyl, aryl, aralkyl, alkoxycarbonyl or alkylaryl groups, and one or more combinations thereof. Said hydrocarbyl group may be linear, branched or cyclic. Said hydrocarbyl group may be substituted or unsubstituted. Said hydrocarbyl group may contain one or more heteroatoms. Preferably, said hydrocarbyl group has from 1 to 20 carbon atoms.
or wherein the internal donor is selected from the group comprising of phthalates according to Formula (IV) 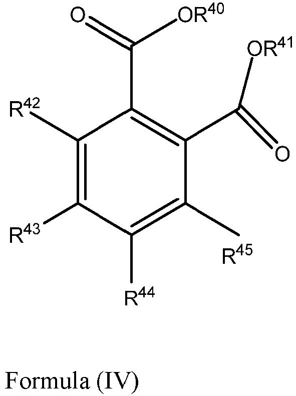
R⁴⁰ and R⁴¹ are each independently a hydrocarbyl group selected from alkyl, alkenyl, aryl, aralkyl, alkoxycarbonyl or alkylaryl groups, and one or more combinations thereof. Said hydrocarbyl group may be linear, branched or cyclic. Said hydrocarbyl group may be substituted or unsubstituted. Said hydrocarbyl group may contain one or more heteroatoms. Preferably, said hydrocarbyl group has from 1 to 10 carbon atoms, more preferably from 1 to 8 carbon atoms, even more preferably from 1 to 6 carbon atoms. Suitable examples of hydrocarbyl groups include alkyl, cycloalkyl, alkenyl, alkadienyl, cycloalkenyl, cycloalkadienyl, aryl, aralkyl, alkylaryl, and alkynyl groups.
R⁴², R⁴³, R⁴⁴, R⁴⁵ are each independently selected from hydrogen, a halide or a hydrocarbyl group, selected from alkyl, alkenyl, aryl, aralkyl, alkoxycarbonyl or alkylaryl groups, and one or more combinations thereof. Said hydrocarbyl group may be linear, branched or cyclic. Said hydrocarbyl group may be substituted or unsubstituted. Said hydrocarbyl group may contain one or more heteroatoms. Preferably, said hydrocarbyl group has from 1 to 10 carbon atoms, more preferably from 1 to 8 carbon atoms, even more preferably from 1 to 6 carbon atoms.

Suitable non-limiting examples of phthalic acid esters include dimethyl phthalate, diethyl phthalate, di-n-propyl phthalate, diisopropyl phthalate, di-n-butyl phthalate, diisobutyl phthalate, di-tert-butyl phthalate, diisoamyl phthalate, di-tert-amyl phthalate, dineopentyl phthalate, di-2-ethylhexyl phthalate, di-2-ethyldecyl phthalate, bis(2,2,2-trifluoroethyl) phthalate, diisobutyl 4-t-butylphthalate, and diisobutyl 4-chlorophthalate. The phthalic acid ester is preferably di-n-butyl phthalate or diisobutyl phthalate.
or wherein the internal donor is selected from the group comprising of one of more compounds of Formula (I), Formula (II), Formula (III), Formula (IV) or a combination thereof.

In a further embodiment of said first aspect, the preferable internal donor is an aminobenzoate as represented by the Formula (I) or a diether as represented by the Formula (II) or a combination thereof.

In a second aspect, the present invention relates to a procatalyst obtained or obtainable by the process as described herein.

In yet another aspect, the present invention relates to a process for the preparation of polyolefins, preferably polypropylene and copolymers of propylene and alpha-olefin, comprising the contacting of a catalyst composition comprising the procatalyst as described herein with an olefin, optionally and alpha-olefin, and optionally an external donor and/or optionally a co-catalyst and/or an activity limiting agent. Wherein the alpha olefin is preferably ethylene, 1-butene and/or 1-hexene.

In another aspect, the present invention relates to a polyolefin, preferably a polypropylene and copolymers of propylene and alpha-olefin, obtained or obtainable by the process as described herein. Wherein the alpha olefin is preferably ethylene, 1-butene and/or 1-hexene.

In yet another aspect, the invention relates to a shaped article, comprising the polyolefin as described herein.

These aspects and embodiments will be described in more detail below.

The procatalyst according to the present invention has the advantage that it exhibits excellent yield when used in a catalyst system. In addition, the polyolefins obtained using the catalyst according to the present invention show a broad or intermediate MWD.

The following definitions are used in the present description and claims to define the stated subject matter. Other terms not cited below are meant to have the generally accepted meaning in the field. "Ziegler-Natta catalyst" as used in the present description means: a transition metal-containing solid catalyst compound comprises a transition metal halide selected from titanium halide, chromium halide, hafnium halide, zirconium halide, and vanadium halide, supported on a metal or metalloid compound (e.g. a magnesium compound or a silica compound).
"Ziegler-Natta type catalytic species" or "catalytic species" as used in the present description means: a transition metal-containing species comprises a transition metal halide selected from titanium halide, chromium halide, hafnium halide, zirconium halide and vanadium halide,
"internal donor " or "internal electron donor" or "ID" as used in the present description means: an electron-donating compound containing one or more atoms of oxygen (O) and/or nitrogen (N). This ID is used as a reactant in the preparation of a solid procatalyst. An internal donor is commonly described in prior art for the preparation of a solid-supported Ziegler-Natta catalyst system for olefins polymerization; i.e. by contacting a magnesium-containing support with a halogen-containing Ti compound and an internal donor.
"external donor" or "external electron donor" or "ED" as used in the present description means: an electron-donating compound used as a reactant in the polymerisation of olefins. An ED is a compound added independent of the procatalyst. It is not added during procatalyst formation. It contains at least one functional group that is capable of donating at least one pair of electrons to a metal atom. The ED may influence catalyst properties, non-limiting examples thereof are affecting the stereoselectivity of the catalyst system in polymerization of olefins having 3 or more carbon atoms, hydrogen sensitivity, ethylene sensitivity, randomness of co-monomer incorporation and catalyst productivity.
"activator" as used in the present description means: an electron-donating compound containing one or more atoms of oxygen (O) and/or nitrogen (N) which is used to during the synthesis of the procatalyst prior to or simultaneous with the addition of an internal donor.
"activating compound" as used in the present description means: a compound used to activate the solid support prior to contacting it with the catalytic species.
"activity limiting agent" (ALA) as used in the present description means: a material that reduces catalyst activity at elevated temperature i.e. reduces the thermal runaway of the catalysts.
"modifier" or "Group 13- or transition metal modifier" as used in the present description means: a metal modifier comprising a metal selected from the metals of Group 13 of the IUPAC Periodic Table of elements and transition metals. Where in the description the terms metal modifier or metal-based modifier is used, Group 13- or transition metal modifier is meant.
"procatalyst" and "catalyst component" as used in the present description have the same meaning: a component of a catalyst composition generally comprising a solid support, a transition metal-containing catalytic species and one or more internal donor.
"Dosing stage" is a stage in the process where the components of the reaction mixture for that particular stage are added or charged-in at a particular time and temperature.
"Holding Stage" is a stage in the process where the reaction mixture is kept and stirred for a particular amount of time at a particular temperature.
"halide" or "halide ion" or "halogen" or "halogen atom" as used in the present description means: an ion selected from the group of: fluoride (F-), chloride (Cl-), bromide (Br-) or iodide (I-).
"Heteroatom" as used in the present description means: an atom other than carbon or hydrogen. However, as used herein - unless specified otherwise, such as below, - when "one or more hetereoatoms" is used one or more of the following is meant: F, Cl, Br, I, N, O, P, B, S or Si. Thus a heteroatom also includes halides.
"heteroatom selected from group 13, 14, 15, 16 or 17 of the IUPAC Periodic Table of the Elements" as used in the present description means: a hetero atom selected from B, Al, Ga, In, Tl [Group 13], Si, Ge, Sn, Pb [Group 14], N, P, As, Sb, Bi [Group 15], O, S, Se, Te, Po [Group 16], F, Cl, Br, I, At [Group 17]. More preferably," heteroatom selected from group 13, 14, 15, 16 or 17 of the IUPAC Periodic Table of the Elements" includes N, O, P, B, S, or Si.
"hydrocarbyl" as used in the present description means: is a substituent containing hydrogen and carbon atoms, or linear, branched or cyclic saturated or unsaturated aliphatic radical, such as alkyl, alkenyl, alkadienyl and alkynyl; alicyclic radical, such as cycloalkyl, cycloalkadienyl cycloalkenyl; aromatic radical, such as monocyclic or polycyclic aromatic radical, as well as combinations thereof, such as alkaryl and aralkyl.
"substituted hydrocarbyl" as used in the present description means: is a hydrocarbyl group that is substituted with one or more non-hydrocarbyl substituent groups. A non-limiting example of a non-hydrocarbyl substituent is a heteroatom. Examples are alkoxycarbonyl (viz. carboxylate) groups. When in the present description "hydrocarbyl" is used it can also be "substituted hydrocarbyl", unless stated otherwise.
"alkyl" as used in the present description means: an alkyl group being a functional group or side-chain consisting of carbon and hydrogen atoms having only single bonds. An alkyl group may be straight or branched and may be un-substituted or substituted. It may or may not contain heteroatoms, such as oxygen (O), nitrogen (N), phosphorus (P), silicon (Si) or sulphur (S).
"aryl" as used in the present description means: an aryl group being a functional group or side-chain derived from an aromatic ring. An aryl group and may be un-substituted or substituted with straight or branched hydrocarbyl groups. It may or may not contain heteroatoms, such as oxygen (O), nitrogen (N), phosphorus (P), silicon (Si) or sulphur (S). An aryl group also encloses alkaryl groups wherein one or more hydrogen atoms on the aromatic ring have been replaced by alkyl groups.
"aralkyl" as used in the present description means: an arylalkyl group being an alkyl group wherein one or more hydrogen atoms have been replaced by aryl groups
"alkoxide" or "alkoxy" as used in the present description means: a functional group or side-chain obtained from a alkyl alcohol. It consist of an alkyl bonded to a negatively charged oxygen atom.
"aryloxide" or "aryloxy" or "phenoxide" as used in the present description means: a functional group or side-chain obtained from an aryl alcohol. It consist of an aryl bonded to a negatively charged oxygen atom.
"Grignard reagent" or "Grignard compound" as used in the present description means: a compound or a mixture of compounds of formula R⁴_{z}MgX⁴_{2-z} (R⁴, z, and X⁴ are as defined below) or it may be a complex having more Mg clusters, e.g. R⁴Mg₃Cl₂.
"polymer" as used in the present description means: a chemical compound comprising repeating structural units, wherein the structural units are monomers.
"olefin" as used in the present description means: an alkene.
"olefin-based polymer" or "polyolefin" as used in the present description means: a polymer of one or more alkenes.
"propylene-based polymer" as used in the present description means: a polymer of propylene and optionally a comonomer.
"polypropylene" (PP) as used in the present description means: a polymer of propylene.
"copolymer" as used in the present description means: a polymer prepared from two or more different monomers.
"monomer" as used in the present description means: a chemical compound that can undergo polymerization.
"thermoplastic" as used in the present description means: capable of softening or fusing when heated and of hardening again when cooled.
"Polymer composition" as used in the present description means: a mixture of either two or more polymers or of one or more polymers and one or more additives.
"polymerization conditions" as used in the present description means: temperature and pressure parameters within a polymerization reactor suitable for promoting polymerization between the procatalyst and an olefin to form the desired polymer. These conditions depend on the type of polymerization used.
"production rate" or "yield" as used in the present description means: the amount of kilograms of polymer produced per gram of procatalyst consumed in the polymerization reactor per hour, unless stated otherwise.
"APP wt.%" or "weight percentage of atactic polypropylene" as used in the present description means: the fraction of polypropylene obtained in a slurry polymerization that is retained in the solvent. APP can be determined by taking 100 ml of the filtrate ("y" in millilitres) obtained during separation from polypropylene powder after slurry polymerization ("x" in grammes). The solvent is dried over a steam bath and then under vacuum at 60 °C. That yields APP ("z" in grammes). The total amount of APP ("q" in grammes) is (y/100)*z. The weight percentage of APP is (q/q+x))*100%.
"MFR" or "Melt Flow rate" as used in the present description is measured at a temperature of 230 °C with 2.16 kg load and measured according to ISO 1133:2005.
"bulk density" as used in the present description means: the mass of particles of the polymer divided by the total volume these particles occupy. It is measured according to ASTM D 1895.
"span value" in the context of the present invention represents an indicator for the width of the particle size distribution as measured according to ISO 13320:2009.

Unless stated otherwise, when it is stated that any R group is "independently selected from" this means that when several of the same R groups are present in a molecule they may have the same meaning of they may not have the same meaning. For example, for the compound RM, wherein R is independently selected from ethyl or methyl, both R groups may be ethyl, both R groups may be methyl or one R group may be ethyl and the other R group may be methyl.

### DETAILED DESCRIPTION OF EMBODIMENTS

The present invention is described below in more detail. All embodiments described with respect to one aspect of the present invention are also applicable to the other aspects of the invention, unless otherwise stated.

As stated above, the magnesium based support shows a better yield when the solution of R⁴_{z}MgX⁴_{2-z} as prepared according to the present invention is used in the catalyst system.

The solution of R⁴_{z}MgX⁴_{2-z} according to the present invention is obtained by a process comprising the steps of:
(i) reacting a magnesium powder with an organic halide in the presence of an organic solvent at a temperature of T1;
(ii) stirring the reaction mixture obtained in step (i) for at least 1 hour at T1;
(iii) raising the temperature of the reaction mixture obtained in step (ii) to a temperature T2;
(iv) stirring the reaction mixture obtained in step (iii) for at least 1 hour at T2;
(v) decanting or filtering the reaction mixture obtained in step (iv) to obtain a transparent solution of R⁴_{z}MgX⁴_{2-z} in the organic solvent;
Wherein T1 ranges from 70°C - 90°C, T2 ranges from T1+20°C to T1+60°C.

In an embodiment of said first aspect, T1 ranges from 70°C - 90°C, preferably from 75°C - 85°C; T2 ranges from T1+20°C to T1+60°C, preferably from T1+30°C to T1+40°C.

In another embodiment of said first aspect, stirring of the reaction mixture obtained in step (i) is performed for 1 to 5 hours, preferably for 3 to 4 hours, preferably for 2 hours, more preferably for 1 hour and the stirring of the reaction mixture obtained in step (iii) is performed for 1 to 5 hours, preferably for 3 to 4 hours, preferably for 2 hours, more preferably for 1 hour.

In another embodiment, the solution of R⁴_{z}MgX⁴_{2-z} is prepared by a process comprising the steps of:
(i) reacting a magnesium powder with an organic solvent and an organic halide at a temperature of T1 for obtaining a reaction mixture;
(ii) raising the temperature of the reaction mixture obtained in step (i) to a temperature T1' and adding the organic solvent and the organic halide in the reaction mixture;
(iii) stirring the reaction mixture obtained in step (ii) for atleast 1 hour at T1';
(iv) raising the temperature of the reaction mixture obtained in step (iii) to a temperature T2;
(v) stirring the reaction mixture obtained in step (iv) for at least 1 hour at T2;
(vi) decanting the reaction mixture obtained in step (v) to obtain a transparent solution of R⁴_{z}MgX⁴_{2-z} in the organic solvent;
Wherein T1 ranges from 70°C - 80°C, T1' ranges from T1+5°C to T1+15°C and T2 ranges from T1+20°C to T1+60°C.

The stirring of the reaction mixture obtained in step (ii) is performed for 1 to 5 hours, preferably for 3 to 4 hours, preferably for 2 hours, more preferably for 1 hour and the stirring of the reaction mixture obtained in step (iv) is performed for 1 to 5 hours, preferably for 3 to 4 hours, preferably for 2 hours, more preferably for 1 hour.

The organic solvent is selected from a group comprising of diethyl ether, diisopropyl ether, dibutyl ether, diisobutyl ether, diisoamyl ether, diallyl ether, tetrahydrofuran, anisole and dioctyl ether or a combination thereof, preferably the organic solvent is dibutyl ether.

The organic halide is represented by R⁴X⁴, wherein R⁴ is independently selected from linear, branched or cyclic hydrocarbyl group independently selected from alkyl, alkenyl, aryl, aralkyl, or alkylaryl groups, and one or more combinations thereof; wherein said hydrocarbyl group may be substituted or unsubstituted, may contain one or more heteroatoms and preferably has from 1 to 20 carbon atoms, preferably R⁴ is butyl;
X⁴ is independently selected from the group comprising of fluoride (F-), chloride (Cl-), bromide (Br-) or iodide (I-), preferably chloride; and z is in a range of larger than 0 and smaller than 2, being 0 < z < 2.

Preferable organic halide is selected from butyl chloride, butyl bromide and 1,2-dibromoethane or a combination thereof..

The present invention furthermore includes an internal donor in the procatalyst.

Not bounded by any particular theory, it is believed that the internal electron donor assists in regulating the formation of active sites thereby enhancing catalyst stereoselectivity.

It is preferred to use so-called phthalate free internal donors because of increasingly stricter government regulations about the maximum phthalate content of polymers. This leads to an increased demand in phthalate free procatalysts.

The internal donors used in the present invention are selected from the group comprising of aminobenzoates, succinates, silyl esters, silyl diol esters, diethers and phthalates or any combinations thereof.

It has surprisingly been found by the present inventors that the combination of the magnesium based support obtained according to the present invention and a diether based internal donor or an aminobenzoate based internal donor or a combination thereof shows a better yield combined.

Internal donors as represented by Formula (I) or Formula (II) or a combination thereof are the suitable internal donors according to the present invention: 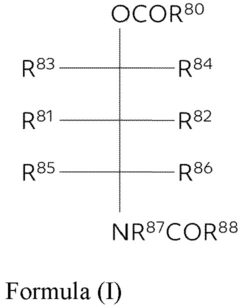 wherein:
R⁸⁰ is independently selected from a substituted or unsubstituted aromatic group or R⁸¹, R⁸², R⁸³, R⁸⁴, R⁸⁵, and R⁸⁶ are each independently selected from a hydrogen or a linear, branched or cyclic hydrocarbyl group, selected from alkyl, alkenyl, aryl, aralkyl, or alkylaryl groups, and one or more combinations thereof, preferably having from 1 to 20 carbon atoms;
wherein R⁸¹ and R⁸² are each a hydrogen atom and R⁸³, R⁸⁴, R⁸⁵ and R⁸⁶ are independently selected from a group comprising of C1-C10 straight and branched alkyl; C3-C10 cycloalkyl; C6-C10 aryl; and C7-C10 alkaryl and aralkyl group, preferably from C1-C10 straight and branched alkyl and more preferably from methyl, ethyl, propyl, isopropyl, butyl, tert-butyl, phenyl group;
wherein when one of R⁸³ and R⁸⁴ and one of R⁸⁵ and R⁸⁶ has at least one carbon atom, then the other one of R⁸³ and R⁸⁴ and of R⁸⁵ and R⁸⁶ is each a hydrogen atom;
wherein R⁸⁷ is selected from a group comprising of hydrogen, methyl, ethyl, propyl, isopropyl, butyl, tert-butyl, phenyl, benzyl, substituted benzyl and halophenyl group; and
wherein R⁸⁸ is selected from the group comprising of hydrogen or a linear, branched or cyclic hydrocarbyl group, selected from alkyl, alkenyl, aryl, aralkyl, alkoxycarbonyl or alkylaryl groups, and one or more combinations thereof, preferably having from 1 to 20 carbon atoms, and more preferably R⁸⁸ is phenyl, preferably, wherein the internal electron donor is selected from the group comprising of 4-[benzoyl(methyl)amino]pentan-2-yl benzoate; 2,2,6,6-tetramethyl-5-(methylamino)heptan-3-ol dibenzoate; 4-[benzoyl (ethyl)amino]pentan-2-yl benzoate, 4-(methylamino)pentan-2-yl bis (4-methoxy)benzoate), 3-[benzoyl(cyclohexyl)amino]-1-phenylbutyl benzoate, 3-[benzoyl(propan-2-yl)amino]-1-phenylbutyl, 4-[benzoyl(methyl)amino]-1,1,1-trifluoropentan-2-yl, 3-(methylamino)-1,3-diphenylpropan-1-ol dibenzoate, 3-(methyl)amino-propan-1-ol dibenzoate; 3-(methyl)amino-2,2-dimethylpropan-1-ol dibenzoate, and 4-(methylamino)pentan-2-yl bis (4-methoxy)benzoate).
   or

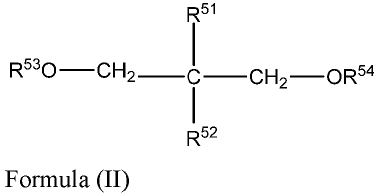

Wherein R⁵¹ and R⁵² as represented in Formula (VI) are each independently selected from a hydrogen or a hydrocarbyl group selected from alkyl, alkenyl, aryl, aralkyl, alkoxycarbonyl or alkylaryl groups, and one or more combinations thereof. Said hydrocarbyl group may be linear, branched or cyclic. Said hydrocarbyl group may be substituted or unsubstituted. Said hydrocarbyl group may contain one or more heteroatoms. Preferably, said hydrocarbyl group has from 1 to 10 carbon atoms, more preferably from 1 to 8 carbon atoms, even more preferably from 1 to 6 carbon atoms. Suitable examples of hydrocarbyl groups include alkyl-, cycloalkyl-, alkenyl-, alkadienyl-, cycloalkenyl-, cycloalkadienyl-, aryl-, aralkyl, alkylaryl, and alkynyl- groups.

R⁵³ and R⁵⁴ as represented in Formula (II) are each independently selected from hydrogen, a halide or a hydrocarbyl group, selected from alkyl, alkenyl, aryl, aralkyl, alkoxycarbonyl or alkylaryl groups, and one or more combinations thereof. Said hydrocarbyl group may be linear, branched or cyclic. Said hydrocarbyl group may be substituted or unsubstituted. Said hydrocarbyl group may contain one or more heteroatoms. Preferably, said hydrocarbyl group has from 1 to 10 carbon atoms, more preferably from 1 to 8 carbon atoms, even more preferably from 1 to 6 carbon atoms.

Suitable examples of dialkyl diether compounds include 1,3-dimethoxypropane, 1,3-diethoxypropane, 1,3-dibutoxypropane, 1-methoxy-3-ethoxypropane, 1-methoxy-3-butoxypropane, 1-methoxy-3-cyclohexoxypropane, 2,2-dimethyl-1,3-dimethoxypropane, 2,2-diethyl-1,3-dimethoxypropane, 2,2-di-n-butyl-1,3-dimethoxypropane, 2,2-diiso-butyl-1,3-dimethoxypropane, 2-ethyl-2-n-butyl-1,3-dimethoxypropane, 2-n-propyl-2-cyclopentyl-1,3-dimethoxypropane, 2,2-dimethyl-1,3-diethoxypropane, 2-n-propyl-2-cyclohexyl-1,3-diethoxypropane, 2-(2-ethylhexyl)-1,3-dimethoxypropane, 2-isopropyl-1,3-dimethoxypropane, 2-n-butyl-1,3-dimethoxypropane, 2-sec-butyl-1,3-dimethoxypropane, 2-cyclohexyl-1,3-dimethoxypropane, 2-phenyl-1,3-diethoxypropane, 2-cumyl-1,3-diethoxypropane, 2-(2-phenyllethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2-(1-naphthyl)-1,3-dimethoxypropane, 2-(fluorophenyl)-1,3-dimethoxypropane, 2-(1-decahydronaphthyl)-1,3-dimethoxypropane, 2-(p-t-butylphenyl)-1,3-dimethoxypropane, 2,2-dicyclohexyl-1,3-dimethoxypropane, 2,2-di-npropyl-1,3-dimethoxypropane, 2-methyl-2-n-propyl-1,3-dimethoxypropane, 2-methyl-2-benzyl-1,3-dimethoxypropane, 2-methyl-2-ethyl-1,3-dimethoxypropane, 2-methyl-2-phenyl-1,3-dimethoxypropane, 2-methyl-2-cyclohexyl-1,3-dimethoxypropane, 2,2-bis(pchlorophenyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl )-1,3-dimethoxy propane, 2-methyl-2-isopropyl-1,3-dimethoxypropane, 2,2-diphenyl-1,3-dimethoxypropane, 2,2-dibenzyl-1,3-dimethoxypropane, 2,2-bis(cyclohexylmethyl)-1,3-dimethoxypropane, 2,2-diisobutyl-1,3-diethoxypropane, 2,2-diisobutyl-1,3-di-n-butoxypropane, 2-isobutyl-2-isopropyl-1,3-dimethoxypropane, 2,2-di-sec-butyl-1,3-dimethoxypropane, 2,2-di-t-butyl-1,3-dimethoxypropane, 2,2-dineopentyl-1,3-dimethoxypropane, 2-isopropyl-2-isopentyl-1,3-dimethoxypropane, 2-phenyl-2-benzyl-1,3-dimethoxypropane, 2-cyclohexyl-2-cyclohexylmethyl-1,3-dimethoxypropane, 2-isopropyl-2-(3,7-dimethyloctyl)1,3-dimethoxypropane, 2,2-diisopropyl-1,3-dimethoxypropane, 2-isopropyl-2-cyclohexylmethyl-1,3 - dimethoxypropane, 2,2-diisopentyl-1,3 -dimethoxypropane, 2-isopropyl-2-cyclohexyl-1,3-dimethoxypropane, 2-isopropyl-2-cyclopentyl-1,3-dimethoxypropane, 2,2-dicylopentyl-1,3-dimethoxypropane, 2-n-heptyl-2-n-pentyl-1,3-dimethoxypropane, 9,9-bis(methoxymethyl)fluorene (flu), 1,3-dicyclohexyl-2,2-bis(methoxymethyl)propane, 3,3-bis(methoxymethyl)-2,5-dimethylhexane, or any combination of the foregoing. In an embodiment, the internal electron donor is 1,3-dicyclohexyl-2,2-bis(methoxymethyl)propane, 3,3-bis(methoxymethyl)-2,5-dimethylhexane, 2,2-dicyclopentyl-1,3-dimethoxypropane and combinations thereof.

Examples of preferred diethers are diethyl ether, dibutyl ether, diisoamyl ether, anisole and ethylphenyl ether, 2,3-dimethoxypropane, 2,3-dimethoxypropane, 2-ethyl-2-butyl-1, 3-dimethoxypropane, 2-isopropyl-2-isopentyl-1,3-dimethoxypropane and 9,9-bis (methoxymethyl)fluorene (flu) of formula (V):

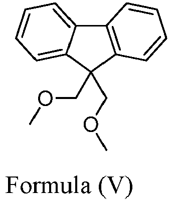

**In** a more preferred embodiment, the internal donor is 9,9-bis(methoxymethyl)fluorene and 2-isopropyl-2-isopentyl-1,3-dimethoxypropane or a combination thereof.

The present invention is related to Ziegler-Natta type catalyst. A Ziegler-Natta type procatalyst generally comprising a solid support, a transition metal-containing catalytic species and one or more internal donors and one or more activators. The present invention moreover relates to a catalyst system comprising a Ziegler-Natta type procatalyst, a co-catalyst and optionally an external electron donor. The term "Ziegler-Natta" is known in the art.

The transition metal-containing solid catalyst compound comprises a transition metal halide (e.g. titanium halide, chromium halide, hafnium halide, zirconium halide, vanadium halide) supported on a metal or metalloid compound (e.g. a magnesium compound or a silica compound).

Specific examples of several types of Ziegler-Natta catalyst as disclosed below.

Preferably, the present invention is related to a so-called TiNo catalyst. It is a magnesium-based supported titanium halide catalyst optionally comprising one or more internal donors.

EP 1 273 595 of Borealis Technology discloses a process for producing an olefin polymerisation procatalyst in the form of particles having a predetermined size range, said process comprising: preparing a solution a complex of a Gp IIa metal and an electron donor by reacting a compound of said metal with said electron donor or a precursor thereof in an organic liquid reaction medium; reacting said complex, in solution, with at least one compound of a transition metal to produce an emulsion the dispersed phase of which contains more than 50 mol% of the Gp IIa metal in said complex; maintaining the particles of said dispersed phase within the average size range 10 to 200 mu m by agitation in the presence of an emulsion stabilizer and solidifying said particles; and recovering, washing and drying said particles to obtain said procatalyst.

EP 0 019 330 of Shell discloses a Ziegler-Natta type catalyst composition. Said olefin polymerization catalyst composition comprising: a) a reaction product of an organo aluminium compound and an electron donor, and b) a solid component which has been obtained by halogenating a magnesium compound with the formula MgR¹R² wherein R¹ is an alkyl, aryl, alkoxide or aryloxide group and R² is an alkyl, aryl, alkoxide or aryloxide group or halogen, with a halide of tetravalent titanium in the presence of a halohydrocarbon, and contacting the halogenated product with a tetravalent titinanium compound.

The Examples of US 5,093,415 of Dow discloses an improved process to prepare a catalyst. Said process includes a reaction between titanium tetrachloride, diisobutyl phthalate, and magnesium diethoxide to obtain a solid material. This solid material is then slurried in a solvent and phthaloyl chloride is added. The reaction mixture is heated to obtain a solid material which is reslurried in a solvent with titanium tetrachloride. Again, this was heated and a solid was collected. The solid was reslurried once again in a solution of titanium tetrachloride to obtain a catalyst.

Example 2 of US 6,825,146 of Dow discloses another improved process to prepare a catalyst. Said process includes a reaction between titanium tetrachloride in solution with a precursor composition - prepared by reacting magnesium diethoxide, titanium tetraethoxide, and titanium tetrachloride, in a mixture of orthocresol, ethanol and chlorobenzene - and ethylbenzoate as electron donor. The mixture was heated and a solid was recovered. To the solid titanium tetrachloride, a solvent and benzoylchloride were added. The mixture was heated to obtain a solid product. The last step was repeated. The resulting solid procatalyst was worked up to provide a catalyst.

US 4,771,024 discloses the preparation of a catalyst on column 10, line 61 to column 11, line 9. The section "catalyst manufacture on silica" is incorporated into the present application by reference. The process comprises combining dried silica with carbonated magnesium solution (magnesium diethoxide in ethanol was bubbled with CO₂). The solvent was evaporated at 85 °C. The resulting solid was washed and a 50:50 mixture of titanium tetrachloride and chlorobenzene was added to the solvent together with ethylbenzoate. The mixture was heated to 100 °C and liquid filtered. Again TiCl₄ and chlorobenzene were added, followed by heating and filtration. A final addtion of TiCl₄ and chlorobenzene and benzoylchloride was caried out, followed by heating and filtration. After washing the catalyst was obtained.

WO03/068828 discloses a process for preparing a catalyst component on page 91 "preparation of solid catalyst components" which section is incorporated into the present application by reference. Magnesium chloride, toluene, epoxy chloropropane and tributyl phosphate were added under nitrogen to a reactor, followed by heating. Then phthalic anhydride was added. The solution was cooled to -25 °C and TiCl₄ was added dropwise, followed by heating. An internal donor was added (1,3-diphenyl-1,3-propylene glycol dibenzoate, 2-methyl-1,3-diphenyl-1,3-propylene glycol dibenzoate, 1,3-diphenyl-1,3-propylene-glycol diproprionate, or 1,3-diphenyl-2-methyl-1,3-propylene glycol diproprionate) and after stirring a solid was obtained and washed. The solid was treated with TiCl₄ in toluene twice,followed by washing to obtain said catalyst component.

US 4,866,022 discloses a catalyst component comprises a product formed by: A. forming a solution of a magnesium-containing species from a magnesium carbonate or a magnesium carboxylate; B. precipitating solid particles from such magnesium-containing solution by treatment with a transition metal halide and an organosilane having a formula: RₙSiR'₄₋ₙ, wherein n= 0 to 4 and wherein R is hydrogen or an alkyl, a haloalkyl or aryl radical containing one to about ten carbon atoms or a halosilyl radical or haloalkylsilyl radical containing one to about eight carbon atoms, and R, or a halogen: C. reprecipitating such solid particles from a mixture containing a cyclic ether; and D. treating the reprecipitated particles with a transition metal compound and an electron donor. This process for preparing a catalyst is incorporated into the present application by reference.

The procatalyst may be produced by any method known in the art.

The procatalyst may also be produced as disclosed in WO96/32426A; this document discloses a process for the polymerization of propylene using a catalyst comprising a catalyst component obtained by a process wherein a compound with formula Mg(OAlk)ₓCl_{y} wherein x is larger than 0 and smaller than 2, y equals 2-x and each Alk, independently, represents an alkyl group, is contacted with a titanium tetraalkoxide and/or an alcohol in the presence of an inert dispersant to give an intermediate reaction product and wherein the intermediate reaction product is contacted with titanium tetrachloride in the presence of an internal donor, which is di-n-butyl phthalate.

Preferably, the Ziegler-Natta type procatalyst in the catalyst system according to the present invention is obtained by the process as described in WO2007/134851A1. In Example I the process is disclosed in more detail. Example I including all sub-examples (IA-IE) is incorporated into the present description. More details about the different embodiments are disclosed starting on page 3, line 29 to page 14 line 29. These embodiments are incorporated by reference into the present description.

In the following part of the description, different steps and phases of the process for preparing the procatalyst according to the present invention will be discussed.

The process for preparing a procatalyst according to the present invention comprises the following steps:
- Step A): Preparation of the solution of butylmagnesiumchloride (BuMgCl);
- Step B) preparing a solid support for the procatalyst;
- Step C): optionally activating said solid support obtained in Step B) using one or more activating compounds to obtain an activated solid support;
- Step D): contacting said solid support obtained in Step B) or said activated solid support in Step C) with a catalytic species wherein Step D) comprises one of the following:
   * contacting said solid support obtained in Step B) or said activated solid support in Step C) with a catalytic species and one or more internal donors to obtain said procatalyst; or
   * contacting said solid support obtained in Step B) or said activated solid support in Step C) with a catalytic species and one or more internal donors to obtain an intermediate product; or
   * contacting said solid support obtained in Step B) or said activated solid support in Step C) with a catalytic species and an activator to obtain an intermediate product;
- optionally Step D1): modifying said intermediate product obtained in Step D) wherein Step D1) comprises on of the following:
   * modifying said intermediate product obtained in Step D) with a Group 13- or transition metal modifier in case an internal donor was used during Step D), in order to obtain a procatalyst;
   * modifying said intermediate product obtained in Step D) with a Group 13- or transition metal modifier and one or more internal donors in case an activator was used during Step D), in order to obtain a procatalyst.

The procatalyst thus prepared can be used in polymerization of olefins using an external donor and a co-catalyst.

The various steps used to prepare the catalyst according to the present invention (and the prior art) are described in more detail below.

### Step A): Preparation of a solution of a Grignard reagent:

A Grignard reagent, R⁴zMgX⁴_{2-z} used in Step B) may be prepared by contacting metallic magnesium with an organic halide R⁴X⁴, as described in WO 96/32427 A1 and WO01/23441 A1. All forms of metallic magnesium may be used, but preferably use is made of finely divided metallic magnesium, for example magnesium powder. To obtain a fast reaction it is preferable to heat the magnesium under nitrogen prior to use.

Wherein R⁴ is a hydrocarbyl group independently selected from alkyl, alkenyl, aryl, aralkyl, alkylaryl, or alkoxycarbonyl groups, wherein said hydrocarbyl group may be linear, branched or cyclic, and may be substituted or unsubstituted; said hydrocarbyl group preferably having from 1 to 20 carbon atoms or combinations thereof. The R⁴ group may contain one or more heteroatoms.

X⁴ is selected from the group comprising of fluoride (F-), chloride (Cl-), bromide (Br-) or iodide (I-). The value for z is in a range of larger than 0 and smaller than 2: 0 < z < 2
Combinations of two or more organic halides R⁴X⁴ can also be used.

The magnesium and the organic halide R⁴X⁴ can be reacted with each other without the use of a separate dispersant; the organic halide R⁴X⁴ is then used in excess.

The organic halide R⁴X⁴ and the magnesium can also be brought into contact with one another and an inert dispersant. Examples of these dispersants are: aliphatic, alicyclic or aromatic dispersants containing from 4 up to 20 carbon atoms.

Preferably, in this step of preparing R⁴_{z}MgX⁴_{2-z}, also an ether is added to the reaction mixture. Examples of ethers are: diethyl ether, diisopropyl ether, dibutyl ether, diisobutyl ether, diisoamyl ether, diallyl ether, tetrahydrofuran and anisole. Dibutyl ether and/or diisoamyl ether are preferably used. Preferably, an excess of chlorobenzene is used as the organic halide R⁴X⁴. Thus, the chlorobenzene serves as dispersant as well as organic halide R⁴X⁴.

Small amounts of iodine and/or alkyl halides can be added to cause the reaction between the metallic magnesium and the organic halide R⁴X⁴ to proceed at a higher rate. Examples of alkyl halides are butyl chloride, butyl bromide and 1,2-dibromoethane. When the organic halide R⁴X⁴ is an alkyl halide, iodine and 1,2-dibromoethane are preferably used.

The reaction temperature for step A) of preparing R⁴_{z}MgX⁴_{2-z} normally is from 50 °C to 150 °C; the reaction time is normally from 0.5 to 20 hours during the dosing stage. The temperature of the reaction mixture is further increased by 10 °C to 60 °C from the temperature of the dosing stage reaction mixture. The reaction mixture is kept for at least 1 hour during the holding stage. The stirring and heating is further stopped and the dissolved reaction product may be separated from the solid residual products. The reaction may be mixed. The stirring speed can be determined by a person skilled in the art and should be sufficient to agitate the reactants.

### Step B): Preparing a solid support for the catalyst:

In the process of the present invention preferably a magnesium-containing support is used. Said magnesium-containing support is known in the art as a typical component of a Ziegler-Natta procatalyst. This step of preparing a solid support for the catalyst is the same as in the prior art process. The following description explains the process of preparing magnesium-based support. Other supports may also be used.

Synthesis of magnesium-containing supports, such as magnesium halides, magnesium alkyls and magnesium aryls, and also magnesium alkoxy and magnesium aryloxy compounds for polyolefin production, particularly of polypropylenes production are described for instance in US4978648, WO96/32427A1, WO01/23441 A1, EP1283 222A1, EP1222 214B1; US5077357; US5556820; US4414132; US5106806 and US5077357 but the present process is not limited to the disclosure in these documents.

Preferably, the process for preparing the solid support for the procatalyst according to the present invention comprises the following steps:
Step i): contacting a compound R⁴_{z}MgX⁴_{2-z} - wherein R₄, X⁴, and z are as discussed above - with an alkoxy- or aryloxy-containing silane compound to give a first intermediate reaction product. Said first intermediate reaction product is a solid magnesium-containing support.

In step i) a first intermediate reaction product is thus prepared by contacting the following reactants: * a Grignard reagent - being a compound or a mixture of compounds of formula R⁴_{z}MgX⁴_{2-z} and * an alkoxy- or aryloxy- containing silane compound. Examples of these reactants are disclosed for example in WO 96/32427 A1 and WO01/23441 A1.

The compound R ⁴_{z}MgX⁴_{2-z} used as starting product is also referred to as a Grignard compound. In R⁴_{z}MgX⁴_{2-z}, X⁴ is preferably chlorine or bromine, more preferably chlorine.

R⁴ can be an alkyl, aryl, aralkyl, alkoxide, phenoxide, etc., or mixtures thereof. Suitable examples of group R⁴ are methyl, ethyl, n-propyl, i-propyl, n-butyl, i-butyl, t-butyl, hexyl, cyclohexyl, octyl, phenyl, tolyl, xylyl, mesityl, benzyl, phenyl, naphthyl, thienyl, indolyl. In a preferred embodiment of the invention, R⁴ represents an aromatic group, for instance a phenyl group.

In the Grignard compound of formula R⁴_{z}MgX⁴_{2-z} z is preferably from about 0.5 to 1.5.

The compound R⁴_{z}MgX⁴_{2-z} may be prepared in an Step A which is discussed above), preceding step i) or may be obtained from a different process.

It is explicitly noted that it is possible that the Grignard compound used in step i) may alternatively have a different structure, for example, may be a complex. Such complexes are already known to the skilled person in the art; a particular example of such complexes is Phenyl₄Mg₃Cl₂.

The alkoxy- or aryloxy-containing silane used in step i) is preferably a compound or a mixture of compounds with the general formula Si (OR⁵)₄₋ₙ R⁶ₙ,
Wherein it should be noted that the R⁵ group is the same as the R¹ group. The R¹ group originates from the R⁵ group during the synthesis of the first intermediate reaction product.

R⁵ is a hydrocarbyl group independently selected from alkyl, alkenyl, aryl, aralkyl, alkoxycarbonyl or alkylaryl groups, and one or more combinations thereof. Said hydrocarbyl group may be linear, branched or cyclic. Said hydrocarbyl group may be substituted or unsubstituted. Said hydrocarbyl group may contain one or more heteroatoms. Preferably, said hydrocarbyl group has from 1 to 20 carbon atoms, more preferably from 1 to 12 carbon atoms, even more preferably from 1 to 6 carbon atoms. Preferably, said hydrocarbyl group is an alkyl group, preferably having from 1 to 20 carbon atoms, more preferably from 1 to 12 carbon atoms, even more preferably from 1 to 6 carbon atoms, such as for example methyl, ethyl, n-propyl, isopropyl, n-butyl, sec-butyl, iso-butyl, tert-butyl, pentyl or hexyl; most preferably, selected from ethyl and methyl.

R⁶ is a hydrocarbyl group independently selected from alkyl, alkenyl, aryl, aralkyl, alkoxycarbonyl or alkylaryl groups, and one or more combinations thereof. Said hydrocarbyl group may be linear, branched or cyclic. Said hydrocarbyl group may be substituted or unsubstituted. Said hydrocarbyl group may contain one or more heteroatoms. Preferably, said hydrocarbyl group has from 1 to 20 carbon atoms, more preferably from 1 to 12 carbon atoms, even more preferably from 1 to 6 carbon atoms. Preferably, said hydrocarbyl group is an alkyl group, preferably having from 1 to 20 carbon atoms, more preferably from 1 to 12 carbon atoms, even more preferably from 1 to 6 carbon atoms, such as for example methyl, ethyl, n-propyl, isopropyl, n-butyl, sec-butyl, iso-butyl, tert-butyl, or cyclopentyl.

The value for n is in the range of 0 up to 4, preferably n is from 0 up to and including 1.

Examples of suitable silane-compounds include tetramethoxysilane, tetraethoxysilane, methyltrimethoxysilane, methyltributoxysilane, phenyltriethoxy-silane, diethyldiphenoxysilane, n-propyltriethoxysilane, diisopropyldi-methoxysilane, diisobutyldimethoxysilane, n-propyltrimethoxysilane, cyclohexyl-methyldimethoxysilane, dicyclopentyldimethoxy-silane, isobutylisopropyldimethoxyl-silane, phenyl-trimethoxysilane, diphenyl-dimethoxysilane, trifluoropropylmethyl-dimethoxysilane, bis(perhydroisoquinolino)-dimethoxysilane, dicyclohexyldimethoxy-silane, dinorbornyl-dimethoxysilane, di(n-propyl)dimethoxysilane, di(iso- propyl)-dimethoxysilane, di(n-butyl)dimethoxysilane and/or di(iso-butyl)dimethoxysilane.

Preferably, tetraethoxy-silane is used as silane-compound in preparing the solid Mg-containing compound during step i) in the process according to the present invention.

Preferably, in step i) the silane-compound and the Grignard compound are introduced simultaneously to a mixing device to result in particles of the first intermediate reaction product having advantageous morphology. This is for example described in WO 01/23441A1. Here, 'morphology' does not only refer to the shape of the particles of the solid Mg-compound and the catalyst made therefrom, but also to the particle size distribution (also characterized as span), its fines content, powder flowability, and the bulk density of the catalyst particles. Moreover, it is well known that a polyolefin powder produced in polymerization process using a catalyst system based on such procatalyst has a similar morphology as the procatalyst (the so-called "replica effect"; see for instance S. van der Ven, Polypropylene and other Polyolefins, Elsevier 1990, p. 8-10). Accordingly, almost round polymer particles are obtained with a length/diameter ratio (I/D) smaller than 2 and with good powder flowability.

As discussed above, the reactants are preferably introduced simultaneously. With "introduced simultaneously" is meant that the introduction of the Grignard compound and the silane-compound is done in such way that the molar ratio Mg/Si does not substantially vary during the introduction of these compounds to the mixing device, as described in WO 01/23441 A1.

The silane-compound and Grignard compound can be continuously or batch-wise introduced to the mixing device. Preferably, both compounds are introduced continuously to a mixing device.

The mixing device can have various forms; it can be a mixing device in which the silane-compound is premixed with the Grignard compound, the mixing device can also be a stirred reactor, in which the reaction between the compounds takes place. The separate components may be dosed to the mixing device by means of peristaltic pumps.

Preferably, the compounds are premixed before the mixture is introduced to the reactor for step i). In this way, a procatalyst is formed with a morphology that leads to polymer particles with the best morphology (high bulk density, narrow particle size distribution, (virtually) no fines, excellent flowability).

The Si/Mg molar ratio during step i) may range from 0.2 to 20. Preferably, the Si/Mg molar ratio is from 0.4 to 1.0.

The period of premixing of the reactants in above indicated reaction step may vary between wide limits, for instance 0.1 to 300 seconds. Preferably premixing is performed during 1 to 50 seconds.

The temperature during the premixing step of the reactants is not specifically critical, and may for instance range from 0 to 80 °C; preferably the temperature is from 10 °C to 50 °C.

The reaction between said reactants may, for instance, take place at a temperature from -20 °C to 100 °C; for example at a temperature of from 0 °C to 80 °C. The reaction time is for example from 1 to 5 hours.

The mixing speed during the reaction depends on the type of reactor used and the scale of the reactor used. The mixing speed can be determined by a person skilled in the art. As a non-limiting example, mixing may be carried out at a mixing speed of from 250 to 300 rpm. In an embodiment, when a blade stirrer is used the mixing speed is from 220 to 280 rpm and when a propeller stirrer is used the mixing speed is from 270 to 330 rpm. The stirrer speed may be increased during the reaction. For example, during the dosing, the speed of stirring may be increased every hour by 20-30 rpm.

Preferably, BuMgCl is the Grignard agent used in step i).

The first intermediate reaction product obtained from the reaction between the silane compound and the Grignard compound is usually purified by decanting or filtration followed by rinsing with an inert solvent, for instance a hydrocarbon solvent with for example 1-20 carbon atoms, like pentane, iso-pentane, hexane or heptane. The solid product can be stored and further used as a suspension in said inert solvent. Alternatively, the product may be dried, preferably partly dried, and preferably under mild conditions; e.g. at ambient temperature and pressure.

The first intermediate reaction product obtained by this step i) may comprise a compound of the formula Mg(OR⁵)ₓX¹₂₋ₓ, wherein:
R¹ is a hydrocarbyl group independently selected from alkyl, alkenyl, aryl, aralkyl, alkoxycarbonyl or alkylaryl groups, and one or more combinations thereof. Said hydrocarbyl group may be linear, branched or cyclic. Said hydrocarbyl group may be substituted or unsubstituted. Said hydrocarbyl group may contain one or more heteroatoms. Preferably, said hydrocarbyl group has from 1 to 20 carbon atoms, more preferably from 1 to 12 carbon atoms, even more preferably from 1 to 6 carbon atoms. Preferably, said hydrocarbyl group is an alkyl group, preferably having from 1 to 20 carbon atoms, more preferably from 1 to 12 carbon atoms, even more preferably from 1 to 6 carbon atoms. Most preferably the hydrocarbyl group is selected from ethyl and methyl.

X¹ is selected from the group comprising of fluoride (F-), chloride (Cl-), bromide (Br-) or iodide (I-). Preferably, X¹ is chloride or bromine and more preferably, X¹ is chloride.

The value for x is in the range of larger than 0 and smaller than 2: 0 < z < 2. The value for x is preferably from 0.5 to 1.5.

### Step C: Activation of the solid support:

The process for activating said solid support comprises the following step ii). This step may comprise one or more stages.

### Step ii) activation of the solid magnesium compound

Step ii): contacting the solid Mg(OR⁵)ₓX¹₂₋ₓ with at least one activating compound selected from the group formed by activating electron donors and metal alkoxide compounds of formula M¹(OR⁶)_{v-w}(OR⁷)_{w} or M²(OR⁶)_{v-w}(R⁷)_{w}, wherein:
R⁶ is a hydrocarbyl group independently selected from alkyl, alkenyl, aryl, aralkyl, alkoxycarbonyl or alkylaryl groups, and one or more combinations thereof. Said hydrocarbyl group may be linear, branched or cyclic. Said hydrocarbyl group may be substituted or unsubstituted. Said hydrocarbyl group may contain one or more heteroatoms. Preferably, said hydrocarbyl group has from 1 to 20 carbon atoms, more preferably from 1 to 12 carbon atoms, even more preferably from 1 to 6 carbon atoms. Preferably, said hydrocarbyl group is an alkyl group, preferably having from 1 to 20 carbon atoms, more preferably from 1 to 12 carbon atoms, even more preferably from 1 to 6 carbon atoms, such as for example methyl, ethyl, n-propyl, isopropyl, n-butyl, sec-butyl, iso-butyl, tert-butyl, pentyl or hexyl; most preferably selected from ethyl and methyl.
R⁷ is a hydrocarbyl group independently selected from alkyl, alkenyl, aryl, aralkyl, alkoxycarbonyl or alkylaryl groups, and one or more combinations thereof. Said hydrocarbyl group may be linear, branched or cyclic. Said hydrocarbyl group may be substituted or unsubstituted. Said hydrocarbyl group may contain one or more heteroatoms. Preferably, said hydrocarbyl group has from 1 to 20 carbon atoms, more preferably from 1 to 2 carbon atoms, even more preferably from 1 to 6 carbon atoms. Preferably, said hydrocarbyl group is an alkyl group, preferably having from 1 to 20 carbon atoms, more preferably from 1 to 12 carbon atoms, even more preferably from 1 to 6 carbon atoms; most preferably selected from methyl, ethyl, n-propyl, isopropyl, n-butyl, sec-butyl, iso-butyl, tert-butyl, and cyclopentyl.
M¹ is a metal selected from the group consisting of Ti, Zr, Hf, Al or Si; v is the valency of M¹; M² is a metal being Si; v is the valency of M² and w is smaller than v.

The electron donors and the compounds of formula M(OR⁶)_{v-w}(OR⁷)_{w} and M(OR⁶)_{v-w}(R⁷)_{w} may be also referred herein as activating compounds.

In this step either one or both types of activating compounds (viz. activating electron donor or metal alkoxides) may be used.

The advantage of the use of this activation step prior to contacting the solid support with the halogen-containing titanium compound (process step C) is that a higher yield of polyolefins is obtained per gram of the procatalyst. Moreover, the ethylene sensitivity of the catalyst system in the copolymerisation of propylene and ethylene is also increased because of this activation step. This activation step is disclosed in detail in WO2007/134851 of the present applicant.

Examples of suitable activating electron donors that may be used in step ii) are known to the skilled person and described herein below, i.e. include carboxylic acids, carboxylic acid anhydrides, carboxylic acid esters, carboxylic acid halides, alcohols, ethers, ketones, amines, amides, nitriles, aldehydes, alkoxides, sulphonamides, thioethers, thioesters and other organic compounds containing one or more hetero atoms, such as nitrogen, oxygen, sulphur and/or phosphorus.

Preferably, an alcohol is used as the activating electron donor in step ii). More preferably, the alcohol is a linear or branched aliphatic or aromatic alcohol having 1-12 carbon atoms. Even more preferably, the alcohol is selected from methanol, ethanol, butanol, isobutanol, hexanol, xylenol and benzyl alcohol. Most preferably, the alcohol is ethanol or methanol, preferably ethanol.

Suitable carboxylic acids as activating electron donor may be aliphatic or (partly) aromatic. Examples include formic acid, acetic acid, propionic acid, butyric acid, isobutanoic acid, acrylic acid, methacrylic acid, maleic acid, fumaric acid, tartaric acid, cyclohexanoic monocarboxylic acid, cis-1,2-cyclohexanoic dicarboxylic acid, phenylcarboxylic acid, toluenecarboxylic acid, naphthalene carboxylic acid, phthalic acid, isophthalic acid, terephthalic acid and/or trimellitic acid.

Anhydrides of the aforementioned carboxylic acids can be mentioned as examples of carboxylic acid anhydrides, such as for example acetic acid anhydride, butyric acid anhydride and methacrylic acid anhydride.

Suitable examples of esters of above-mentioned carboxylic acids are formates, for instance, butyl formate; acetates, for instance ethyl acetate and butyl acetate; acrylates, for instance ethyl acrylate, methyl methacrylate and isobutyl methacrylate; benzoates, for instance methylbenzoate and ethylbenzoate; methyl-p-toluate; ethyl-naphthate and phthalates, for instance monomethyl phthalate, dibutyl phthalate, diisobutyl phthalate, diallyl phthalate and/or diphenyl phthalate.

Examples of suitable carboxylic acid halides as activating electron donors are the halides of the carboxylic acids mentioned above, for instance acetyl chloride, acetyl bromide, propionyl chloride, butanoyl chloride, butanoyl iodide, benzoyl bromide, p-toluyl chloride and/or phthaloyl dichloride.

Suitable alcohols are linear or branched aliphatic alcohols with 1-12 C-atoms, or aromatic alcohols. Examples include methanol, ethanol, butanol, isobutanol, hexanol, xylenol and benzyl alcohol. The alcohols may be used alone or in combination. Preferably, the alcohol is ethanol or hexanol.

Examples of suitable ethers are diethyl ether, dibutyl ether, diisoamyl ether, anisole and ethylphenyl ether, 2,2-diisobutyl-1,3-dimethoxypropane, 2,2-dicyclopentyl-1,3-dimethoxypropane, 2-ethyl-2-butyl-1,3-dimethoxypropane, 2-isopropyl-2-isopentyl-1,3-dimethoxypropane and/or 9,9-bis(methoxymethyl)fluorene (flu). Also, cyclic ethers like tetrahydrofuran (THF), or tri-ethers can be used.

Suitable examples of other organic compounds containing a heteroatom as activating electron donor include 2,2,6,6-tetramethyl piperidine, 2,6-dimethylpiperidine, pyridine, 2-methylpyridine, 4-methylpyridine, imidazole, benzonitrile, aniline, diethylamine, dibutylamine, dimethylacetamide, thiophenol, 2-methyl thiophene, isopropyl mercaptan, diethylthioether, diphenylthioether, tetrahydrofuran, dioxane, dimethylether, diethylether, anisole, acetone, triphenylphosphine, triphenylphosphite, diethylphosphate and/or diphenylphosphate.

Examples of suitable metal alkoxides for use in step ii) are metal alkoxides of formulas: M¹(OR⁶)_{v-w}(OR⁷)_{w} and M²(OR⁶)_{v-w}(R⁷)_{w} wherein M¹, M², R⁶, R⁷, v, and w are as defined herein. R⁶ and R⁷ can also be aromatic hydrocarbon groups, optionally substituted with e.g. alkyl groups and can contain for example from 6 to 20 carbon atoms. The R⁶ and R⁷ preferably comprise 1-12 or 1-8 carbon atoms. In preferred embodiments R⁶ and R⁷ are ethyl, propyl or butyl; more preferably all groups are ethyl groups.

Preferably, M¹ in said activating compound is Ti or Si. Si-containing compounds suitable as activating compounds are the same as listed above for step i).

The value of w is preferably 0, the activating compound being for example a titanium tetraalkoxide containing 4-32 carbon atoms in total from four alkoxy groups. The four alkoxide groups in the compound may be the same or may differ independently. Preferably, at least one of the alkoxy groups in the compound is an ethoxy group. More preferably the compound is a tetraalkoxide, such as titanium tetraethoxide.

In the preferred process to prepare the procatalyst, one activating compound can be used, but also a mixture of two or more compounds may be used.

A combination of a compound of M¹(OR⁶)_{v-w}(OR⁷)_{w} or M²(OR⁶)_{v-w}(R⁷)_{w} with an electron donor is preferred as activating compound to obtain a catalyst system that for example shows high activity, and of which the ethylene sensitivity can be affected by selecting the internal donor; which is specifically advantageous in preparing copolymers of for example propylene and ethylene.

Preferably, a Ti-based compound, for example titanium tetraethoxide, is used together with an alcohol, like ethanol or hexanol, or with an ester compound, like ethylacetate, ethylbenzoate or a phthalate ester, or together with an ether, like dibutylether, or with pyridine.

If two or more activating compounds are used in step ii) their order of addition is not critical, but may affect catalyst performance depending on the compounds used. A skilled person may optimize their order of addition based on some experiments. The compounds of step ii) can be added together or sequentially.

Preferably, an electron donor compound is first added to the compound with formula Mg(OR⁵)ₓX¹₂₋ₓ where after a compound of formula M¹(OR⁶)_{v-w}(OR⁷)_{w} or M²(OR⁶)_{v-w}(R⁷)_{w} as defined herein is added. The activating compounds preferably are added slowly, for instance during a period of 0.1-6, preferably during 0.5-4 hours, most preferably during 1-2.5 hours, each.

The first intermediate reaction product that is obtained in step i) can be contacted - when more than one activating compound is used - in any sequence with the activating compounds. In one embodiment, an activating electron donor is first added to the first intermediate reaction product and then the compound M¹(OR⁶)_{v-w}(OR⁷)_{w} or M²(OR⁶)_{v-w}(R⁷)_{w} is added; in this order no agglomeration of solid particles is observed. The compounds in step ii) are preferably added slowly, for instance during a period of 0.1-6, preferably during 0.5-4 hours, most preferably during 1-2.5 hours, each.

The molar ratio of the activating compound to Mg(OR⁵)ₓX¹₂₋ₓ may range between wide limits and is, for instance, from 0.02 to 1.0. Preferably the molar ratio is from 0.05 to 0.5, more preferably from 0.06 to 0.4, or even from 0.07 to 0.2.

The temperature in step ii) can be in the range from -20 °C to 70 °C, preferably from -10 °C to 50 °C, more preferably in the range from -5 °C to 40 °C, and most preferably in the range from 0 °C and 30 °C.

Preferably, at least one of the reaction components is dosed in time, for instance during 0.1 to 6, preferably during 0.5 to 4 hours, more particularly during 1-2.5 hours.

The reaction time after the activating compounds have been added is preferably from 0 to 3 hours.

The mixing speed during the reaction depends on the type of reactor used and the scale of the reactor used. The mixing speed can be determined by a person skilled in the art and should be sufficient to agitate the reactants.

The inert dispersant used in step ii) is preferably a hydrocarbon solvent. The dispersant may be for example an aliphatic or aromatic hydrocarbon with 1-20 carbon atoms. Preferably, the dispersant is an aliphatic hydrocarbon, more preferably pentane, iso-pentane, hexane or heptane, heptane being most preferred.

Starting from a solid Mg-containing product of controlled morphology obtained in step i), said morphology is not negatively affected during treatment with the activating compound during step ii). The solid second intermediate reaction product obtained in step ii) is considered to be an adduct of the Mg-containing compound and the at least one activating compound as defined in step ii), and is still of controlled morphology.

The obtained second intermediate reaction product after step ii) may be a solid and may be further washed, preferably with the solvent also used as inert dispersant; and then stored and further used as a suspension in said inert solvent. Alternatively, the product may be dried, preferably partly dried, preferably slowly and under mild conditions; e.g. at ambient temperature and pressure.

### Step D: Contacting said solid support with the catalytic species and one or more internal donors or an activator:

This step can take different forms, such as i) contacting said solid support with the catalytic species and one or more internal donors to obtain said procatalyst; ii) contacting said solid support with a catalytic species and one or more internal donors to obtain an intermediate product; iii) contacting said solid support with a catalytic species and an activator donor to obtain an intermediate product.

Step D may comprise several stages. During each of these consecutive stages the solid support is contacted with said catalytic species. In other words, the addition or reaction of said catalytic species may be repeated one or more times.

For example, during stage I of Step D, said solid support (first intermediate) or the activated solid support (second intermediate) is first contacted with said catalytic species and optionally subsequently with one or more internal donors. When a second stage is present, during stage II the intermediate product obtained from stage I will be contacted with additional catalytic species which may the same or different than the catalytic species added during the first stage and optionally one or more internal donors. In case three stages are present, stage III is preferably a repetition of stage II or may comprise the contacting of the product obtained from stage II with both a catalytic species (which may be the same or different as above) and one or more internal donors. In other words, an internal donor may be added during each of these stages or during two or more of these stages. When an internal donor is added during more than one stage it may be the same or a different internal donor.

An activator according to the present invention may be added either during stage I or stage II or stage III. An activator may also be added during more than one stage.

Preferably, the process of contacting said solid support with the catalytic species and an internal donor comprises the following step iii).

### Step iii) reacting the solid support with a transition metal halide

Step iii) directs to reacting the solid support with a transition metal halide (e.g. titanium, chromium, hafnium, zirconium, vanadium) but preferably titanium halide. In the discussion below only the process for a titanium-base Ziegler-Natta procatalyst is disclosed, however, the application is also applicable to other types of Ziegler-Natta procatalysts.

Step iii) also directs to contacting the first or second intermediate reaction product, obtained respectively in step i) or ii), with a halogen-containing Ti-compound and an internal electron donor or activator to obtain a third intermediate product.

Step iii) can be carried out after step i) on the first intermediate product or after step ii) on the second intermediate product.

The molar ratio in step iii) of the transition metal to the magnesium preferably is from 10 to 100, most preferably, from 10 to 50.

Preferably, an internal electron donor is also present during step iii). Also mixtures of internal electron donors can be used.

The molar ratio of the internal electron donor relative to the magnesium may vary between wide limits, for instance from 0.02 to 0.75. Preferably, this molar ratio is from 0.05 to 0.5; more preferably from 0.1 to 0.4; and most preferably from 0.1 to 0.3.

During contacting the second intermediate product and the halogen-containing titanium compound, an inert dispersant is preferably used. The dispersant preferably is chosen such that virtually all side products formed are dissolved in the dispersant. Suitable dispersants include for example aliphatic and aromatic hydrocarbons and halogenated aromatic solvents with for instance 4-20 carbon atoms. Examples include toluene, xylene, benzene, heptane, o-chlorotoluene and chlorobenzene.

The reaction temperature during step iii) is preferably from 0 °C to 150 °C, more preferably from 50 °C to 150 °C, and more preferably from 100 °C to 140 °C. Most preferably, the reaction temperature is from 110 °C to 125 °C.

The reaction time during step iii) is preferably from 10 minutes to 10 hours. In case several stages are present, each stage can have a reaction time from 10 minutes to 10 hours. The reaction time can be determined by a person skilled in the art based on the reactor and the procatalyst.

The mixing speed during the reaction depends on the type of reactor used and the scale of the reactor used. The mixing speed can be determined by a person skilled in the art and should be sufficient to agitate the reactants.

The obtained reaction product may be washed, usually with an inert aliphatic or aromatic hydrocarbon or halogenated aromatic compound, to obtain the procatalyst of the invention. If desired, the reaction and subsequent purification steps may be repeated one or more times. A final washing is preferably performed with an aliphatic hydrocarbon to result in a suspended or at least partly dried procatalyst, as described above for the other steps.

Optionally an activator is present during step iii) of Step D instead of an internal donor
In some embodiment, the optional activator is the same as the one used during a previous step. In some embodiment, the optional activator is different from the one used during a previous step. However, it is sectioned from the same list.

The molar ratio of the optional activator relative to the magnesium may vary between wide limits, for instance from 0.02 to 0.5. Preferably, this molar ratio is from 0.05 to 0.4; more preferably from 0.1 to 0.3; and most preferably from 0.1 to 0.2.

### Step E: Modifying said catalyst with a metal-based modifier

This Step E is optional in the present invention. In a preferred process for modifying the supported catalyst, this step consists of the following steps:
Step iv) modifying the third intermediate product with a metal-modifier to yield a modified intermediate product;
Step v) contacting said modified intermediate product with a titanium halide and optionally on or more internal donors to obtain the present procatalyst.

The order of addition, viz. the order of first step iv) and subsequently step v) is considered to be very important to the formation of the correct clusters of Group 13- or transition metal and titanium forming the modified and more active catalytic centre.

Each of these steps is disclosed in more detail below.

It should be noted that the steps iii), iv) and v) (viz. Steps D and E) are preferably carried out in the same reactor, viz. in the same reaction mixture, directly following each other.

Preferably step iv) is carried out directly after step iii) in the same reactor. Preferably, step v) is carried out directly after step iv) in the same reactor.

### Step iv): Group 13- or transition metal modification

The modification with Group 13- or transition metal, preferably aluminium, ensures the presence of Group 13- or transition metal in the procatalyst, in addition to magnesium (from the solid support) and titanium (from the titanation treatment).

Without wishing to be bound by any particular theory, the present invention believe that one possible explanation is that the presence of Group 13- or transition metal increases the reactivity of the active site and hence increases the yield of polymer.

Step iv) comprises modifying the third intermediate product obtained in step iii) with a modifier having the formula MX₃, wherein M is a metal selected from the Group 13 metals and transition metals of the IUPAC periodic table of elements, and wherein X is a halide to yield a modified intermediate product.

Step iv) is preferably carried out directly after step iii), more preferably in the same reactor and preferably in the same reaction mixture. In an embodiment, a mixture of aluminum trichloride and a solvent, e.g. chlorobenzene, is added to the reactor after step iii) has been carried out. After the reaction has completed a solid is allowed to settle which can either be obtained by decanting or filtration and optionally purified or a suspension of which in the solvent can be used for the following step, viz. step v).

The metal modifier is preferably selected from the group of aluminium modifiers (e.g. aluminium halides), boron modifiers (e.g. boron halides), gallium modifiers (e.g. gallium halides), zinc modifiers (e.g. zinc halides), copper modifiers (e.g. copper halides), thallium modifiers (e.g. thallium halides), indium modifiers (e.g. indium halides), vanadium modifiers (e.g. vanadium halides), chromium modifiers (e.g. chromium halides), iron modifiers (e.g. iron halides).

Examples of suitable modifiers are aluminum trichloride, aluminum tribromide, aluminum triiodide, aluminum trifluoride, boron trichloride, boron tribromide boron triiodide, boron trifluoride, gallium trichloride, gallium tribromide, gallium triiodide, gallium trifluoride, zinc dichloride, zinc dibromide, zinc diiodide, zinc difluoride, copper dichloride, copper dibromide, copper diiodide, copper difluoride, copper chloride, copper bromide, copper iodide, copper fluoride, thallium trichloride, thallium tribromide, thallium triiodide, thallium trifluoride, thallium chloride, thallium bromide, thallium iodide, thallium fluoride, Indium trichloride, indium tribromide, indium triiodide, indium trifluoride, vanadium trichloride, vanadium tribromide, vanadium triiodide, vanadium trifluoride, chromium trichloride, chromium dichloride, chromium tribromide, chromium dibromide, iron dichloride, iron trichloride, iron tribromide, iron dichloride, iron triiodide, iron diiodide, iron trifluoride, iron difluoride.

The amount of metal halide added during step iv) may vary according to the desired amount of metal present in the procatalyst. It may for example range from 0.1 to 5 wt.% based on the total weight of the support, preferably from 0.5 to 1.5 wt.% was carried out directly after step iii) in the same reactor.

The metal halide is preferably mixed with a solvent prior to the addition to the reaction mixture. The solvent for this step may be selected from for example aliphatic and aromatic hydrocarbons and halogenated aromatic solvents with for instance 4-20 carbon atoms. Examples include toluene, xylene, benzene, decane, o-chlorotoluene and chlorobenzene. The solvent may also be a mixture or two or more thereof.

The duration of the modification step may vary from 1 minute to 120 minutes, preferably from 40 to 80 minutes, more preferably from 50 to 70 minutes. This time is dependent on the concentration of the modifier, the temperature, the type of solvent used etc.

The modification step is preferably carried out at elevated temperatures (e.g. from 50 to 120 °C, preferably from 90 to 110 °C).

The modification step may be carried out while stirring. The mixing speed during the reaction depends on the type of reactor used and the scale of the reactor used. The mixing speed can be determined by a person skilled in the art. As a non-limiting example, mixing may be carried at a stirring speed from 100 to 400 rpm, preferably from 150 to 300 rpm, more preferably about 200 rpm).

The wt/vol ratio for the metal halide and the solvent in step iv) is from 0.01 gram - 0.1 gram : 5.0 - 100 ml.

The modified intermediate product is present in a solvent. It can be kept in that solvent after which the following step v) is directly carried out. However, it can also be isolated and/or purified. The solid can be allowed to settle by stopping the stirring. The supernatant can than be removed by decanting. Otherwise, filtration of the suspension is also possible. The solid product may be washed once or several times with the same solvent used during the reaction or another solvent selected from the same group described above. The solid may be resuspended or may be dried or partially dried for storage.

Subsequent to this step, step v) is carried out to produce the procatalyst according to the present invention.

### Step v): titanation of intermediate product

This step is very similar to step iii). It contains the additional titanation of the modified intermediate product.

Step v) relates to contacting said modified intermediate product obtained in step iv) with a halogen-containing titanium compound to obtain the procatalyst according to the present invention. When an activator is used during step iii) an internal donor is used during this step.

Step v) is preferably carried out directly after step iv), more preferably in the same reactor and preferably in the same reaction mixture.

In an embodiment, at the end of step iv) or at the beginning of step v) the supernatant was removed from the solid modified intermediate product obtained in step iv) by filtration or by decanting. To the remaining solid, a mixture of titanium halide (e.g. tetrachloride) and a solvent (e.g. chlorobenzene) can be added. The reaction mixture is subsequently kept at an elevated temperature (e.g. from 100 to 130 °C, such as 115 °C) for a certain period of time (e.g. from 10 to 120 minutes, such as from 20 to 60 minutes, e.g. 30 minutes). After this, a solid substance was allowed to settle by stopping the stirring.

The molar ratio of the transition metal to the magnesium preferably is from 10 to 100, most preferably, from 10 to 50.

Optionally, an internal electron donor is also present during this step. Also, mixtures of internal electron donors can be used. The molar ratio of the internal electron donor relative to the magnesium may vary between wide limits, for instance from 0.02 to 0.75. Preferably, this molar ratio is from 0.05 to 0.4; more preferably from 0.1 to 0.4; and most preferably from 0.1 to 0.3.

The solvent for this step may be selected from for example aliphatic and aromatic hydrocarbons and halogenated aromatic solvents with for instance 4-20 carbon atoms. The solvent may also be a mixture or two or more thereof.

According to a preferred embodiment of the present invention this step v) is repeated, in other words, the supernatant is removed as described above and a mixture of titanium halide (e.g. tetrachloride) and a solvent (e.g. chlorobenzene) is added. The reaction is continued at elevated temperatures during a certain time which can be same or different from the first time step v) is carried out.

The step may be carried out while stirring. The mixing speed during the reaction depends on the type of reactor used and the scale of the reactor used. The mixing speed can be determined by a person skilled in the art. This can be the same as discussed above for step iii).

Thus, step v) can be considered to consist of at least two sub steps in this embodiment, being:
v-a) contacting said modified intermediate product obtained in step iv) with titanium tetrachloride - optionally using an internal donor - to obtain a partially titanated procatalyst;
v-b) contacting said partially titanated procatalyst obtained in step v-a) with titanium tetrachloride to obtain the procatalyst.

Additional sub steps can be present to increase the number of titanation steps to four or higher.

The solid substance (procatalyst) obtained was washed several times with a solvent (e.g. heptane), preferably at elevated temperature, e.g. from 40 to 100 °C depending on the boiling point of the solvent used, preferably from 50 to 70 °C. After this, the procatalyst, suspended in solvent, was obtained. The solvent can be removed by filtration or decantation. The procatalyst can be used as such wetted by the solvent or suspended in solvent or it can be first dried, preferably partly dried, for storage. Drying can e.g. be carried out by low pressure nitrogen flow for several hours.

Thus in this embodiment, the total titanation treatment comprises three phases of addition of titanium halide. Wherein the first phase of addition is separated from the second and third phases of addition by the modification with metal halide.

It could be said that the difference between the prior art and the present invention is that the titanation step (viz. the step of contacting with a titanium halide) according to the present invention is split into two parts and a Group 13- or transition metal modification step is introduced between the two parts or stages of the titanation. Preferably the first part of the titanation comprises one single titanation step and the second part of the titanation comprises two subsequent titanation steps. When this modification is carried out before the titanation step the increase in activity was less as observed by the inventors. When this modification is carried out after the titanation step the increase in activity was less as observed by the present inventors.

In short, an embodiment of the present invention comprises the following steps: i) preparation of first intermediate reaction product; ii) activation of solid support to yield second intermediate reaction product; iii) first titanation or Stage I to yield third intermediate reaction product; iv) modification to yield modified intermediate product; v) second titanation or Stage II/III to yield the procatalyst.

The procatalyst may have a titanium, hafnium, zirconium, chromium or vanadium (preferably titanium) content of from about 0.1 wt% to about 6.0 wt%, based on the total solids weight, or from about 1.0 wt% to about 4.5 wt%, or from about 1.5 wt% to about 3.5 wt%.

The weight ratio of titanium, hafnium, zirconium, chromium or vanadium (preferably titanium) to magnesium in the solid procatalyst may be from about 1:3 to about 1:160, or from about 1:4 to about 1:50, or from about 1:6 to 1:30. Weight percent is based on the total weight of the procatalyst.

The transition metal-containing solid catalyst compound according to the present invention comprises a transition metal halide (e.g. titanium halide, chromium halide, hafnium halide, zirconium halide, vanadium halide) supported on a metal or metalloid compound (e.g. a magnesium compound or a silica compound).

Preferably, a magnesium-based or magnesium-containing support is used in the present invention. Such a support is prepared from magnesium-containing support-precursors, such as magnesium halides, magnesium alkyls and magnesium aryls, and also magnesium alkoxy and magnesium aryloxy compounds.

The support may be activated using activation compounds as described in more detail above under Step C.

The catalyst system according to the present invention includes a co-catalyst. As used herein, a "co-catalyst" is a term well-known in the art in the field of Ziegler-Natta catalysts and is recognized to be a substance capable of converting the procatalyst to an active polymerization catalyst. Generally, the co-catalyst is an organometallic compound containing a metal from group 1, 2, 12 or 13 of the Periodic System of the Elements (Handbook of Chemistry and Physics, 70th Edition, CRC Press, 1989- 1990).

The co-catalyst may include any compounds known in the art to be used as "co-catalysts", such as hydrides, alkyls, or aryls of aluminum, lithium, zinc, tin, cadmium, beryllium, magnesium, and combinations thereof. The co-catalyst may be a hydrocarbyl aluminum co-catalyst represented by the formula R²⁰₃Al.

R²⁰ is independently selected from a hydrogen or a hydrocarbyl, selected from alkyl, alkenyl, aryl, aralkyl, alkoxycarbonyl or alkylaryl groups, and one or more combinations thereof. Said hydrocarbyl group may be linear, branched or cyclic. Said hydrocarbyl group may be substituted or unsubstituted. Said hydrocarbyl group may contain one or more heteroatoms. Preferably, said hydrocarbyl group has from 1 to 20 carbon atoms, more preferably from 1 to 12 carbon atoms, even more preferably from 1 to 6 carbon atoms. On the proviso that at least one R²⁰ is a hydrocarbyl group. Optionally, two or three R²⁰ groups are joined in a cyclic radical forming a heterocyclic structure.

Non-limiting examples of suitable R²⁰ groups are: methyl, ethyl, propyl, isopropyl, butyl, isobutyl, tert-butyl, pentyl, neopentyl, hexyl, 2-methylpentyl, heptyl, octyl, isooctyl, 2-ethylhexyl, 5,5-dimethylhexyl, nonyl, decyl, isodecyl, undecyl, dodecyl, phenyl, phenethyl, methoxyphenyl, benzyl, tolyl, xylyl, naphthyl, methylnapthyl, cyclohexyl, cycloheptyl, and cyclooctyl.

Suitable examples of the hydrocarbyl aluminum compounds as co-catalyst include triisobutylaluminum, trihexylaluminum, di-isobutylaluminum hydride, dihexylaluminum hydride, isobutylaluminum dihydride, hexylaluminum dihydride, diisobutylhexylaluminum, isobutyl dihexylaluminum, trimethylaluminum, triethylaluminum, tripropylaluminum, triisopropylaluminum, tri-n-butylaluminum, trioctylaluminum, tridecylaluminum, tridodecylaluminum, tribenzylaluminum, triphenylaluminum, trinaphthylaluminum, and tritolylaluminum. In an embodiment, the cocatalyst is selected from triethylaluminum, triisobutylaluminum, trihexylaluminum, di-isobutylaluminum hydride and dihexylaluminum hydride. More preferably, trimethylaluminium, triethylaluminium, triisobutylaluminium, and/or trioctylaluminium. Most preferably, triethylaluminium (abbreviated as TEAL).

The co-catalyst can also be a hydrocarbyl aluminum compound represented by the formula R²¹ₘAIX²¹₃₋ₘ.

R²¹ is an alkyl group. Said alkyl group may be linear, branched or cyclic. Said alkyl group may be substituted or unsubstituted. Preferably, said alkyl group has from 1 to 20 carbon atoms, more preferably from 1 to 12 carbon atoms, even more preferably from 1 to 6 carbon atoms.

Non-limiting examples of suitable R²¹ groups are: methyl, ethyl, propyl, isopropyl, butyl, isobutyl, tert-butyl, pentyl, neopentyl, hexyl, 2-methylpentyl, heptyl, octyl, isooctyl, 2-ethylhexyl, 5,5-dimethylhexyl, nonyl, decyl, isodecyl, undecyl, and dodecyl.

X²¹ is selected from the group comprising of fluoride (F-), chloride (Cl-), bromide (Br-) or iodide (I-) or an alkoxide (RO⁻). The value for m is preferably 1 or 2.

Non-limiting examples of suitable alkyl aluminium halide compounds for co-catalyst include tetraethyl-dialuminoxane, methylaluminoxane, isobutylaluminoxane, tetraisobutyl-dialuminoxane, diethyl-aluminumethoxide, diisobutylaluminum chloride, methylaluminum dichloride, diethylaluminum chloride, ethylaluminum dichloride and dimethylaluminum chloride.

Non-limiting examples of suitable compounds include tetraethyldialuminoxane, methylaluminoxane, isobutylaluminoxane, tetraisobutyldialuminoxane,diethylaluminum ethoxide, diisobutylaluminum chloride, methylaluminum dichloride, diethylaluminum chloride, ethylaluminum dichloride and dimethylaluminum chloride.

Preferably, the co-catalyst is triethylaluminum. The molar ratio of aluminum to titanium may be from about 5:1 to about 500:1 or from about 10:1 to about 200:1 or from about 15:1 to about 150:1 or from about 20:1 to about 100:1. The molar ratio of aluminum to titanium is preferably about 45:1.

One of the functions of an external donor compound is to affect the stereoselectivity of the catalyst system in polymerization of olefins having three or more carbon atoms. Therefore, it may be also referred to as a selectivity control agent.

Examples of external donors suitable for use in the present invention are: alkoxysilanes, 1,3-diether, benzoic acid esters, alkylamino-alkoxysilanes, alkyl-alkoxysilane, imidosilanes, and alkylimidosilanes, preferably n-propyl trimethoxysilane (nPTMS), n-propyl triethoxysilane (nPEMS), diisobutyl dimethoxysilane (DiBDMS), tert-butyl isopropyl dimethyxysilane (tBiPDMS), cyclohexyl methyldimethoxysilane (CHMDMS), dicyclopentyl dimethoxysilane (DCPDMS), di(iso-propyl) dimethoxysilane (DiPDMS) or di(iso-butyl) dimethoxysilane (diBDMS)
In one of the embodiments, the external electron donor and/or an activity limiting agent (ALA) can be added into the reactor separately to reduce the thermal runaway of the catalysts. The activity limiting agent may be selected from a group comprising of esters, amines, nitriles, amides and one or more combinations thereof. Suitable esters for use as ALA comprises aliphatic or aromatic, mono-or poly- carboxylic acid ester, for example ethyl and methyl benzoate, ethyl p-methoxybenzoate, methyl p-ethoxybenzoate, ethyl p-ethoxybenzoate, ethyl acrylate, methyl methacrylate, ethyl acetate, octyl acetate, ethyl p-chlorobenzoate, hexyl p- aminobenzoate, isopropyl naphthenate, n-amyl toluate, ethyl cyclohexanoate, pentyl valerate, propyl pivalate, isopropyl myristate, di-n-butyl sebacate, (poly)(alkylene glycol) mono- or diacetates, (poly)(alkylene glycol) mono- or di-myri states, (poly)(alkylene glycol) mono- or di-laurates, (poly)(alkylene glycol) mono- or di-oleates, glyceryl tri(acetate), glyceryl tri-ester of C2-10 aliphatic carboxylic acids, and mixtures thereof. Suitable amines for use as ALA include but are not limited to aminobenzoate, aliphatic amines, for example N,N,N'N'-tetramethyl ethylene diamine; cycloaliphatic amines, for example 1,2,4-trimethyl piperazine, 2,3,4,5-tetraethyl piperidine and phthalates, for example dimethyl phthalate, diethyl phthalate, di-n-propyl phthalate, diisopropyl phthalate, di-n-butyl phthalate, diisobutyl phthalate, di-tert-butyl phthalate, diisoamyl phthalate, di-tert-amyl phthalate, dineopentyl phthalate, di-2-ethylhexyl phthalate, and di-2-ethyldecyl phthalate, and mixtures thereof. Suitable nitriles for use as ALA include but are not limited to aromatic and aliphatic nitriles, for example alkane nitriles, for example trimethyl acetonitrile, and mixtures thereof. Suitable amides for use as ALA include but are not limited to aromatic and aliphatic amides, for example n, n-dimethyl benzamide, and mixtures thereof.

In another embodiment, the external electron donor and the activity limiting agent can be mixed together in advance and then added into the reactor as a mixture. In the mixture, more than one external electron donor or more than one activity limiting agent can be used.

In one embodiment, the mixture is dicyclopentyldimethoxysilane and isopropyl myristate, dicyclopentyldiniethoxysilane and poly(ethylene glycol) laurate, diispropyldimethoxysilane and isopropyl myristate, dicyclopentyldimethoxysilane and isopropyl myristate and poly(ethylene glycol) dioleate, diisobutyldimethoxysilane and isopropyl myristate, methylcyclohexyldimethoxysilane and isopropyl myristate, n-propyltrimethoxysilane and isopropyl myristate, dimethyldimethoxysilane and methylcyclohexyldimethoxysilane and isopropyl myristate, dicyclopentyldimethoxysilane and n-propyltriethoxysilane and isopropyl myristate, and dicyclopentyldimethoxysilane and tetraethoxysilane and isopropyl myristate, and combinations thereof.

The aluminium/external donor molar ratio in the polymerization catalyst system preferably is from 0.1 to 200; more preferably from 1 to 100.

Mixtures of external donors may be present and may include from about 0.1 mol % to about 99.9% mol % of a first external donor and from about 99.9 mol % to about 0.1 mol % of either a second or the additional alkoxysilane external donor disclosed below.

When a silane external donor is used, the Si/Ti molar ratio in the catalyst system can range from 0.1 to 40, preferably from 0.1 to 20, even more preferably from 1 to 20 and most preferably from 2 to 10.

A monocarboxylic acid ester (also called "benzoic acid ester") as shown in Formula (VI) may be used as an external donor.

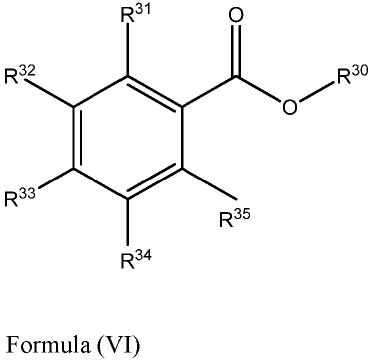

R³⁰ is selected from a hydrocarbyl group independently selected from alkyl, alkenyl, aryl, aralkyl, alkoxycarbonyl or alkylaryl groups, and one or more combinations thereof. Said hydrocarbyl group may be linear, branched or cyclic. Said hydrocarbyl group may be substituted or unsubstituted. Said hydrocarbyl group may contain one or more heteroatoms. Preferably, said hydrocarbyl group has from 1 to 10 carbon atoms, more preferably from 1 to 8 carbon atoms, even more preferably from 1 to 6 carbon atoms. Suitable examples of hydrocarbyl groups include alkyl, cycloalkyl, alkenyl, alkadienyl, cycloalkenyl, cycloalkadienyl, aryl, aralkyl, alkylaryl, and alkynyl groups.

R³¹, R³², R³³, R³⁴, R³⁵ are each independently selected from hydrogen, a heteroatom (preferably a halide), or a hydrocarbyl group, selected from alkyl, alkenyl, aryl, aralkyl, alkoxycarbonyl or alkylaryl groups, and one or more combinations thereof. Said hydrocarbyl group may be linear, branched or cyclic. Said hydrocarbyl group may be substituted or unsubstituted. Said hydrocarbyl group may contain one or more heteroatoms. Preferably, said hydrocarbyl group has from 1 to 10 carbon atoms, more preferably from 1 to 8 carbon atoms, even more preferably from 1 to 6 carbon atoms.

Suitable non-limiting examples of "benzoic acid esters" include an alkyl p-alkoxybenzoate (such as ethyl p-methoxybenzoate, methyl p-ethoxybenzoate, ethyl p-ethoxybenzoate), an alkyl benzoate (such as ethyl benzoate, methyl benzoate), an alkyl p-halobenzoate (ethyl p-chlorobenzoate, ethyl p-bromobenzoate), and benzoic anhydride. The benzoic acid ester is preferably selected from ethyl benzoate, benzoyl chloride, ethyl p-bromobenzoate, n-propyl benzoate and benzoic anhydride. The benzoic acid ester is more preferably ethyl benzoate.

A "di-ether may be a 1,3-di(hydrocarboxy)propane compound, optionally substituted on the 2-position represented by the Formula (VII) may be used as an external donor. ,

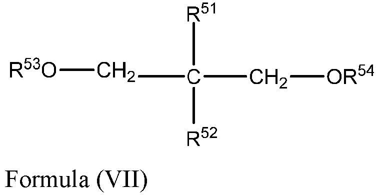

R⁵¹ and R⁵² are each independently selected from a hydrogen or a hydrocarbyl group selected from alkyl, alkenyl, aryl, aralkyl, alkoxycarbonyl or alkylaryl groups, and one or more combinations thereof. Said hydrocarbyl group may be linear, branched or cyclic. Said hydrocarbyl group may be substituted or unsubstituted. Said hydrocarbyl group may contain one or more heteroatoms. Preferably, said hydrocarbyl group has from 1 to 10 carbon atoms, more preferably from 1 to 8 carbon atoms, even more preferably from 1 to 6 carbon atoms. Suitable examples of hydrocarbyl groups include alkyl-, cycloalkyl-, alkenyl-, alkadienyl-, cycloalkenyl-, cycloalkadienyl-, aryl-, aralkyl, alkylaryl, and alkynyl- groups.

R⁵³ and R⁵⁴ are each independently selected from hydrogen, a halide or a hydrocarbyl group, selected from alkyl, alkenyl, aryl, aralkyl, alkoxycarbonyl or alkylaryl groups, and one or more combinations thereof. Said hydrocarbyl group may be linear, branched or cyclic. Said hydrocarbyl group may be substituted or unsubstituted. Said hydrocarbyl group may contain one or more heteroatoms. Preferably, said hydrocarbyl group has from 1 to 10 carbon atoms, more preferably from 1 to 8 carbon atoms, even more preferably from 1 to 6 carbon atoms.

Suitable examples of dialkyl diether compounds include 1,3-dimethoxypropane, 1,3-diethoxypropane, 1,3-dibutoxypropane, 1-methoxy-3-ethoxypropane, 1-methoxy-3-butoxypropane, 1-methoxy-3-cyclohexoxypropane, 2,2-dimethyl-1,3-dimethoxypropane, 2,2-diethyl-1,3-dimethoxypropane, 2,2-di-n-butyl-1,3-dimethoxypropane, 2,2-diiso-butyl-1,3-dimethoxypropane, 2-ethyl-2-n-butyl-1,3-dimethoxypropane, 2-n-propyl-2-cyclopentyl-1,3-dimethoxypropane, 2,2-dimethyl-1,3-diethoxypropane, 2-n-propyl-2-cyclohexyl-1,3-diethoxypropane, 2-(2-ethylhexyl)-1,3-dimethoxypropane, 2-isopropyl-1,3-dimethoxypropane, 2-n-butyl-1,3 -dimethoxypropane, 2-sec-butyl-1,3-dimethoxypropane, 2-cyclohexyl-1,3-dimethoxypropane, 2-phenyl-1,3-diethoxypropane, 2-cumyl-1,3-diethoxypropane, 2-(2-phenyllethyl)-1,3-dimethoxypropane, 2-(2-cyclohexylethyl)-1 ,3-dimethoxypropane, 2-(p-chlorophenyl)-1,3-dimethoxypropane, 2-(diphenylmethyl)-1,3-dimethoxypropane, 2-(1-naphthyl)-1,3-dimethoxypropane, 2-(fluorophenyl)-1,3-dimethoxypropane, 2-(1-decahydronaphthyl)-1,3-dimethoxypropane, 2-(p-t-butylphenyl)-1,3-dimethoxypropane, 2,2-dicyclohexyl-1,3-dimethoxypropane, 2,2-di-npropyl-1,3-dimethoxypropane, 2-methyl-2-n-propyl-1,3-dimethoxypropane, 2-methyl-2-benzyl-1,3-dimethoxypropane, 2-methyl-2-ethyl-1,3-dimethoxypropane, 2-methyl-2-phenyl-1,3-dimethoxypropane, 2-methyl-2-cyclohexyl-1,3-dimethoxypropane, 2,2-bis(pchlorophenyl)-1,3-dimethoxypropane, 2,2-bis(2-cyclohexylethyl)-1,3 -dimethoxypropane, 2-methyl-2-iso butyl-1,3-dimethoxypropane, 2-methyl-2-(2-ethylhexyl )-1,3-dimethoxypropane, 2-methyl-2-isopropyl-1,3-dimethoxypropane, 2,2-diphenyl-1,3-dimethoxypropane, 2,2-dibenzyl-1,3-dimethoxypropane, 2,2-bis(cyclohexylmethyl)-1,3-dimethoxypropane, 2,2-diiso butyl-1,3-diethoxypropane, 2,2-diisobuty 1-1,3-di -n-butoxypropane, 2-isobutyl-2-isopropyl-1,3-dimethoxypropane, 2,2-di-sec-butyl-1,3-dimethoxypropane, 2,2-di-t-butyl-1,3-dimethoxypropane, 2,2-dineopentyl-1,3-dimethoxypropane, 2-isopropyl-2-isopentyl-1,3-dimethoxypropane, 2-phenyl-2-benzyl-1,3-dimethoxypropane, 2-cyclohexyl-2-cyclohexylmethyl-1,3-dimethoxypropane, 2-isopropyl-2-(3, 7-dimethyloctyl) 1,3-dimethoxypropane, 2,2-diisopropyl-1,3-dimethoxypropane, 2-isopropyl-2-cyclohexylmethyl-1,3 -dimethoxypropane, 2,2-diisopentyl-1,3 -dimethoxypropane, 2-isopropyl-2-cyclohexyl-1,3-dimethoxypropane, 2-isopropyl-2-cyclopentyl-1,3-dimethoxypropane, 2,2-dicylopentyl-1,3-dimethoxypropane, 2-n-heptyl-2-n-pentyl-1,3-dimethoxypropane, 9,9-bis(methoxymethyl)fluorene (flu), 1,3-dicyclohexyl-2,2-bis(methoxymethyl)propane, 3,3-bis(methoxymethyl)-2,5-dimethylhexane, or any combination of the foregoing. In an embodiment, the external electron donor is 1,3-dicyclohexyl-2,2-bis(methoxymethyl)propane, 3,3-bis(methoxymethyl)-2,5-dimethylhexane, 2,2-dicyclopentyl-1,3-dimethoxypropane and combinations thereof.

Examples of preferred ethers are diethyl ether, dibutyl ether, diisoamyl ether, anisole and ethylphenyl ether, 2,3-dimethoxypropane, 2,3-dimethoxypropane, 2-ethyl-2- butyl-1, 3-dimethoxypropane, 2-isopropyl-2-isopentyl- 1,3-dimethoxypropane and 9,9-bis (methoxymethyl) fluorene (flu) of Formula (VIII):

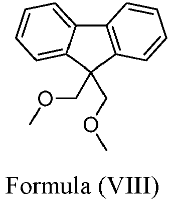

Documents EP1538167 and EP1783145 disclose a Ziegler-Natta catalyst type comprising an organo-silicon compound as external donor that is represented by formula Si(ORc)3(NRdRe), wherein Rc is a hydrocarbon group having 1 to 6 carbon atoms, Rd is a hydrocarbon group having 1 to 12 carbon atoms or hydrogen atom, and Re is a hydrocarbon group having 1 to 12 carbon atoms used as an external electron donor.

Another example of a suitable external donor according to the present invention is a compound according to Formula (IX):

(R⁹⁰)₂N-A-Si(OR⁹¹)₃ Formula (IX)

The R⁹⁰ and R⁹¹ groups are each independently an alkyl having from 1 to 10 carbon atoms. Said alkyl group may be linear, branched or cyclic. Said alkyl group may be substituted or unsubstituted. Preferably, said hydrocarbyl group has from 1 to 8 carbon atoms, even more preferably from 1 to 6 carbon atoms, even more preferably from 2 to 4 carbon atoms. Preferably each R⁹⁰ is ethyl. Preferably each R⁹¹ is ethyl. A is either a direct bond between nitrogen and silicon or a spacer selected from an alkyl having from 1 to 10 carbon atoms, preferably a direct bond.

An example of such an external donor is diethyl-amino-triethoxysilane (DEATES) wherein A is a direct bond, each R⁹⁰ is ethyl and each R⁹¹ is ethyl.

Alkyl-alkoxysilanes according to Formula (X) may be used as external donors.

(R⁹²)Si(OR⁹³)₃ Formula (X)

The R⁹² and R⁹³ groups are each independently an alkyl having from 1 to 10 carbon atoms. Said alkyl group may be linear, branched or cyclic. Said alkyl group may be substituted or unsubstituted. Preferably, said hydrocarbyl group has from 1 to 8 carbon atoms, even more preferably from 1 to 6 carbon atoms, even more preferably from 2 to 4 carbon atoms. Preferably, all three R⁹³ groups are the same. Preferably R⁹³ is methyl or ethyl. Preferably R⁹² is ethyl or propyl, more preferably n-propyl.

Examples are n-propyl triethoxysilane (nPTES) and n-propyl trimethoxysilane (nPTMS).

Typical external donors known in the art (for instance as disclosed in documents WO2006/056338A1, EP1838741B1, US6395670B1, EP398698A1, WO96/32426A) are organosilicon compounds having general formula Si(OR^{a})₄₋ₙR^{b}ₙ, wherein n can be from 0 up to 2, and each R^{a} and R^{b}, independently, represents an alkyl or aryl group, optionally containing one or more hetero atoms for instance O, N, S or P, with, for instance, 1-20 carbon atoms; such as n-propyl trimethoxysilane (nPTMS), n-propyl triethoxysilane (nPEMS), diisobutyl dimethoxysilane (DiBDMS), tert-butyl isopropyl dimethyxysilane (tBiPDMS), cyclohexyl methyldimethoxysilane (CHMDMS), dicyclopentyl dimethoxysilane (DCPDMS), di(iso-propyl) dimethoxysilane (DiPDMS) or di(iso-butyl) dimethoxysilane (diBDMS).

Imidosilanes according to Formula (XI) may be used as external donors.

Si(L)ₙ(OR¹¹)₄₋ₙ Formula (XI)

wherein,
Si is a silicon atom with valency 4+;
O is an oxygen atom with valency 2- and O is bonded to Si via a silicon-oxygen bond;
n is 1, 2, 3 or 4;
R¹¹ is selected from the group comprising of linear, branched and cyclic alkyl having at most 20 carbon atoms and aromatic substituted and unsubstituted hydrocarbyl having 6 to 20 carbon atoms; two R¹¹ groups can be connected and together may form a cyclic structure; and
L is a group represented by Formula (XII) 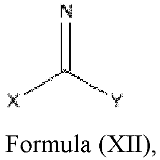
wherein,
L is bonded to the silicon atom via a nitrogen-silicon bond;
L has a single substituent on the nitrogen atom, where this single substituent is an imine carbon atom; and
X and Y are each independently selected from the group comprising of:
   a) a hydrogen atom;
   b) a group comprising a heteroatom selected from group 13, 14, 15, 16 or 17 of the IUPAC Periodic Table of the Elements, through which X and Y are each independently bonded to the imine carbon atom of Formula II, wherein the heteroatom is substituted with a group consisting of a linear, branched and cyclic alkyl having at most 20 carbon atoms, optionally containing a heteroatom selected from group 13, 14, 15, 16 or 17 of the IUPAC Periodic Table of the Elements; and/or with an aromatic substituted and unsubstituted hydrocarbyl having 6 to 20 carbon atoms, optionally containing a heteroatom selected from group 13, 14, 15, 16 or 17 of the IUPAC Periodic Table of the Elements;
   c) a linear, branched and cyclic alkyl having at most 20 carbon atoms, optionally containing a heteroatom selected from group 13, 14, 15, 16 or 17 of the IUPAC Periodic Table of the Elements; and
   d) an aromatic substituted and unsubstituted hydrocarbyl having 6 to 20 carbon atoms, optionally containing a heteroatom selected from group 13, 14, 15, 16 or 17 of the IUPAC.

R¹¹ is selected from the group consisting of linear, branched and cyclic alkyl having at most 20 carbon atoms.

R¹² is selected from the group consisting of a linear, branched and cyclic hydrocarbyl group independently selected from alkyl, alkenyl, aryl, aralkyl, alkoxycarbonyl or alkylaryl groups, and one or more combinations thereof. Said hydrocarbyl group may be substituted or unsubstituted. Said hydrocarbyl group may contain one or more heteroatoms. Preferably, said hydrocarbyl group has from 1 to 20 carbon atoms.

Preferably, R¹¹ is a selected from the group consisting of linear, branched and cyclic alkyl having at most 20 carbon atoms, preferably 1 to 10 carbon atoms or 3 to 10 carbon atoms, more preferably 1 to 6 carbon atoms.

Suitable examples of R¹¹ include methyl, ethyl, n-propyl, iso-propyl, n-butyl, iso-butyl, tert-butyl, sec-butyl, iso-butyl, n-pentyl, iso-pentyl, cyclopentyl, n-hexyl and cyclohexyl. More preferably, R¹¹ is a linear alkyl having 1 to 10, even more preferably 1 to 6 carbon atoms. Most preferably, R¹¹ is methyl or ethyl.

Suitable examples of R¹² include methyl, ethyl, n-propyl, iso-propyl, n-butyl, iso-butyl, tert-butyl, sec-butyl, iso-butyl, n-pentyl, iso-pentyl, cyclopentyl, n-hexyl, cyclohexyl, unsubstituted or substituted phenyl.

Specific examples are the following compounds: 1,1,1-triethoxy-N-(2,2,4,4-tetramethylpentan-3-ylidene) silanamine (all R¹¹ groups are = ethyl and X and Y are both tert-butyl); 1,1,1-trimethoxy-*N*-(2,2,4,4-tetramethylpentan-3-ylidene) silanamine (all R¹¹ groups are methyl, and X and Y are tert butyl), N,N,N',N'-tetramethylguanidine triethoxysilane (all R11 groups are ethyl, both X and Y are dimethylamino).

Alkylimidosilanes according to Formula (XIII) may be used as external donors.

Si(L)ₙ(OR¹¹)₄₋ₙ₋ₘ(R¹²)ₘ : Formula (XIII)

wherein,
Si is a silicon atom with valency 4+;
O is an oxygen atom with valency 2- and O is bonded to Si via a silicon-oxygen bond;
n is 1, 2, 3 or 4;
m is 0, 1 or 2
n+m ≤ 4
R¹¹ is selected from the group consisting of linear, branched and cyclic alkyl having at most 20 carbon atoms and aromatic substituted and unsubstituted hydrocarbyl having 6 to 20 carbon atoms; and
R¹² is selected from the group consisting of linear, branched and cyclic alkyl having at most 20 carbon atoms and aromatic substituted and unsubstituted hydrocarbyl having 6 to 20 carbon atoms;
L is a group represented by Formula (XIV) 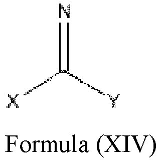
wherein,
L is bonded to the silicon atom via a nitrogen-silicon bond;
L has a single substituent on the nitrogen atom, where this single substituent is an imine carbon atom; and
X and Y are each independently selected from the group comprising of:
   a) a hydrogen atom;
   b) a group comprising a heteroatom selected from group 13, 14, 15, 16 or 17 of the IUPAC Periodic Table of the Elements, through which X and Y are each independently bonded to the imine carbon atom of Formula XIV, wherein the heteroatom is substituted with a group consisting of a linear, branched and cyclic alkyl having at most 20 carbon atoms, optionally containing a heteroatom selected from group 13, 14, 15, 16 or 17 of the IUPAC Periodic Table of the Elements; and/or with an aromatic substituted and unsubstituted hydrocarbyl having 6 to 20 carbon atoms, optionally containing a heteroatom selected from group 13, 14, 15, 16 or 17 of the IUPAC Periodic Table of the Elements;
   c) a linear, branched and cyclic alkyl having at most 20 carbon atoms, optionally containing a heteroatom selected from group 13, 14, 15, 16 or 17 of the IUPAC Periodic Table of the Elements; and
   d) an aromatic substituted and unsubstituted hydrocarbyl having 6 to 20 carbon atoms, optionally containing a heteroatom selected from group 13, 14, 15, 16 or 17 of the IUPAC Periodic Table of the Elements.

R¹¹ is selected from the group consisting of linear, branched and cyclic alkyl having at most 20 carbon atoms.

R¹² is selected from the group consisting of a linear, branched and cyclic hydrocarbyl group independently selected from alkyl, alkenyl, aryl, aralkyl, alkoxycarbonyl or alkylaryl groups, and one or more combinations thereof. Said hydrocarbyl group may be substituted or unsubstituted. Said hydrocarbyl group may contain one or more heteroatoms. Preferably, said hydrocarbyl group has from 1 to 20 carbon atoms.

Preferably, R¹¹ is a selected from the group consisting of linear, branched and cyclic alkyl having at most 20 carbon atoms, preferably 1 to 10 carbon atoms or 3 to 10 carbon atoms, more preferably 1 to 6 carbon atoms.

Suitable examples of R¹¹ include methyl, ethyl, n-propyl, iso-propyl, n-butyl, iso-butyl, tert-butyl, sec-butyl, iso-butyl, n-pentyl, iso-pentyl, cyclopentyl, n-hexyl and cyclohexyl. More preferably,

R¹¹ is a linear alkyl having 1 to 10, even more preferably 1 to 6 carbon atoms. Most preferably, R¹¹ is methyl or ethyl.

Suitable examples of R¹² include methyl, ethyl, n-propyl, iso-propyl, n-butyl, iso-butyl, tert-butyl, sec-butyl, iso-butyl, n-pentyl, iso-pentyl, cyclopentyl, n-hexyl, cyclohexyl, unsubstituted or substituted phenyl.

Alkoxy silane halide for preparing imidosilane and alkylimidosilane, respectively, according to Formula (XV): ZₙSi(OR¹¹)₄₋ₙ and Formula (XVI): ZₙSi(OR¹¹)₄₋ₙ₋ₘ(R¹²)ₘ

In the alkoxy silane halide represented by Formula (XV) and (XVI), Z is halogen group, and more preferably a chlorine group; n = 1, 2 or 3.

In a first specific example, the external donor may have a structure corresponding to Formula XIII wherein n =1, m = 2, X = Y = phenyl, both R¹² groups are methyl, and R¹¹ is butyl.

In a second specific example, the external donor may have a structure corresponding to Formula XIII wherein n =4, m = 0, X = methyl, and Y = ethyl.

In a third specific example, the external donor may have a structure corresponding to Formula XIII wherein n =1, m = 1, X = phenyl, Y = -CH₂-Si(CH₃)₃, and R¹² = R¹¹ = methyl.

In a fourth specific example, the external donor may have a structure corresponding to Formula XIII wherein n =1, m = 1, X = -NH-C=NH(NH₂)-, Y = -NH-(CH₂)₃-Si(OCH₂CH₃)₃, and R¹² = - (CH₂)₃-NH₂; R¹¹ = ethyl.

The additional compound(s) in the external donor according to the invention may be one or more alkoxysilanes. The alkoxysilane compound can have any of the structures disclosed herein. The alkoxysilane is described by Formula (XV)

SiR⁷ᵣ(OR⁸)₄₋ᵣ Formula (XV)

R⁷ is independently a hydrocarbyl, selected from alkyl, alkenyl, aryl, aralkyl, alkoxycarbonyl or alkylaryl groups, and one or more combinations thereof. Said hydrocarbyl group may be linear, branched or cyclic. Said hydrocarbyl group may be substituted or unsubstituted. Said hydrocarbyl group may contain one or more heteroatoms. Preferably, said hydrocarbyl group has from 1 to 20 carbon atoms, more preferably from 6 to 12 carbon atoms. For example, R⁷ may be C6-12 aryl, alkyl or aralkyl, C3-12 cycloalkyl, C3-12 branched alkyl, or C3-12 cyclic or acyclic amino group. The value for r may be 1 or 2.

For the formula SiNR⁷r(OR⁸)₄₋ᵣ , R⁷ may also be hydrogen.

R⁸ is independently selected from a hydrogen or a hydrocarbyl, selected from alkyl, alkenyl, aryl, aralkyl, alkoxycarbonyl or alkylaryl groups, and one or more combinations thereof. Said hydrocarbyl group may be linear, branched or cyclic. Said hydrocarbyl group may be substituted or unsubstituted. Said hydrocarbyl group may contain one or more heteroatoms. Preferably, said hydrocarbyl group has from 1 to 20 carbon atoms, more preferably from 1 to 12 carbon atoms, even more preferably from 1 to 6 carbon atoms. For example, R⁸ may be C1-4 alkyl, preferably methyl or ethyl

Non-limiting examples of suitable silane-compounds include tetramethoxysilane (TMOS or tetramethyl orthosilicate), tetraethoxysilane (TEOS or tetraethyl orthosilicate), methyl trimethoxysilane, methyl triethoxysilane, methyl tripropoxysilane, methyl tributoxysilane, ethyl trimethoxysilane, ethyl triethoxysilane, ethyl tripropoxysilane, ethyl tributoxysilane, n-propyl trimethoxysilane, n-propyl triethoxysilane, n-propyl tripropoxysilane, n-propyl tributoxysilane, isopropyl trimethoxysilane, isopropyl triethoxysilane, isopropyl tripropoxysilane, isopropyl tributoxysilane, phenyl trimethoxysilane, phenyl triethoxysilane, phenyl tripropoxysilane, phenyl tributoxysilane, cyclopentyl trimethoxysilane, cyclopentyl triethoxysilane, diethylamino triethoxysilane, dimethyl dimethoxysilane, dimethyl diethoxysilane, dimethyl dipropoxysilane, dimethyl dibutoxysilane, diethyl dimethoxysilane, diethyl diethoxysilane, diethyl dipropoxysilane, diethyl dibutoxysilane, di-n-propyl dimethoxysilane, d-n-propyl diethoxysilane, di-n-propyl dipropoxysilane, di-n-propyl dibutoxysilane, diisopropyl dimethoxysilane, diisopropyl diethoxysilane, diisopropyl dipropoxysilane, diisopropyl dibutoxysilane, diphenyl dimethoxysilane, diphenyl diethoxysilane, diphenyl dipropoxysilane, diphenyl dibutoxysilane, dicyclopentyl dimethoxysilane, dicyclopentyl diethoxysilane, diethyl diphenoxysilane, di-tert-butyl dimethoxysilane, methyl cyclohexyl dimethoxysilane, ethyl cyclohexyl dimethoxysilane, isobutyl isopropyl dimethoxysilane, tert-butyl isopropyl dimethoxysilane, trifluoropropyl methyl dimethoxysilane, bis(perhydroisoquinolino) dimethoxysilane, dicyclohexyl dimethoxysilane, dinorbornyl dimethoxysilane, cyclopentyl pyrrolidino dimethoxysilane and bis(pyrrolidino) dimethoxysilane.

In an embodiment, the silane-compound for the additional external donor is dicyclopentyl dimethoxysilane, di-isopropyl dimethoxysilane, di-isobutyl dimethyoxysilane, methylcyclohexyl dimethoxysilane, n-propyl trimethoxysilane, n-propyltriethoxysilane, dimethylamino triethoxysilane, and one or more combinations thereof.

The invention also relates to a process to make the catalyst system by contacting a Ziegler-Natta type procatalyst, a co-catalyst and an external electron donor. The procatalyst, the co-catalyst and the external donor can be contacted in any way known to the skilled person in the art; and as also described herein, more specifically as in the Examples.

The invention further relates to a process for making a polyolefin by contacting an olefin with the catalyst system according to the present invention. The procatalyst, the cocatalyst, the external donor and the olefin can be contacted in any way known to the skilled person in the art; and as also described herein.

For instance, the external donor in the catalyst system according to the present invention can be complexed with the co-catalyst and mixed with the procatalyst (pre-mix) prior to contact between the procatalyst and the olefin. The external donor can also be added independently to the polymerization reactor. The procatalyst, the cocatalyst, and the external donor can be mixed or otherwise combined prior to the addition to the polymerization reactor.

Contacting the olefin with the catalyst system according to the present invention can be done under standard polymerization conditions, known to the skilled person in the art. See for example Pasquini, N. (ed.) "Polypropylene handbook" 2nd edition, Carl Hanser Verlag Munich, 2005. Chapter 6.2 and references cited therein.

The polymerization process may be a gas phase, a slurry or a bulk polymerization process, operating in one or more than one reactor. One or more olefin monomers can be introduced in a polymerization reactor to react with the procatalyst and to form an olefin-based polymer (or a fluidized bed of polymer particles).

In the case of polymerization in a slurry (liquid phase), a dispersing agent is present. Suitable dispersing agents include for example propane, n-butane, isobutane, n-pentane, isopentane, hexane (e.g. iso- or n-), heptane (e.g. iso- or n-), octane, cyclohexane, benzene, toluene, xylene, liquid propylene and/or mixtures thereof. The polymerization such as for example the polymerization temperature and time, monomer pressure, avoidance of contamination of catalyst, choice of polymerization medium in slurry processes, the use of further ingredients (like hydrogen) to control polymer molar mass, and other conditions are well known to persons of skill in the art. The polymerization temperature may vary within wide limits and is, for example for propylene polymerization, from 0 °C to 120 °C, preferably from 40 °C to 100 °C. The pressure during (propylene) (co)polymerization is for instance from 0.1 to 6 MPa, preferably from 1 to 4 MPa.

Several types of polyolefins are prepared such as homopolyolefins, random copolymers and heterophasic polyolefin. For latter, especially heterophasic polypropylene, the following is observed.

Heterophasic propylene copolymers are generally prepared in one or more reactors, by polymerization of propylene and optionally one or more other olefins, for example ethylene, in the presence of a catalyst and subsequent polymerization of a propylene- α-olefin mixture. The resulting polymeric materials can show multiple phases (depending on monomer ratio), but the specific morphology usually depends on the preparation method and monomer ratio. The heterophasic propylene copolymers employed in the process according to present invention can be produced using any conventional technique known to the skilled person, for example multistage process polymerization, such as bulk polymerization, gas phase polymerization, slurry polymerization, solution polymerization or any combinations thereof. Any conventional catalyst systems, for example, Ziegler-Natta or metallocene may be used. Such techniques and catalysts are described, for example, in WO06/010414; Polypropylene and other Polyolefins, by Ser van der Ven, Studies in Polymer Science 7, Elsevier 1990; WO06/010414, US4399054 and US4472524.

The molar mass of the polyolefin obtained during the polymerization can be controlled by adding hydrogen or any other agent known to be suitable for the purpose during the polymerization. The polymerization can be carried out in a continuous mode or batch-wise. Slurry-, bulk-, and gas-phase polymerization processes, multistage processes of each of these types of polymerization processes, or combinations of the different types of polymerization processes in a multistage process are contemplated herein. Preferably, the polymerization process is a single stage gas phase process or a multistage, for instance a two-stage gas phase process, e.g. wherein in each stage a gas-phase process is used or including a separate (small) prepolymerization reactor.

Examples of gas-phase polymerization processes include both stirred bed reactors and fluidized bed reactor systems; such processes are well known in the art. Typical gas phase olefin polymerization reactor systems typically comprise a reactor vessel to which an olefin monomer(s) and a catalyst system can be added and which contain an agitated bed of growing polymer particles. Preferably the polymerization process is a single stage gas phase process or a multistage, for instance a 2-stage, gas phase process wherein in each stage a gas-phase process is used.

As used herein, "gas phase polymerization" is the way of an ascending fluidizing medium, the fluidizing medium containing one or more monomers, in the presence of a catalyst through a fluidized bed of polymer particles maintained in a fluidized state by the fluidizing medium optionally assisted by mechanical agitation. Examples of gas phase polymerization are fluid bed, horizontal stirred bed and vertical stirred bed.
"fluid-bed," "fluidized," or "fluidizing" is a gas-solid contacting process in which a bed of finely divided polymer particles is elevated and agitated by a rising stream of gas optionally assisted by mechanical stirring. In a "stirred bed" upwards gas velocity is lower than the fluidization threshold.

A typical gas-phase polymerization reactor (or gas phase reactor) include a vessel *(i.e.,* the reactor), the fluidized bed, a product discharge system and may include a mechanical stirrer, a distribution plate, inlet and outlet piping, a compressor, a cycle gas cooler or heat exchanger. The vessel may include a reaction zone and may include a velocity reduction zone, which is located above the reaction zone (viz. bed). The fluidizing medium may include propylene gas and at least one other gas such as an olefin and/or a carrier gas such as hydrogen or nitrogen. The contacting can occur by way of feeding the procatalyst into the polymerization reactor and introducing the olefin into the polymerization reactor. In an embodiment, the process includes contacting the olefin with a co-catalyst. The co-catalyst can be mixed with the procatalyst (pre-mix) prior to the introduction of the procatalyst into the polymerization reactor. The co-catalyst may be also added to the polymerization reactor independently of the procatalyst. The independent introduction of the co-catalyst into the polymerization reactor can occur (substantially) simultaneously with the procatalyst feed. An external donor may also be present during the polymerization process.

The olefin according to the invention may be selected from mono- and di-olefins containing from 2 to 40 carbon atoms. Suitable olefin monomers include alpha-olefins, such as ethylene, propylene, alpha-olefins having from 4 to 20 carbonatoms (viz. C4-20), such as 1-butene, 1-pentene, 1-hexene, 4-methyl-1-pentene, 1-heptene, 1-octene, 1-decene, 1-dodecene and the like; C4-C20 diolefins, such as 1,3-butadiene, 1,3-pentadiene, norbornadiene, 5-vinyl-2-norbornene (VNB), 1,4-hexadiene, 5-ethylidene-2-norbornene (ENB) and dicyclopentadiene; vinyl aromatic compounds having from 8 to 40 carbon atoms (viz. C8-C40) including styrene, o-, m- and p-methylstyrene, divinylbenzene, vinylbiphenyl, vinylnapthalene; and halogen-substituted C8-C40 vinyl aromatic compounds such as chlorostyrene and fluorostyrene.

Preferably, the olefin is propylene or a mixture of propylene and ethylene, to result in a propylene-based polymer, such as propylene homopolymer or propylene-olefin copolymer. The olefin may an alpha-olefin having up to 10 carbon atoms, such as ethylene, butane, hexane, heptane, octene.

A propylene copolymer is herein meant to include both so-called random copolymers which typically have relatively low comonomer content, e.g. up to 10 mol%, as well as so-called impact **PP** copolymers or heterophasic **PP** copolymers comprising higher comonomer contents, e.g. from 5 to 80 mol%, more typically from 10 to 60 mol%. The impact **PP** copolymers are actually blends of different propylene polymers; such copolymers can be made in one or two reactors and can be blends of a first component of low comonomer content and high crystallinity, and a second component of high comonomer content having low crystallinity or even rubbery properties. Such random and impact copolymers are well-known to the skilled in the art. A propylene-ethylene random copolymer may be produced in one reactor. Impact **PP** copolymers may be produced in two reactors: polypropylene homopolymer may be produced in a first reactor; the content of the first reactor is subsequently transferred to a second reactor into which ethylene (and optionally propylene) is introduced. This results in production of a propylene-ethylene copolymer *(i.e.* an impact copolymer) in the second reactor.

The present invention also relates to a polyolefin, preferably a polypropylene obtained or obtainable by a process, comprising contacting an olefin, preferably propylene or a mixture of propylene and ethylene with the procatalyst according to the present invention. The terms polypropylene and propylene-based polymer are used herein interchangeable. The polypropylene may be a propylene homopolymer or a mixture of propylene and ethylene, such as a propylene-based copolymer, e.g. heterophasic propylene-olefin copolymer; random propylene-olefin copolymer, preferably the olefin in the propylene-based copolymers being a C2, or C4-C6 olefin, such as ethylene, butylene, pentene or hexene. Such propylene-based (co)polymers are known to the skilled person in the art; they are also described herein above.

The present invention also relates to a polyolefin, preferably a propylene-based polymer obtained or obtainable by a process as described herein above, comprising contacting propylene or a mixture of propylene and ethylene with a catalyst system according to the present invention.

**In** one embodiment the present invention relates to the production of a homopolymer of polypropylene. For such a polymer, properties such as isotacticity and stiffness and emission may be important.

In one embodiment according to the present invention a (random) copolymer of propylene and ethylene monomers is obtained. For such a polymer, properties such as XS and reduced haze increase after time may be important.

In one embodiment according to the present invention a heterophasic polypropylene having a matrix phase or either homopolymer of polypropylene or a random copolymer of propylene and ethylene and a dispersed phase of ethylene propylene rubber. This is called "impact polypropylene". For such a polymer, properties such as stiffness and impact may be important.

The content of the comonomer used in addition to propylene (e.g. ethylene or C4-C6-olefin) may vary from 0 to 8 wt.% based on the total weight of the polymer, preferably from 1 to 4 wt.%.

C2 content is expressed as weight percentage (wt.%) of ethylene incorporated into the total polymer weight obtained and measured with FT-IR. The FT-IR method was calibrated using NMR data.

Several polymer properties are discussed here.

The polyolefin, preferably the polypropylene according to the present invention has a molecular weight distribution higher than 2, preferably higher than 4, more preferably higher than 4.5 and for instance below 12, below 10 or below 9 or even below 6. The molecular weight distribution of the polyolefins, preferably polypropylene according to the present invention is for instance from 3 to 9.

Xylene soluble fraction (XS) is preferably from about 0.5 wt% to about 10 wt%, or from about 1 wt% to about 8 wt%, or from 1 to 6 wt%, or from about 1 wt% to about 5 wt%. Preferably, the xylene amount (XS) is lower than 6 wt%, more preferably lower than 5 wt%, most preferably lower than 4 wt%.

The production rate is preferably from about 1 kg/g/hr to about 100 kg/g/hr, or from about 10 kg/g/hr to about 80 kg/g/hr.

MFR is preferably from about 0.01 g/10 min to about 2000 g/10 min, or from about 0.01 g/10 min to about 1000 g/10 min; or from about 0.1 g/10 min to about 500 g/10 min, or from about 0.5 g/10 min to about 200 g/10 min.

The olefin polymer obtained in the present invention is considered to be a thermoplastic polymer. The thermoplastic polymer composition according to the invention may also contain one or more of usual additives, like those mentioned above, including stabilisers, e.g. heat stabilisers, antioxidants, UV stabilizers; colorants, like pigments and dyes; clarifiers; surface tension modifiers; lubricants; flame-retardants; mould-release agents; flow improving agents; plasticizers; anti-static agents; impact modifiers; blowing agents; fillers and reinforcing agents; and/or components that enhance interfacial bonding between polymer and filler, such as a maleated polypropylene, in case the thermoplastic polymer is a polypropylene composition. The skilled person can readily select any suitable combination of additives and additive amounts without undue experimentation.

The amount of additives depends on their type and function; typically is of from 0 to about 30wt%; preferably of from 0 to about 20 wt%; more preferably of from 0 to about 10 wt% and most preferably of from 0 to about 5 wt% based on the total composition. The sum of all components added in a process to form the polyolefins, preferably the propylene-base polymers or compositions thereof should add up to 100 wt%.

The thermoplastic polymer composition of the invention may be obtained by mixing one or more of the thermoplastic polymers with one or more additives by using any suitable means. Preferably, the thermoplastic polymer composition of the invention is made in a form that allows easy processing into a shaped article in a subsequent step, like in pellet or granular form. The composition can be a mixture of different particles or pellets; like a blend of a thermoplastic polymer and a master batch of nucleating agent composition, or a blend of pellets of a thermoplastic polymer comprising one of the two nucleating agents and a particulate comprising the other nucleating agent, possibly pellets of a thermoplastic polymer comprising said other nucleating agent. Preferably, the thermoplastic polymer composition of the invention is in pellet or granular form as obtained by mixing all components in an apparatus like an extruder; the advantage being a composition with homogeneous and well-defined concentrations of the nucleating agents (and other components).

The invention also relates to the use of the polyolefins, preferably the propylene-based polymers (also called polypropylenes) according to the invention in injection moulding, blow moulding, extrusion moulding, compression moulding, casting, thin-walled injection moulding, etc. for example in food contact applications.

Furthermore, the invention relates to a shaped article comprising the polyolefin, preferably the propylene-based polymer according to the present invention.

The polyolefin, preferably the propylene-based polymer according to the present invention may be transformed into shaped (semi)-finished articles using a variety of processing techniques. Examples of suitable processing techniques include injection moulding, injection compression moulding, thin wall injection moulding, extrusion, and extrusion compression moulding. Injection moulding is widely used to produce articles such as for example caps and closures, batteries, pails, containers, automotive exterior parts like bumpers, automotive interior parts like instrument panels, or automotive parts under the bonnet. Extrusion is for example widely used to produce articles, such as rods, sheets, films and pipes. Thin wall injection moulding may for example be used to make thin wall packaging applications both for food and non-food segments. This includes pails and containers and yellow fats/margarine tubs and dairy cups.

It is noted that the invention relates to all possible combinations of features recited in the claims. Features described in the description may further be combined.

Although the invention has been described in detail for purposes of illustration, it is understood that such detail is solely for that purpose and variations can be made therein by those skilled in the art without departing from the spirit and scope of the invention as defined in the claims.

It is further noted that the invention relates to all possible combinations of features described herein, preferred in particular are those combinations of features that are present in the claims.

It is further noted that the term 'comprising' does not exclude the presence of other elements. However, it is also to be understood that a description on a product comprising certain components also discloses a product consisting of these components. Similarly, it is also to be understood that a description on a process comprising certain steps also discloses a process comprising of these steps.

The invention will be further elucidated with the following examples without being limited hereto.

### Examples

### Step A. Preparation of the solution of Grignard reagent

### Example 1

This stage of synthesis was carried out as described in EP 1 222 214 B1, but with the higher concentrations of magnesium and butyl chloride. A stirred flask of 1500 ml volume, fitted with a reflux condenser and a funnel, was filled with magnesium powder (35.5 g, 1.46 mole). The flask was brought under nitrogen.
(i) The magnesium was heated at 80 °C for 1 hour, after which mixture of 150 ml of dibutyl ether (DBE) and 4 ml of n-chlorobutane was added. The temperature was raised to 75 °C and iodine (0.03 g) was added to the reaction mixture. After the color of the iodine had disappeared, the temperature was raised to 80 °C and a mixture of 148 ml of n-chlorobutane and 750 ml of dibutyl ether was slowly added for 3 hours at a Mole ratio of Mg/BuCl=1. The concentration of magnesium and BuCl, calculated with respect to dibutyl ether, was 1.62 mol/l. The temperature of reaction mixture during dosing of n-chlorobutane and dibutyl ether was kept in interval 78-80 °C.
(ii) + (iii) The reaction mixture was stirred for another 1 hour at 80 °C following which the temperature was raised to 110 °C for 1 hour.
(iv) The reaction mixture was kept at this temperature for 2 hours. Stirring and heating were stopped and the solid material was allowed to settle for 24 hours.
(v) By decanting the solution above the precipitate, the transparent solution of butylmagnesiumchloride in dibutyl ether (product A) with a concentration of 1.33 mol/l was obtained.

The yield of BuMgCl calculated as molar ratio BuMgCl/BuCl ×100 is 90%. This solution was stable at storage during 3 month at room temperature. Re-analysis of this solution after 3 months of storage showed a solution concentration equal to 1.33 mol/l (+/- 0.025 mol/l). Data on preparation on BuMgCl solution and obtained results on concentration, yield and stability of solution are presented in Table 1.

### Comparative Example 1

Preparation of the solution of BuMgCl was carried out as described in EP 1 222 214 B1.

A stirred flask of 1500 ml volume, fitted with a reflux condenser and a funnel, was filled with magnesium powder (24.3 g). The flask was brought under nitrogen. The magnesium was heated at 80 °C for 1 hour, after which mixture of dibutyl ether (100 ml) and n-chlorobutane (4 ml) was added. The temperature was raised to 75 °C and iodine (0.03 g) was added to the reaction mixture. After the color of the iodine had disappeared, the temperature was raised to 78 °C and a mixture of n-chlorobutane (100 ml) and dibutyl ether (796 ml) was slowly added for 3 hours. The temperature of reaction mixture was 78-80 °C. The concentration of magnesium and BuCl, calculated with respect to dibutyl ether, was 1.11 mol/l. The reaction mixture was stirred for another 3 hours at 78-80 °C. Then the stirring and heating were stopped and the small amount of solid material was allowed to settle for 24 hours. By decanting the transparent and stable solution with a concentration of 1.0 mol/l was obtained. After 3 months of storage at room temperature, the solution was found stable. Re-analysis of this solution after 3 months of storage showed a solution concentration equal to 1.0 mol/l.

### Comparative Example 2

Preparation of the solution of BuMgCl was carried out as described in Comparative Example 1, except that higher concentrations of magnesium and butyl chloride were used as in Example 1 and after dosing stage reaction mixture was stirred for another 3 hour at 80 °C. After precipitation for 24 hours, a cloudy solution with a concentration of 1.3 mol/l was obtained. The solution was found to be unstable. Upon further storage, a gradual clarification of the solution occurred, accompanied by the precipitation of a fine sediment at the bottom and on the walls of the vessel. After 3 months of storage at room temperature, the concentration of the solution decreased to 1.18 mol/l. Data on preparation on BuMgCl solution and obtained results on concentration, yield and stability of solution are presented in Table 1.

### Example 2

Preparation of the solution of BuMgCl was carried out as described in Example 1, except that 45.6 g of magnesium powder (1.88 mole) and 196 ml of BuCl (1.88 mole) were used. The concentration of magnesium and BuCl, calculated with respect to dibutyl ether, was 2.09 mol/l. As a result, a transparent and stable solution of BuMgCl with concentration 1.54 mol/l was prepared. After 3 months of storage at room temperature, the concentration of the solution doesn't change. Data on preparation on BuMgCl solution and obtained results on concentration, yield and stability of solution are presented in Table 1.

### Comparative Example 3

Preparation of the solution of BuMgCl was carried out as described in Example 1, except that 45.6 g of magnesium powder (1.88 mole) and 196 ml of BuCl (1.88 mole) were used and after dosing stage the reaction mixture was kept for 1 hour at 80 °C followed by an increase in temperature to 100 °C (instead of 110 °C) for 1 hour and reaction mixture was kept at 100 °C for 2 hours. As a result, slightly cloudy solution of BuMgCl with a concentration of 1.58 mol/l was prepared. After a week of storage at room temperature, the concentration of the solution decreased to 1.42 mol/l. After 3 months of storage the concentration of the solution decreased to 1.30 mol/l. Data on preparation on BuMgCl solution and obtained results on concentration, yield and stability of solution are presented in Table 1.

### Example 4

For preparation of the solution of BuMgCl the solution prepared in Example 3 with a concentration 1.58 mol/l was used. The reaction mixture from Example 3 after 24 hours of settling and analysis of solution was again stirred and half of the suspension was taken into another reactor and subjected to additional heat treatment at a temperature of 110 °C for 5 hours. As a result, after settling for 24 hours, a transparent and stable solution with a concentration of 1.54 was obtained. Re-analysis of this solution after 3 months of storage showed a solution concentration equal to 1.53 mol/l.

### Comparative Example 5

Preparation of the solution of BuMgCl was carried out as described in Example 2 (45.6 g of magnesium powder (1.88 mole) and 196 ml of BuCl (1.88 mole) were used), except dosing stage was carried out at 90 °C. After the color of the iodine had disappeared, the temperature was raised to 90 °C and a mixture of n-chlorobutane and dibutyl ether was slowly added for 3 hours (192 ml of BuCl and 750 ml of DBE). The reaction mixture was stirred for another 2 hours at 90 °C, and then the temperature was raised to 110 °C for 0.5 hour and the reaction mixture was kept at this temperature for 2 hours. As a result, a transparent and stable solution of BuMgCl with concentration 1.42 mol/l was prepared. After 3 months of storage at room temperature, the concentration of the solution didn't change.

### Comparative Example 3a

Preparation of the solution of BuMgCl was carried out as described in Example 5, except dosing stage was carried out at 100 °C instead of 90 °C. After that the temperature was raised to 110 °C for 0.5 hour and a reaction mixture was stirred for another 2 hour at 110 °C. As a result a transparent and stable solution of BuMgCl with concentration much lower than in Example 5 was prepared i.e. 0.84 mol/l. After 3 months of storage at room temperature, the concentration of the solution didn't change.

### Example 6

Preparation of the solution of BuMgCl was carried out as described in Example 1, except that 59.3 g of magnesium powder (2.44 mole) and 254 ml of BuCl (2.44 mole) were used. The concentration of magnesium and BuCl, calculated with respect to dibutyl ether was 2.71 mol/l. As a result, a transparent and a stable solution of BuMgCl with concentration 1.90 mol/l was prepared. After 1 week of storage at room temperature, the concentration of the solution the concentration of the solution decreased to 1.86 mol/l. At further storage for 3 months, the concentration of the solution slightly decreased to 1.84 mol/l.

### Comparative Example 4

Preparation of the solution of BuMgCl was carried out as described in Example 1, except that 70 g of magnesium powder (2.88 mole) and 299 ml of BuCl (2.88 mole) were used. The concentration of magnesium and BuCl, calculated with respect to dibutyl ether was 3.2 mol/l. As a result, a cloudy solution of BuMgCl with concentration 2.3 mol/l was prepared. The amount of the precipitate in this synthesis was significantly higher than in previous syntheses. When storing the solution for 1 month, a noticeable amount of sediment was observed both on the glass walls of the vessel and at the bottom. The concentration of the solution decreased to 2.1 mol/l. After further storage for 2 months, the concentration of the solution decreased to 1.92 mol/l.

### Example 7

Preparation of the solution of BuMgCl was carried out in pilot scale in a 16 l stainless steel reactor.
(i) The reactor was charged with 486 g of magnesium powder (20 mole Mg). The reactor was purged with argon at a temperature of 85 °C for 2 hours, after which mixture of dibutyl ether (1.4 l) and BuCl (80 ml) was added. The temperature was raised to 75 °C and iodine (0.7 g) was added to the reaction mixture. After the color of the iodine had disappeared, the temperature was raised to 80 °C and a mixture of n-chlorobutane (2 l) and dibutyl ether (8 l) was slowly added for 3 hours. Mole ratio of Mg/BuCl was 1 and the concentration of magnesium and BuCl, calculated with respect to dibutyl ether, was 2.13 mol/l. The temperature of reaction mixture during dosing was kept in interval 78-80 °C.
(ii) The reaction mixture was stirred for another 1.5 hour at 80 °C.
(iii) + (iv) After that the temperature was raised to 110 °C for 0.5 hour and reaction mixture was kept at this temperature for 3 hours. Then the stirring and heating were stopped and a small amount of solid material was allowed to settle for 24 hours.
(v) By decanting the solution above the precipitate, the transparent solution of MgBuCl in dibutyl ether (product A) with a concentration of 1.60 mol/l was obtained.

Yield of BuMgCl calculated as molar ratio BuMgCl/BuCl ×100 is 92%. This solution was stable at storage during 3 month at room temperature. Re-analysis of this solution after 3 months of storage showed a solution concentration equal to 1.6 mol/l (+/- 0.025 mol/l).

### Comparative Example 5a

Preparation of the solution of BuMgCl was carried out as described in Example 2, except that after dosing stage the reaction mixture was kept for 1 hour at 80 °C and after that temperature was raised to 130 °C (instead of 110 °C). As a result, a solution of BuMgCl with concentration 1.24 mol/l was prepared. The amount of precipitate in this synthesis was higher than in Example 2 and yield of BuMgCl was significantly lower. At further storage for 3 months, the concentration of the solution didn't change.

### Example 8

Preparation of the solution of BuMgCl was carried out as described in Example 6, except that 65.6 g of magnesium powder (2.7 mole) and 280 ml of BuCl (2.7 mole) were used and the reaction mixture was kept at a higher temperature. The concentration of magnesium and BuCl, calculated with respect to dibutyl ether, was 3.0 mol/l. The temperature of reaction mixture during dosing was kept in interval 78-80 °C. The reaction mixture was stirred for another 1 hour at 80°C. After that the temperature was raised to 110 °C for 2 hours and reaction mixture was kept at this temperature for 4 hours. As a result, a transparent and metastable solution of BuMgCl with concentration 2.08 mol/l was prepared. After 3 months of storage at room temperature, the concentration of the solution decreased to 1.97 mol/l, and after 6 months of storage at room temperature, the concentration of the solution slowly decreased to 1.92 mol/l. After further storage, the concentration of the solution didn't change.

### Example 9

Preparation of the solution of BuMgCl was carried out as described in Example 8, except that the temperature was raised to 120 °C for 2 hours and the reaction mixture was kept at this temperature for 2.5 hours. As a result, a transparent and metastable solution of BuMgCl with concentration 2.05 mol/l was prepared. After 3 and 6 months of storage at room temperature, the concentration of the solution decreased to 1.95 and 1.87 mol/l correspondingly. After further storage, the concentration of the solution didn't change. The yield of BuMgCl in this experiment was lower than in Example 8.

### Example 10

Preparation of the solution of BuMgCl was carried out as described in Example 8, except that the amount of Mg and BuCl was reduced i.e. 60.1 g of magnesium powder (2.475 mole) and 257 ml of BuCl (2.475 mole) were used. The concentration of magnesium and BuCl, calculated with respect to dibutyl ether, was 2.75 mol/l. As a result, a transparent and a stable solution of BuMgCl with concentration 1.91 mol/l was prepared. At storage at room temperature during 3 and 6 months, the concentration of the solution didn't change.

### Examples 11-20 and Comparative Examples 6-8

The preparation of supports and catalysts in these examples was carried out according to the same procedure described in EP 1661917A using the BuMgCl solutions prepared in Examples 1-10 and Comparative Examples 1, 2 and 4. The BuMgCl solution from Comparative Examples 3 and 5 was not used to prepare the catalyst as these experiments had a low BuMgCl yield.

### Step B. Preparation of the support:

Preparation of the solid product B was carried out similarly to the procedure described in EP 1 222 214 B1 with increased loads of reagents and except that on the dozing stage the temperature was 35 °C and the dozing time was 6 hour. 350 ml of dibutyl ether (DBE) was introduced to a 1700 ml reactor. The reactor was equipped with a paddle stirrer and baffles and was thermostated at 35 °C. 540 ml of solution of product A obtained in step A and 270 ml of solution of tetraethoxysilane (TES) in DBE (270 ml of solution, mole ratio was Si/Mg=0.75 in all examples, except that in example15, mole ratio of Si/Mg was 0.5 instead of 0.75) were cooled to 5 °C, and then were dosed simultaneously into the reactor through a mixing device with volume 0.45 ml supplied with a jacket. Dosing was continued for 6 hours. Mixing device (minimixer) was cooled to 5 °C by means of cold water circulating in the device jacket. The contact time of reagents (product A and TES) was 18.7 s in the minimixer and the connecting tube between the minimixer and the reactor. The stirring speed in the reactor was 260 rpm at the beginning of dosing and was gradually increased up to 360 rpm at the end of dosing stage. After completion of the dosing the reaction mixture was heated up to 60 °C during 30 min and kept at this temperature for 1 hour. Then the stirring was stopped and the solid product was allowed to settle. The supernatant was removed by decanting. The solid substance was washed three times at 60 °C using 800 ml of heptane. As a result the solid product B was obtained, suspended in heptane. Then, exactly half of the support suspension was loaded onto a filter, washed with isopentane, and dried in an argon flow at 50 °C. Thus, the amount of the support obtained in the synthesis was determined. The average amount of the support in the syntheses was 110 g +/- 3 g of per 1 mol of the used BuMgCl. The data on the yield of the support in the syntheses are shown in Table 2. For premixing a reagent during product B preparation, we used a minimixer equipped a stirrer and jacket as presented in Example I of EP 1 222 214 B1. Volume of minimixer was 3.0 ml, volume of line between minimixer and reactor was 0.6 ml, premixing time was approximately 9.3 s.

### Step C. Activation of the support

Support activation of product B was carried out with ethanol and titanium tetraethoxide (TET) according to procedure described in Ex.4 of EP 1661917A1 with increased loads of reagents. The 0.5 l glass flask equipped with a mechanical agitator was filled with a slurry of 5 g of product B dispersed in 100 ml of heptane in inert nitrogen atmosphere at 0 °C. Subsequently a solution of 0.96 ml ethanol in 20 ml of heptane was added at 0 °C for 1 hour, resulting in a ratio ethanol/Mg = 0.4. The reaction mixture was kept at 0 °C for 30 min. Then the temperature was increased to 20 °C and a solution of 0.944 g titanium tetraethoxide (TET/Mg=0.1) in 20 ml of heptane was added for 1 hour. After that the slurry was heated to 30 °C in 30 min and kept at that temperature for another 3 hours. Finally the supernatant liquid was decanted from the solid reaction product, which was washed once with 150 ml of heptane at 30 °C. As a result about 6 g of product C (activated support) was obtained.

### Step D. Preparation of the procatalyst

A glass reactor with volume 0.3 l was brought under nitrogen and 125 ml of titanium tetrachloride was added into reactor. The suspension, containing approximately 6 g of the solid product C in 15 ml of heptane, was added into reactor under stirring. Then the reaction mixture was heated up to 100°C during 1 hour and after that 1.6 ml of dibutyl phthalate was added into reactor (DBP/Mg = 0.15). Then the reaction mixture was heated up to 115 °C and kept at 115 °C for 105 min. Then the stirring was stopped and the solid product was allowed to settle. The supernatant was removed by decanting, after which the solid product was washed with chlorobenzene (125 ml) at 100 ⁰C for 20 min. Then the washing solution was removed by decanting, after which a mixture of titanium tetrachloride (62.5 ml) and chlorobenzene (62.5 ml) was added. The reaction mixture was kept at 115 ⁰C for 30 min, after which the solid product was allowed to settle, and the last treatment was repeated once again. The solid product obtained was washed five times using 150 ml of heptane at 60 ⁰C and a solid procatalyst, suspended in heptane, was obtained.

### Step E. Polymerization of propylene

Polymerization of propylene was carried out in a stainless steel reactor (with a volume of 0.7 l) in heptane (300 ml) at a temperature of 70 °C, a total pressure of 0.7 MPa and in hydrogen presence (55 ml) for 1 hour in the presence of a procatalyst system comprising the procatalyst component obtained according to step C, triethylaluminium and cyclohexylmethyldimethoxysilane (C-donor). The concentration of the procatalyst component was 0.033 g/l; the concentration of triethylaluminium was 4.0 mmol/l and the concentration of C-donor was 0.2 mmol/l.

Data on the procatalyst performance at the propylene polymerization are presented in Table 2.

### Abbreviations and measuring methods:

- Yield of BuMgCl (%): Yield of BuMgCl was calculated as the molar ratio of the amount of MgBuCl obtained to the amount of the initial BuCl present.
- Yield of support (g): Yield of support (Ysupp., g) was determined by the below mentioned procedure:
   After the synthesis was completed, the total volume of the support sediment was determined (Vsupp.). A certain volume of the support suspension (Vsampl., usually 30-50% of the total sediment volume) was taken into a pre-weighted measuring container. After settling, the free liquid phase was decanted and the support was dried in vacuum at room temperature to a constant weight (Psampl.). The yield of the support was determined by the ratio: Ysupp. = Psampl / Vsampl. * Vsupp.. Usually, from 1 mole of BuMgCl solution, 110 +/- 3 g of support is obtained.
- The stability of the BuMgCl solution was evaluated as qualitatively (visually, by the formation of sediment during storage of the solution for 1, 3 and 6 months) so is the quantitative change in the concentration of the BuMgCl solution during this time. Quantitative analysis was carried out by taking a sample of the BuMgCl solution, decomposition the sample with 5% sulfuric acid solution and analysis of an aqueous solution by the ICP method.
- PP yield, (kg/g cat) is an amount of polypropylene obtained per gram of catalyst component.
   "bulk density" (BD): the mass of particles of the polymer divided by the total volume these particles occupy. It is measured according to ASTM D 1895.
   "span value" represents an indicator for the width of the particle size distribution as measured according to ISO 13320:2009. The span value is calculated according to the formula:$Span Value = \left(d 90 - d 10\right) / d 50$

In which d90 is equal to x90 as defined in ISO 13320:2009, d10 is equal to x10 as defined in ISO 13320:2009, and d50 is equal to x50 as defined in ISO 13320:2009.

Average Particle Size (APS): Average particle size of catalyst is measured using a test method based on ASTM standard test method D4464-201

**Table 1**

| Ex. No. | Concentr ation of Mg, (mole/L) ¹ | Time/temperature during synthesis | | | Initial Concentrat ion of BuMgCl sol., (mole/L) | Concentrati on of BuMgCl sol. used for the synthesis of the support after 3 months of storage (mole/L) | Yield of BuMg Cl, % | Stabili ty of BuMg Cl solutio n² |
|---|---|---|---|---|---|---|---|---|
| | | Dosing Stage | Holding Stage | | | | | |
| | | Time and Temperat ure (No. of hours / at °C) | Time and Tempera ture (No. of hours / at °C) | Increased Holding Stage temperature - Time and Temperature (No. of hours / at °C) | | | | |
| 1 | 1.62 | 3/80 | 1/80 | 2/110 | 1.33 | 1.33 | 90 | Stable |
| Comp Ex.1 | 1.11 | 3/80 | 3/80 | - | 1.0 | 1.0 | 91 | Stable |
| Comp Ex.2 | 1.62 | 3/80 | 3/80 | - | 1.3 | 1.18 | 80 | Unstab le |
| 2 | 2.09 | 3/80 | 1/80 | 2/110 | 1.54 | 1.54 | 90 | Stable |
| Comp 3 | 2.09 | 3/80 | 1/80 | 2/100 | 1.58 | 1.3 | 88 | Unstab le |
| 4 | Reaction mixture obtained from Ex.3 + Additional Heat treatment | - | 5/110 | - | 1.54 | 1.54 | 86 | Stable |
| Comp 5 | 2.09 | 3/90 | 2/90 | 2/110 | 1.42 | 1.42 | 80 | Stable |
| Comp Ex.3a | 2.09 | 3/100 | 3/110 | - | 0.84 | 0.84 | 47 | Stable |
| 6 | 2.71 | 3/80 | 1/80 | 2/110 | 1.90 | 1.86 | 86 | Metastable |
| Comp Ex.4 | 3.2 | 3/80 | 1/80 | 2/110 | 2.3 | 1.92 | 75 | Unstable |
| 7 | 2.13 | 3/80 | 1.5/80 | 3/110 | 1.6 | 1.6 | 91 | Stable |
| Comp Ex.5a | 2.09 | 3/80 | 1/80 | 2/130 | 1.24 | 1.24 | 71 | Stable |
| 8 | 3.0 | 3/80 | 1/80 | 4/110 | 2.08 | 1.92 | 80 | Metastable |
| 9 | 3.0 | 3/80 | 1/80 | 2.5/120 | 2.05 | 1.87 | 78 | Metastable |
| 10 | 2.75 | 3/80 | 1/80 | 4/110 | 1.91 | 1.91 | 90 | Stable |

| | | | | | | | | |
|---|---|---|---|---|---|---|---|---|
| ¹Concentrations of magnesium and BuCl were calculated with respect to dibutyl ether. ² Stability of BuMgCl solution was assessed qualitatively from the formation of a precipitate during storage of the solution for 3 months, and by the quantitative change in the concentration of the BuMgCl solution during this time. | | | | | | | | |

**Table 2**

| Ex. No. | BuMgCl used Ex. No. (In Tabl.1) | Yield [BuMgCl] mole/L | APS, of support³, g/l | Ti, µm | wt. % | PP yield, kg/g cat | BD of PP, g/l | SPAN PP | Fines in PP powder⁴, wt. % |
|---|---|---|---|---|---|---|---|---|---|
| 11 | 1 | 1.33 | 79 | 17.6 | 2.2 | 14.9 | 503 | 0.7 | 0.05 |
| Comp. Ex.6 | Comp. Ex.1 | 1.0 | 59 | 15.9 | 2.0 | 12.8 | 512 | 0.7 | 0.06 |
| Comp. Ex.7 | Comp. Ex.2 | 1.18 | 70 | 18.3 | 2.1 | 13.6 | 500 | 1.2 | 7.8 |
| 12 | 2 | 1.54 | 91 | 19.5 | 2.3 | 15.8 | 485 | 0.6 | 0.08 |
| 13 | Comp 3 | 1.42 | 84 | 22.8 | 2.2 | 16.1 | 473 | 0.9 | 0.20 |
| 14 | 4 | 1.54 | 91 | 19.0 | 2.0 | 14.3 | 489 | 0.7 | 0.10 |
| 15 | Comp.5 | 1.42 | 84 | 20.8 | 2.3 | 13.2 | 469 | 0.9 | 0.24 |
| 16 | 6 | 1.86 | 110 | 16.7 | 2.0 | 17.4 | 475 | 1.0 | 1.1 |
| Comp. Ex.8 | Comp. Ex.4 | 1.92 | 114 | 18.5 | 2.2 | 16.8 | 485 | 1.7 | 8.6 |
| 17 | 7 | 1.6 | 95 | 23.0 | 2.1 | 16.7 | 485 | 0.55 | 0.02 |
| 18 | 8 | 1.92 | 114 | 19.0 | 1.8 | 14.1 | 495 | 0.54 | 0.03 |
| 19 | 9 | 1.87 | 111 | 19.9 | 2.0 | 15.7 | 490 | 0.65 | 0.02 |
| 20 | 10 | 1.91 | 113 | 21.3 | 2.0 | 16.2 | 490 | 0.56 | 0.02 |

| | | | | | | | | | |
|---|---|---|---|---|---|---|---|---|---|
| ³The amount of support obtained in synthesis (from 1 mole of BuMgCl solution, 110 +/- 3 g of support is obtained). ⁴Amount of fraction of PP powder with sizes less of 0.1 mm in wt. %. | | | | | | | | | |

Table 1 shows different conditions of preparing BuMgCl with respect to the time and temperature of Dosing stage and the Holding stage. Table 1 also indicates an improved stability, yield and concentration (when measured after 3 months of storage) of butyl magnesium chloride prepared according to the present invention.

Table 2 indicates that the BuMgCl solutions as obtained under Table 1, resulted into the higher yield of solid support and PP. In addition, the use of catalysts prepared using these stable BuMgCl solutions resulted into PP powder with good morphology such as high bulk density, narrower particle size distribution and lower fines content.

As evident from the above results, process performed at a higher temperature allowed the formation of higher BuMgCl concentration. In addition, the application of higher temperature or production of higher BuMgCl concentration resulted in the formation of complex that remains more stable during subsequent storage at normal conditions.

## Claims

1. A process for the preparation of a procatalyst for preparing a catalyst composition for an olefin polymerization comprising the following steps:
a. providing a magnesium-based support prepared from a solution of R⁴_{z}MgX⁴_{2-z},
wherein R⁴ is independently selected from linear, branched or cyclic hydrocarbyl group independently selected from alkyl, alkenyl, aryl, aralkyl, or alkylaryl groups, and one or more combinations thereof, wherein said hydrocarbyl group may be substituted or unsubstituted, may contain one or more heteroatoms and preferably has from 1 to 20 carbon atoms, preferably R⁴ is butyl;
X⁴ is independently selected from the group comprising of fluoride (F-), chloride (Cl-), bromide (Br-) or iodide (I-), preferably chloride; and z is in a range of larger than 0 and smaller than 2, being 0 < z < 2;
b. optionally activating the magnesium-based support using an activator;
c. contacting the magnesium-based support with a Ziegler-Natta type catalytic species, and one or more internal donors;
wherein the solution of R⁴_{z}MgX⁴_{2-z} is prepared by a process comprising the steps of:
(i) reacting a magnesium powder with an organic halide in the presence of an organic solvent at a temperature of T1;
(ii) stirring the reaction mixture obtained in step (i) for at least 1 hour at T1;
(iii) raising the temperature of the reaction mixture obtained in step (ii) to a temperature T2;
(iv) stirring the reaction mixture obtained in step (iii) for at least 1 hour at T2;
(v) decanting or filtering the reaction mixture obtained in step (iv) to obtain a transparent solution of R⁴_{z}MgX⁴_{2-z} in the organic solvent;
Wherein T1 ranges from 70°C - 90°C, T2 ranges from T1+30°C to T1+40°C.

2. The process according to claim 1, wherein the concentration of magnesium and R⁴X⁴, with respect to the organic solvent is from 1 to 4 mol/l, preferable from 1 to 3.5 mol/l, more preferable from 1 to 3 mol/l.

3. The process according to any one of claims 1-2, wherein the organic solvent is selected from a group comprising of diethyl ether, diisopropyl ether, dibutyl ether, diisobutyl ether, diisoamyl ether, diallyl ether, tetrahydrofuran, anisole and dioctyl ether or a combination thereof, preferably the organic solvent is dibutyl ether; and
wherein the organic halide is R⁴X⁴;
wherein R⁴ is independently selected from linear, branched or cyclic hydrocarbyl group independently selected from alkyl, alkenyl, aryl, aralkyl, or alkylaryl groups, and one or more combinations thereof; wherein said hydrocarbyl group may be substituted or unsubstituted, may contain one or more heteroatoms and preferably has from 1 to 20 carbon atoms, and;
X⁴ is independently selected from the group comprising of fluoride (F-), chloride (Cl-), bromide (Br-) or iodide (I-); preferably the organic halide is selected from butyl chloride, butyl bromide and 1,2-dibromoethane or a combination thereof.

4. The process according to any one of claims 1-3, wherein the activator is selected from a group comprising of benzamide, alkylbenzoates, monoesters or any combinations thereof, preferably the activator is benzamide, alkylbenzoates or a combination thereof.

5. The process according to any one of claims 1-4, wherein the process comprising the following steps:
A) providing the procatalyst obtained via a process comprising the steps of:
i) contacting the magnesium based support with an alkoxy- or aryloxy-containing silane compound to give a first intermediate reaction product, being a solid Mg(OR⁵)ₓX¹₂₋ₓ, wherein: R⁵ is a linear, branched or cyclic hydrocarbyl group independently selected from alkyl, alkenyl, aryl, aralkyl, alkoxycarbonyl or alkylaryl groups, and one or more combinations thereof; wherein the hydrocarbyl group may be substituted or unsubstituted, may contain one or more heteroatoms and preferably has from 1 to 20 carbon atoms; wherein R⁴ is a linear, branched or cyclic hydrocarbyl group independently selected from alkyl, alkenyl, aryl, aralkyl, alkoxycarbonyl or alkylaryl groups, and one or more combinations thereof; wherein the hydrocarbyl group may be substituted or unsubstituted, may contain one or more heteroatoms and preferably has from 1 to 20 carbon atoms, preferably R⁴ is butyl; wherein X² and X¹ are each independently selected from the group comprising of fluoride (F-), chloride (Cl-), bromide (Br-) or iodide (I-), preferably chloride; z is in a range of larger than 0 and smaller than 2, being 0 < z < 2;
ii) optionally contacting the solid Mg(OR⁵)ₓX¹₂₋ₓ obtained in step i) with at least one activating compound selected from the group formed by activating electron donors and metal alkoxide compounds of formula M¹(OR⁶)_{v-w}(OR⁷)_{w} or M²(OR⁶)_{v-w}(R⁷)_{w}, to obtain a second intermediate product; wherein: M¹ is a metal selected from the group comprising of Ti, Zr, Hf, Al or Si; v is the valency of M¹; M² is a metal being Si; v is the valency of M²; R⁶ and R⁷ are each a linear, branched or cyclic hydrocarbyl group independently selected from alkyl, alkenyl, aryl, aralkyl, alkoxycarbonyl or alkylaryl groups, and one or more combinations thereof; wherein the hydrocarbyl group may be substituted or unsubstituted, may contain one or more heteroatoms, and preferably has from 1 to 20 carbon atoms; wherein w is smaller than v, preferably v being 3 or 4;
iii) contacting the first or the second intermediate reaction product, obtained respectively in step i) or ii), with a halogen-containing Ti-compound and the internal donor.

6. The process according to any one of claims 1-5, wherein the internal donor is selected from the group comprising of aminobenzoates, succinates, silyl esters, silyl diol esters, diethers, phthalates or any combinations thereof.

7. The process according to any one of claims 1-6, wherein the preferable internal donor is an aminobenzoate as represented by the Formula (I) or a diether as represented by the Formula (II) or a combination thereof. 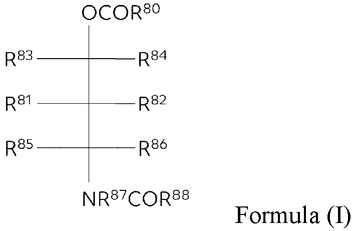 wherein:
R⁸⁰ is independently selected from a substituted or unsubstituted aryl, aralkyl, or alkylaryl groups, and one or more combinations thereof and
R⁸¹, R⁸², R⁸³, R⁸⁴, R⁸⁵, and R⁸⁶ are each independently selected from a hydrogen or a linear, branched or cyclic hydrocarbyl group, selected from alkyl, alkenyl, aryl, aralkyl, or alkylaryl groups, and one or more combinations thereof, preferably having from 1 to 20 carbon atoms; ;
wherein R⁸⁷ is selected from a group comprising of hydrogen, methyl, ethyl, propyl, isopropyl, butyl, tert-butyl, phenyl, benzyl, substituted benzyl and halophenyl group; and
wherein R⁸⁸ is selected from the group comprising of hydrogen or a linear, branched or cyclic hydrocarbyl group, selected from alkyl, alkenyl, aryl, aralkyl, alkoxycarbonyl or alkylaryl groups, and one or more combinations thereof, preferably having from 1 to 20 carbon atoms, and more preferably R⁸⁸ is phenyl; 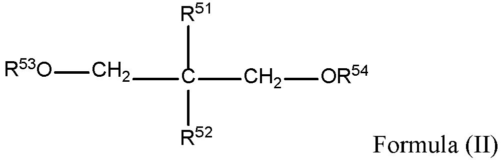
wherein R⁵¹ and R⁵² are each independently selected from a hydrogen or a hydrocarbyl group selected from alkyl, alkenyl, aryl, aralkyl, alkoxycarbonyl or alkylaryl groups, and one or more combinations thereof.
R⁵³ and R⁵⁴ are each independently selected from hydrogen, a halide or a hydrocarbyl group, selected from alkyl, alkenyl, aryl, aralkyl, alkoxycarbonyl or alkylaryl groups, and one or more combinations thereof.

8. The process according to any one of claims 1-7, wherein the internal donor is selected from a group comprising of 1,3-dimethoxypropane, 1,3-diethoxypropane, 1,3-dibutoxypropane, 1-methoxy-3-ethoxypropane, 1-methoxy-3-butoxypropane, 1-methoxy-3-cyclohexoxypropane, 2,2-dimethyl-1,3-dimethoxypropane, 2,2-diethyl-1,3-dimethoxypropane, 2,2-di-n-butyl-1,3-dimethoxypropane, 2,2-diiso-butyl-1,3-dimethoxypropane, 2-ethyl-2-n-butyl-1,3-dimethoxypropane, 2-n-propyl-2-cyclopentyl-1,3-dimethoxypropane, 2,2-dimethyl-1,3-diethoxypropane, 2-n-propyl-2-cyclohexyl-1,3-diethoxypropane, 2-(2-ethylhexyl)-1,3-dimethoxypropane, 2-isopropyl-1,3-dimethoxypropane, 2-n-butyl-1,3 -dimethoxypropane, 2-sec-butyl-1,3-dimethoxypropane, 2-cyclohexyl-1,3-dimethoxypropane, 2-phenyl-1,3-diethoxypropane, 2-cumyl-1,3-diethoxypropane, 2-(2-phenyllethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2-(1-naphthyl)-1,3-dimethoxypropane, 2-(fluorophenyl)-1,3-dimethoxypropane, 2-(1-decahydronaphthyl)-1,3-dimethoxypropane, 2-(p-t-butylphenyl)-1,3-dimethoxypropane, 2,2-dicyclohexyl-1,3-dimethoxypropane, 2,2-di-npropyl-1,3-dimethoxypropane, 2-methyl-2-n-propyl-1,3-dimethoxypropane, 2-methyl-2-benzyl-1,3-dimethoxypropane, 2-methyl-2-ethyl-1,3-dimethoxypropane, 2-methyl-2-phenyl-1,3-dimethoxypropane, 2-methyl-2-cyclohexyl-1,3-dimethoxypropane, 2,2-bis(pchlorophenyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3 -dimethoxy propane, 2-methyl-2-isopropyl-1,3-dimethoxypropane, 2,2-diphenyl-1,3-dimethoxypropane, 2,2-dibenzyl-1,3-dimethoxypropane, 2,2-bis(cyclohexylmethyl)-1,3-dimethoxypropane, 2,2-diisobutyl-1,3-diethoxypropane, 2,2-diisobuty 1-1,3 -di -n-butoxypropane, 2-isobutyl-2-isopropyl-1,3-dimethoxypropane, 2,2-di-sec-butyl-1,3-dimethoxypropane, 2,2-di-t-butyl-1,3-dimethoxypropane, 2,2-dineopentyl-1,3-dimethoxypropane, 2-isopropyl-2-isopentyl-1,3-dimethoxypropane, 2-phenyl-2-benzyl-1,3-dimethoxypropane, 2-cyclohexyl-2-cyclohexylmethyl-1,3-dimethoxypropane, 2-isopropyl-2-(3,7-dimethyloctyl) 1,3-dimethoxypropane, 2,2-diisopropyl-1,3-dimethoxypropane, 2-isopropyl-2-cyclohexylmethyl-1,3-dimethoxypropane, 2,2-diisopentyl-1,3-dimethoxypropane, 2-isopropyl-2-cyclohexyl-1,3-dimethoxypropane, 2-isopropyl-2-cyclopentyl-1,3-dimethoxypropane, 2,2-dicylopentyl-1,3-dimethoxypropane, 2-n-heptyl-2-n-pentyl-1,3-dimethoxypropane, 9,9-bis(methoxymethyl)fluorene, 1,3-dicyclohexyl-2,2-bis(methoxymethyl)propane, 3,3-bis(methoxymethyl)-2,5-dimethylhexane, 4-[benzoyl(methyl)amino]pentan-2-yl benzoate; 2,2,6,6-tetramethyl-5-(methylamino)heptan-3-ol dibenzoate; 4-[benzoyl (ethyl)amino]pentan-2-yl benzoate, 4-(methylamino)pentan-2-yl bis (4-methoxy)benzoate), 3-[benzoyl(cyclohexyl)amino]-1-phenylbutyl benzoate, 3-[benzoyl(propan-2-yl)amino]-1-phenylbutyl benzoate, 4-[benzoyl(methyl)amino]-1,1,1-trifluoropentan-2-yl benzoate, 3-(methylamino)-1,3-diphenylpropan-1-ol dibenzoate, 3-(methyl)amino-propan-1-ol dibenzoate; 3-(methyl)amino-2,2-dimethylpropan-1-ol dibenzoate, and 4-(methylamino)pentan-2-yl bis (4-methoxy)benzoate) or any combinations thereof.

9. The process according to any of claims 1-8, wherein the process is essentially phthalate free.

10. The process according to any of claims 1-9, wherein the concentration of the transparent solution of R⁴_{z}MgX⁴_{2-z} in the organic solvent obtained is upto 3 mol/l, or from 1 to 2.5 mol/l, or from 1 to 2 mol/l.

## Patentansprüche

1. Prozess zur Herstellung eines Prokatalysators zum Herstellen einer Katalysatorzusammensetzung für eine Olefinpolymerisation, der die folgenden Schritte umfasst:
a) Bereitstellen eines magnesiumbasierten Trägers, hergestellt aus einer Lösung von R⁴_{z}MgX⁴_{2-z}, wobei R⁴ unabhängig aus einer linearen, verzweigten oder cyclischen Kohlenwasserstoffgruppe ausgewählt ist, die unabhängig aus Alkyl-, Alkenyl-, Aryl-, Aralkyl- oder Alkylarylgruppen und einer oder mehreren Kombinationen davon ausgewählt ist; wobei die Kohlenwasserstoffgruppe substituiert oder unsubstituiert sein kann, ein oder mehrere Heteroatome enthalten kann und vorzugsweise 1 bis 20 Kohlenstoffatome aufweist, wobei R⁴ vorzugsweise Butyl ist;
X⁴ unabhängig aus der Gruppe ausgewählt ist, die Fluorid (F-), Chlorid (Cl-), Bromid (Br-) oder Iodid (I-) umfasst, vorzugsweise Chlorid; und z in einem Bereich größer als 0 und kleiner als 2 liegt, wobei 0 < z < 2;
b) optional Aktivieren des magnesiumbasierten Trägers unter Verwendung eines Aktivators;
c) Kontaktieren des magnesiumbasierten Trägers mit einer katalytischen Spezies vom Ziegler-Natta-Typ und einem oder mehreren internen Donatoren;
wobei die Lösung von R⁴_{z}MgX⁴_{2-z} durch einen Prozess hergestellt wird, der folgende Schritte umfasst:
- Umsetzen eines Magnesiumpulvers mit einem organischen Halogenid in der Gegenwart eines organischen Lösungsmittels bei einer Temperatur von T1;
- Rühren des in Schritt (i) erhaltenen Reaktionsgemisches für mindestens 1 Stunde bei T1;
- Erhöhen der Temperatur des in Schritt (ii) erhaltenen Reaktionsgemisches auf eine Temperatur T2;
- Rühren des in Schritt (iii) erhaltenen Reaktionsgemisches für mindestens 1 Stunde bei T2;
- Dekantieren oder Filtrieren des in Schritt (iv) erhaltenen Reaktionsgemisches, um eine transparente Lösung von R⁴_{z}MgX⁴_{2-z} im organischen Lösungsmittel zu erhalten;
wobei T1 von 70 °C bis 90 °C beträgt, T2 von T1+30°C bis T1+40°C beträgt.

2. Prozess nach Anspruch 1, wobei die Konzentration von Magnesium und R⁴X⁴in Bezug auf das organische Lösungsmittel 1 bis 4 mol/l, vorzugsweise 1 bis 3,5 mol/I, bevorzugter 1 bis 3 mol/l beträgt.

3. Prozess nach einem der Ansprüche 1-2, wobei das organische Lösungsmittel aus einer Gruppe ausgewählt ist, die Diethylether, Diisopropylether, Dibutylether, Diisobutylether, Diisoamylether, Diallylether, Tetrahydrofuran, Anisol und Dioctylether oder eine Kombination davon umfasst, wobei das organische Lösungsmittel vorzugsweise Dibutylether ist; und
wobei das organische Halogenid R⁴X⁴ ist;
wobei R⁴ unabhängig aus einer linearen, verzweigten oder cyclischen Kohlenwasserstoffgruppe ausgewählt ist, die unabhängig aus Alkyl-, Alkenyl-, Aryl-, Aralkyl- oder Alkylarylgruppen und einer oder mehreren Kombinationen davon ausgewählt ist; wobei die Kohlenwasserstoffgruppe substituiert oder unsubstituiert sein kann, ein oder mehrere Heteroatome enthalten kann und vorzugsweise 1 bis 20 Kohlenstoffatome aufweist, und;
X⁴ unabhängig aus der Gruppe ausgewählt ist, die Fluorid (F-), Chlorid (Cl-), Bromid (Br-) oder Iodid (I-) umfasst; wobei das organische Halogenid vorzugsweise aus Butylchlorid, Butylbromid und 1,2-Dibromethan oder einer Kombination davon ausgewählt ist.

4. Prozess nach einem der Ansprüche 1-3, wobei der Aktivator aus einer Gruppe ausgewählt ist, die Benzamid, Alkylbenzoate, Monoester oder beliebigen Kombinationen davon umfasst, wobei der Aktivator vorzugsweise Benzamid, Alkylbenzoat oder eine Kombination davon ist.

5. Prozess nach einem der Ansprüche 1-4, wobei der Prozess die folgenden Schritte umfasst:
a) Bereitstellen des Prokatalysators, der durch einen Prozess erhalten wird, der die folgenden Schritte umfasst:
- Kontaktieren des magnesiumbasierten Trägers mit einer Alkoxy- oder Aryloxy-haltigen Silanverbindung, um ein erstes Zwischenprodukt zu erhalten, das ein festes Mg(OR⁵)ₓX¹₂₋ₓ ist, wobei: R⁵ eine lineare, verzweigte oder cyclische Kohlenwasserstoffgruppe ist, die unabhängig aus Alkyl-, Alkenyl-, Aryl-, Aralkyl-, Alkoxycarbonyl- oder Alkylarylgruppen und einer oder mehreren Kombinationen davon ausgewählt ist; wobei die Kohlenwasserstoffgruppe substituiert oder unsubstituiert sein kann, ein oder mehrere Heteroatome enthalten kann und vorzugsweise 1 bis 20 Kohlenstoffatome aufweist; wobei R⁴ eine lineare, verzweigte oder cyclische Kohlenwasserstoffgruppe ist, die unabhängig aus Alkyl-, Alkenyl-, Aryl-, Aralkyl-, Alkoxycarbonyl- oder Alkylarylgruppen und einer oder mehreren Kombinationen davon ausgewählt ist; wobei die Kohlenwasserstoffgruppe substituiert oder unsubstituiert sein kann, ein oder mehrere Heteroatome enthalten kann und vorzugsweise 1 bis 20 Kohlenstoffatome aufweist, vorzugsweise R⁴ Butyl ist; wobei X² und X¹ jeweils unabhängig voneinander aus der Gruppe ausgewählt sind, die Fluorid (F-), Chlorid (Cl-), Bromid (Br-) oder Iodid (I-) umfasst, vorzugsweise Chlorid; wobei z in einem Bereich größer als 0 und kleiner als 2 liegt, wobei 0 < z < 2;
- optionales Kontaktieren des in Schritt i) erhaltenen festen Mg(OR⁵)ₓX¹₂₋ₓ mit mindestens einer aktivierenden Verbindung, die aus der Gruppe ausgewählt ist, die durch Aktivieren von Elektronendonatoren und Metallalkoxidverbindungen der Formel M¹(OR⁶)_{v-w}(OR⁷)_{w} oder M²(OR⁶)_{v-w}(R⁷)_{w} gebildet wird, um ein zweites Zwischenprodukt zu erhalten; wobei: M¹ ein Metall ist, das aus der Gruppe ausgewählt ist, die Ti, Zr, Hf, Al oder Si umfasst; v die Wertigkeit von M¹ ist ; M² ein Metall ist, nämlich Si; v die Wertigkeit von M² ist; R⁶ und R⁷ jeweils lineare, verzweigte oder cyclische Kohlenwasserstoffgruppen sind, die unabhängig voneinander aus Alkyl-, Alkenyl-, Aryl-, Aralkyl-, Alkoxycarbonyl- oder Alkylarylgruppen und einer oder mehreren Kombinationen davon ausgewählt sind; wobei die Kohlenwasserstoffgruppe substituiert oder unsubstituiert sein kann, ein oder mehrere Heteroatome enthalten kann und vorzugsweise 1 bis 20 Kohlenstoffatome aufweist; wobei w kleiner als v ist, wobei v vorzugsweise 3 oder 4 beträgt;
- Kontaktieren des ersten oder zweiten Zwischenreaktionsprodukts, das in Schritt i) bzw. ii) erhalten wurde, mit einer halogenhaltigen Ti-Verbindung und dem internen Donator.

6. Prozess nach einem der Ansprüche 1-5, wobei der interne Donator aus der Gruppe ausgewählt ist, die Aminobenzoate, Succinate, Silylester, Silyldiolester, Diether, Phthalate oder beliebige Kombinationen davon umfasst.

7. Prozess nach einem der Ansprüche 1-6, wobei der bevorzugte interne Donator ein durch die Formel (I) dargestelltes Aminobenzoat oder ein durch die Formel (II) dargestellter Diether oder eine Kombination davon ist; 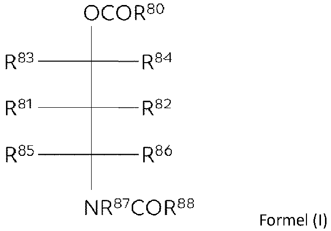 wobei:
R⁸⁰ unabhängig aus einer substituierten oder unsubstituierten Aryl-, Aralkyl- oder Alkylarylgruppe und einer oder mehreren Kombinationen davon ausgewählt ist, und
R⁸¹, R⁸², R⁸³, R⁸⁴, R⁸⁵ und R⁸⁶ jeweils unabhängig voneinander aus einem Wasserstoff oder einer linearen, verzweigten oder cyclischen Kohlenwasserstoffgruppe, ausgewählt aus Alkyl-, Alkenyl-, Aryl-, Aralkyl- oder Alkylarylgruppen und einer oder mehreren Kombinationen davon, ausgewählt sind, wobei sie vorzugsweise 1 bis 20 Kohlenstoffatome aufweisen;
wobei R⁸⁷ aus einer Gruppe ausgewählt ist, die Wasserstoff, Methyl, Ethyl, Propyl, Isopropyl, Butyl, tert-Butyl, Phenyl, Benzyl, substituierte Benzyl- und Halogenphenylgruppen umfasst; und
wobei R⁸⁸ aus der Gruppe ausgewählt ist, die Wasserstoff oder eine lineare, verzweigte oder cyclische Kohlenwasserstoffgruppe, ausgewählt aus Alkyl-, Alkenyl-, Aryl-, Aralkyl-, Alkoxycarbonyl- oder Alkylarylgruppen, und eine oder mehrere Kombinationen davon umfasst, vorzugsweise 1 bis 20 Kohlenstoffatome aufweist und bevorzugter R⁸⁸ Phenyl ist; 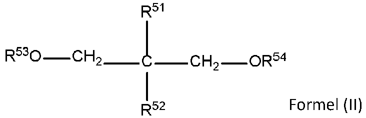
wobei R⁵¹ und R⁵² jeweils unabhängig voneinander aus einem Wasserstoff oder einer Kohlenwasserstoffgruppe, ausgewählt aus Alkyl-, Alkenyl-, Aryl-, Aralkyl-, Alkoxycarbonyl- oder Alkylarylgruppen und einer oder mehreren Kombinationen davon, ausgewählt sind;
wobei R⁵³ und R⁵⁴ jeweils unabhängig voneinander aus Wasserstoff, einem Halogenid oder einer Kohlenwasserstoffgruppe, ausgewählt aus Alkyl-, Alkenyl-, Aryl-, Aralkyl-, Alkoxycarbonyl- oder Alkylarylgruppen und einer oder mehreren Kombinationen davon, ausgewählt sind;

8. Prozess nach einem der Ansprüche 1-7, wobei der interne Donator aus einer Gruppe ausgewählt ist, die 1,3-Dimethoxypropan, 1,3-Diethoxypropan, 1,3-Dibutoxypropan, 1-Methoxy-3-ethoxypropan, 1-Methoxy-3-butoxypropan, 1-Methoxy-3-cyclohexoxypropan, 2,2-Dimethyl-1,3-dimethoxypropan, 2,2-Diethyl-1,3-dimethoxypropan, 2,2-Di-n-butyl-1,3-dimethoxypropan, 2,2-Diisobutyl-1,3-dimethoxypropan, 2-Ethyl-2-n-butyl-1,3-dimethoxypropan, 2-n-Propyl-2-cyclopentyl-1,3-dimethoxypropan, 2,2-Dimethyl-1,3-diethoxypropan, 2-n-Propyl-2-cyclohexyl-1,3-diethoxypropan, 2-(2-Ethylhexyl)-1,3-dimethoxypropan, 2-Isopropyl-1,3-dimethoxypropan, 2-n-Butyl-1,3-dimethoxypropan, 2-sec-Butyl-1,3-dimethoxypropan, 2-Cyclohexyl-1,3-dimethoxypropan, 2-Phenyl-1,3-diethoxypropan, 2-Cumyl-1,3-diethoxypropan, 2-(2-Phenylethyl)-1,3-dimethoxypropan, 2-(2-Cyclohexylethyl)-1,3-dimethoxypropan, 2-(p-Chlorphenyl)-1,3-dimethoxypropan, 2-(Diphenylmethyl)-1,3-dimethoxypropan, 2-(1-Naphthyl)-1,3-dimethoxypropan 2-(Fluorphenyl)-1,3-dimethoxypropan, 2-(1-Decahydronaphthyl)-1,3-dimethoxypropan, 2-(p-Butylphenyl)-1,3-dimethoxypropan, 2,2-Dicyclohexyl-1,3-dimethoxypropan, 2,2-Di-n-propyl-1,3-dimethoxypropan, 2-Methyl-2-n-propyl-1,3-dimethoxypropan, 2-Methyl-2-benzyl-1,3-dimethoxypropan, 2-Methyl-2-ethyl-1,3-dimethoxypropan, 2-Methyl-2-phenyl-1,3-dimethoxypropan, 2-Methyl-2-cyclohexyl-1,3-dimethoxypropan, 2,2-Bis(p-chlorphenyl)-1,3-dimethoxypropan 2,2-Bis(2-cyclohexylethyl)-1,3-dimethoxypropan, 2-Methyl-2-isobutyl-1,3-dimethoxypropan, 2-Methyl-2-(2-ethylhexyl)-1,3-dimethoxypropan, 2-Methyl-2-isopropyl-1,3-dimethoxypropan, 2,2-Diphenyl-1,3-dimethoxypropan, 2,2-Dibenzyl-1,3-dimethoxypropan, 2,2-Bis(cyclohexylmethyl)-1,3-dimethoxypropan, 2,2-Diisobutyl-1,3-diethoxypropan, 2,2-Diisobutyl-1,3-di-n-butoxypropan, 2-Isobutyl-2-isopropyl-1,3-dimethoxypropan, 2,2-Di-sec-butyl-1,3-dimethoxypropan 2,2-Di-tert-butyl-1,3-dimethoxypropan, 2,2-Dineopentyl-1,3-dimethoxypropan, 2-Isopropyl-2-isopentyl-1,3-dimethoxypropan, 2-Phenyl-2-benzyl-1,3-dimethoxypropan, 2-Cyclohexyl-2-cyclohexylmethyl-1,3-dimethoxypropan, 2-Isopropyl-2-(3,7-dimethyloctyl)-1,3-dimethoxypropan, 2,2-Diisopropyl-1,3-dimethoxypropan, 2-Isopropyl-2-cyclohexylmethyl-1,3-dimethoxypropan, 2,2-Diisopentyl-1,3-dimethoxypropan, 2-Isopropyl-2-cyclohexyl-1,3-dimethoxypropan, 2-Isopropyl-2-cyclopentyl-1,3-dimethoxypropan 2,2-Dicylopentyl-1,3-dimethoxypropan, 2-n-Heptyl-2-n-pentyl-1,3-dimethoxypropan, 9,9-Bis(methoxymethyl)fluoren, 1,3-Dicyclohexyl-2,2-bis(methoxymethyl)propan, 3,3-Bis(methoxymethyl)-2,5-dimethylhexan, 4-[Benzoyl(methyl)amino]pentan-2-yl-benzoat; 2,2,6,6-Tetramethyl-5-(methylamino)heptan-3-ol-dibenzoat; 4-[Benzoyl (ethyl)amino]pentan-2-yl-benzoat, 4-(Methylamino)pentan-2-yl bis(4-methoxy)benzoat), 3-[Benzoyl(cyclohexyl)amino]-1-phenylbutyl-benzoat, 3-[Benzoyl(propan-2-yl)amino]-1-phenylbutyl-benzoat, 4-[Benzoyl(methyl)amino]-1,1,1-trifluoropentan-2-yl-benzoat, 3-(Methylamino)-1,3-diphenylpropan-1-ol-dibenzoat, 3-(Methyl)amino-propan-1-ol-dibenzoat; 3-(Methyl)amino-2,2-dimethylpropan-1-ol-dibenzoat und 4-(Methylamino)pentan-2-yl-bis(4-methoxy)benzoat) oder beliebigen Kombinationen davon umfasst.

9. Prozess nach einem der Ansprüche 1-8, wobei der Prozess im Wesentlichen phthalatfrei ist.

10. Prozess nach einem der Ansprüche 1-9, wobei die Konzentration der transparenten Lösung von R⁴_{z}MgX⁴_{2-z} in dem erhaltenen organischen Lösungsmittel bis zu 3 mol/l, oder von 1 bis 2,5 mol/l, oder von 1 bis 2 mol/I beträgt.

## Revendications

1. Processus de préparation d'un procatalyseur pour la préparation d'une composition catalytique pour une polymérisation d'oléfines, comprenant les étapes suivantes :
a) fourniture d'un support à base de magnésium préparé à partir d'une solution de R⁴_{z}MgX⁴_{2-z}, dans lequel R⁴ est indépendamment sélectionné parmi les groupes hydrocarbyle linéaires, ramifiés ou cycliques, indépendamment sélectionnés parmi les groupes alkyle, alcényle, aryle, aralkyle ou alkylaryle, et une ou plusieurs combinaisons de ceux-ci ; dans lequel ledit groupe hydrocarbyle peut être substitué ou non substitué, peut contenir un ou plusieurs hétéroatomes et présente de préférence de 1 à 20 atomes de carbone, de préférence R⁴ est le butyle ;
^{X4} est sélectionné indépendamment parmi le groupe comprenant le fluorure (F-), le chlorure (CI-), le bromure (Br-) ou l'iodure (I-), de préférence le chlorure ; et z est dans une plage supérieure à 0 et inférieure à 2, soit 0 < z < 2 ;
b) facultativement activation du support à base de magnésium en utilisant un activateur ;
c) contact du support à base de magnésium avec une espèce catalytique de type Ziegler-Natta et un ou plusieurs donneurs internes ;
dans lequel la solution de R⁴_{z}MgX⁴_{2-z} est préparée par un processus comprenant les étapes de :
- réaction d'une poudre de magnésium avec un halogénure organique en présence d'un solvant organique à une température de T1 ;
- agitation du mélange réactionnel obtenu à l'étape (i) pendant au moins 1 heure à T1 ;
- élévation de la température du mélange réactionnel obtenu à l'étape (ii) à une température T2 ;
- agitation du mélange réactionnel obtenu à l'étape (iii) pendant au moins 1 heure à T2 ;
- décantation ou filtrage du mélange réactionnel obtenu à l'étape (iv) pour obtenir une solution transparente de R⁴_{z}MgX⁴_{2-z} dans le solvant organique ;
dans lequel T1 varie de 70 °C à 90 °C, T2 varie de T1+30 °C à T1+40 °C.

2. Processus selon la revendication 1, dans lequel la concentration de magnésium et de R⁴X⁴, par rapport au solvant organique, est de 1 à 4 mol/l, de préférence de 1 à 3,5 mol/l, plus préférentiellement de 1 à 3 mol/l.

3. Processus selon l'une quelconque des revendications 1-2, dans lequel le solvant organique est sélectionné parmi un groupe comprenant l'éther diéthylique, l'éther diisopropylique, l'éther dibutylique, l'éther diisobutylique, l'éther diisoamylique, l'éther diallylique, le tétrahydrofurane, l'anisole et l'éther dioctylique ou une combinaison de ceux-ci, de préférence le solvant organique est l'éther dibutylique ; et
dans lequel l'halogénure organique est R⁴X⁴ ;
dans lequel R⁴ est indépendamment sélectionné parmi les groupes hydrocarbyle linéaires, ramifiés ou cycliques, indépendamment sélectionnés parmi les groupes alkyle, alcényle, aryle, aralkyle ou alkylaryle, et une ou plusieurs combinaisons de ceux-ci ; dans lequel ledit groupe hydrocarbyle peut être substitué ou non substitué, peut contenir un ou plusieurs hétéroatomes et présente de préférence de 1 à 20 atomes de carbone, et ;
X⁴ est sélectionné indépendamment dans le groupe comprenant le fluorure (F-), le chlorure (CI-), le bromure (Br-) ou l'iodure (I-) ; de préférence l'halogénure organique est sélectionné parmi le chlorure de butyle, le bromure de butyle et le 1,2-dibromoéthane ou une combinaison de ceux-ci.

4. Processus selon l'une quelconque des revendications 1-3, dans lequel l'activateur est sélectionné parmi un groupe comprenant le benzamide, les alkylbenzoates, les monoesters ou une quelconque combinaison de ceux-ci, de préférence l'activateur est le benzamide, les alkylbenzoates ou une combinaison de ceux-ci.

5. Processus selon l'une quelconque des revendications 1-4, dans lequel le processus comprenant les étapes suivantes :
a) la fourniture du procatalyseur obtenu par l'intermédiaire d'un processus comprenant les étapes de :
- le contact du support à base de magnésium avec un composé silane contenant un groupe alcoxy ou aryloxy pour donner un premier produit de réaction intermédiaire, étant un solide Mg(OR⁵)ₓX¹₂₋ₓ, dans lequel : R⁵ est un groupe hydrocarbyle linéaire, ramifié ou cyclique sélectionné indépendamment parmi les groupes alkyle, alcényle, aryle, aralkyle, alcoxycarbonyle ou alkylaryle, et une ou plusieurs combinaisons de ceux-ci ; dans lequel le groupe hydrocarbyle peut être substitué ou non substitué, peut contenir un ou plusieurs hétéroatomes et présente de préférence de 1 à 20 atomes de carbone ; dans lequel R⁴ est un groupe hydrocarbyle linéaire, ramifié ou cyclique sélectionné indépendamment parmi les groupes alkyle, alcényle, aryle, aralkyle, alcoxycarbonyle ou alkylaryle, et une ou plusieurs combinaisons de ceux-ci ; dans lequel le groupe hydrocarbyle peut être substitué ou non substitué, peut contenir un ou plusieurs hétéroatomes et présente de préférence de 1 à 20 atomes de carbone,R⁴ étant de préférence un groupe butyle ; dans lequel X² et X¹ sont chacun indépendamment sélectionnés parmi le fluorure (F-), le chlorure (CI-), le bromure (Br-) ou l'iodure (I-), de préférence le chlorure ; z est dans une plage supérieure à 0 et inférieure à 2, soit 0 < z < 2 ;
- facultativement le contact du solide Mg(OR⁵)ₓX¹₂₋ₓ obtenu à l'étape i) avec au moins un composé activateur sélectionné parmi ceux formés par activation de donneurs d'électrons et de composés alcoxydes métalliques de formule M¹(OR⁶)_{v-w}(OR⁷)_{w} ou M²(OR⁶)_{v-w}(R⁷)_{w}, pour obtenir un second produit intermédiaire ; dans lequel : M¹ est un métal sélectionné parmi Ti, Zr, Hf, Al ou Si ; v est la valence de M¹; M² est un métal étant Si ; v est la valence de M² ; R⁶ et R⁷ sont chacun un groupe hydrocarbyle linéaire, ramifié ou cyclique, sélectionné indépendamment parmi les groupes alkyle, alcényle, aryle, aralkyle, alcoxycarbonyle ou alkylaryle, et une ou plusieurs combinaisons de ceux-ci ; dans lequel le groupe hydrocarbyle peut être substitué ou non substitué, peut contenir un ou plusieurs hétéroatomes, et présente de préférence de 1 à 20 atomes de carbone ; dans lequel w est inférieur à v, v étant de préférence 3 ou 4 ;
- le contact du premier ou du second produit de réaction intermédiaire, obtenu respectivement à l'étape i) ou ii), avec un composé Ti contenant un halogène et le donneur interne.

6. Processus selon l'une quelconque des revendications 1-5, dans lequel le donneur interne est sélectionné parmi le groupe comprenant les aminobenzoates, les succinates, les esters silylés, les esters silylés de diol, les diéthers, les phtalates ou une quelconque combinaison de ceux-ci.

7. Processus selon l'une quelconque des revendications 1-6, dans lequel le donneur interne préférentiel est un aminobenzoate tel que représenté par la formule (I) ou un diéther tel que représenté par la formule (II) ou une combinaison de ceux-ci. 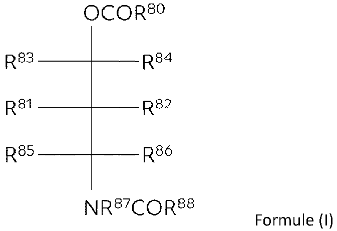 dans lequel :
R⁸⁰ est sélectionné indépendamment parmi les groupes aryle, aralkyle ou alkylaryle substitués ou non substitués, et une ou plusieurs combinaisons de ceux-ci et
R⁸¹, R⁸², R⁸³, R⁸⁴, R⁸⁵, et R⁸⁶ sont chacun indépendamment sélectionnés parmi un hydrogène ou un groupe hydrocarbyle linéaire, ramifié ou cyclique, sélectionné parmi les groupes alkyle, alcényle, aryle, aralkyle ou alkylaryle, et une ou plusieurs combinaisons de ceux-ci, présentant de préférence de 1 à 20 atomes de carbone ;
dans lequel R⁸⁷ est sélectionné parmi un groupe comprenant les groupes hydrogène, méthyle, éthyle, propyle, isopropyle, butyle, tert-butyle, phényle, benzyle, benzyle substitué et halophényle ; et
dans lequel R⁸⁸ est sélectionné parmi le groupe comprenant l'hydrogène ou un groupe hydrocarbyle linéaire, ramifié ou cyclique, sélectionné parmi les groupes alkyle, alcényle, aryle, aralkyle, alcoxycarbonyle ou alkylaryle, et une ou plusieurs combinaisons de ceux-ci, présentant de préférence de 1 à 20 atomes de carbone, et plus préférentiellement R⁸⁸ est le phényle ; 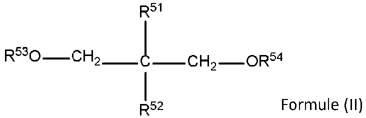
dans lequel R⁵¹ et R⁵² sont chacun indépendamment sélectionnés parmi un hydrogène ou un groupe hydrocarbyle sélectionné parmi les groupes alkyle, alcényle, aryle, aralkyle, alcoxycarbonyle ou alkylaryle, et une ou plusieurs combinaisons de ceux-ci,
R⁵³ et R⁵⁴ sont chacun indépendamment sélectionnés parmi l'hydrogène, un halogénure ou un groupe hydrocarbyle, sélectionnés parmi les groupes alkyle, alcényle, aryle, aralkyle, alcoxycarbonyle ou alkylaryle, et une ou plusieurs combinaisons de ceux-ci.

8. Processus selon l'une quelconque des revendications 1-7, dans lequel le donneur interne est sélectionné parmi un groupe comprenant 1,3-dimethoxypropane, 1,3-diethoxypropane, 1,3-dibutoxypropane, 1-methoxy-3-ethoxypropane, 1-methoxy-3-butoxypropane, 1-methoxy-3-cyclohexoxypropane, 2,2-dimethyl-1,3-dimethoxypropane, 2,2-diethyl-1,3-dimethoxypropane, 2,2-di-n-butyl-1,3-dimethoxypropane, 2,2-diisobutyl-1,3-dimethoxypropane, 2-ethyl-2-n-butyl-1,3-dimethoxypropane, 2-n-propyl-2-cyclopentyl-1,3-dimethoxypropane, 2,2-dimethyl-1,3-diethoxypropane, 2-n-propyl-2-cyclohexyl-1,3-diethoxypropane, 2-(2-ethylhexyl)-1,3-dimethoxypropane, 2-isopropyl-1,3-dimethoxypropane, 2-n-butyl-1,3-dimethoxypropane, 2-sec-butyl-1,3-dimethoxypropane, 2-cyclohexyl-1,3-dimethoxypropane, 2-phenyl-1,3-diethoxypropane, 2-cumyl-1,3-diethoxypropane, 2-(2-phenyllethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2-(1-naphthyl)-1,3-dimethoxypropane, 2-(fluorophenyl)-1,3-dimethoxypropane, 2-(1-decahydronaphthyl)-1,3-dimethoxypropane, 2-(p-t-butylphenyl)-1,3-dimethoxypropane, 2,2-dicyclohexyl-1,3-dimethoxypropane, 2,2-di-npropyl-1,3-dimethoxypropane, 2-methyl-2-n-propyl-1,3-dimethoxypropane, 2-methyl-2-benzyl-1,3-dimethoxypropane, 2-methyl-2-ethyl-1,3-dimethoxypropane, 2-methyl-2-phenyl-1,3-dimethoxypropane, 2-methyl-2-cyclohexyl-1,3-dimethoxypropane, 2,2-bis(pchlorophenyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2-methyl-2-isopropyl-1,3-dimethoxypropane, 2,2-diphenyl-1,3-dimethoxypropane, 2,2-dibenzyl-1,3-dimethoxypropane, 2,2-bis(cyclohexylmethyl)-1,3-dimethoxypropane, 2,2-diisobutyl-1,3-diethoxypropane, 2,2-diisobuty 1-1,3 -di -n-butoxypropane, 2-isobutyl-2-isopropyl-1,3-dimethoxypropane, 2,2-di-sec-butyl-1,3-dimethoxypropane, 2,2-di-t-butyl-1,3-dimethoxypropane, 2,2-dineopentyl-1,3-dimethoxypropane, 2-isopropyl-2-isopentyl-1,3-dimethoxypropane, 2-phenyl-2-benzyl-1,3-dimethoxypropane, 2-cyclohexyl-2-cyclohexylmethyl-1,3-dimethoxypropane, 2-isopropyl-2-(3,7-dimethyloctyl) 1,3-dimethoxypropane, 2,2-diisopropyl-1,3-dimethoxypropane, 2-isopropyl-2-cyclohexylmethyl-1,3-dimethoxypropane, 2,2-diisopentyl-1,3-dimethoxypropane, 2-isopropyl-2-cyclohexyl-1,3-dimethoxypropane, 2-isopropyl-2-cyclopentyl-1,3-dimethoxypropane, 2,2-dicylopentyl-1,3-dimethoxypropane, 2-n-heptyl-2-n-pentyl-1,3-dimethoxypropane, 9,9-bis(methoxymethyl)fluorene, 1,3-dicyclohexyl-2,2-bis(methoxymethyl)propane, 3,3-bis(methoxymethyl)-2,5-dimethylhexane, 4-[benzoyl(methyl)amino]pentan-2-yl benzoate ; 2,2,6,6-tetramethyl-5-(methylamino)heptan-3-ol dibenzoate ; 4-[benzoyl (ethyl)amino]pentan-2-yl benzoate, 4-(methylamino)pentan-2-yl bis (4-methoxy)benzoate), 3 - [benzoyl (cyclohexyl)amino]-1-phenylbutyl benzoate, 3-[benzoyl (propan-2-yl)amino]-1-phenylbutyl benzoate, 4-[benzoyl(methyl)amino]-1,1,1-trifluoropentan-2-yl benzoate, 3-(methylamino)-1,3-diphenylpropan-1-ol dibenzoate, 3-(methyl)amino-propan-1-ol dibenzoate ; 3-(methyl)amino-2,2-dimethylpropan-1-ol dibenzoate et 4-(methylamino)pentan-2-yl bis (4-methoxy)benzoate) ou une quelconque combinaison de ceux-ci.

9. Processus selon l'une quelconque des revendications 1-8, dans lequel le processus est essentiellement exempt de phtalates.

10. Processus selon l'une quelconque des revendications 1-9, dans lequel la concentration de la solution transparente de R⁴_{z}MgX⁴_{2-z} dans le solvant organique obtenu est de jusqu'à 3 mol/l, ou de 1 à 2,5 mol/l, ou de 1 à 2 mol/l.
